**Europäisches Patentamt**

(19) **European Patent Office**

**Office européen des brevets**

(11) **EP 1 120 726 A1**

(12) **EUROPEAN PATENT APPLICATION**
published in accordance with Art. 158(3) EPC

(43) Date of publication:
**01.08.2001 Bulletin 2001/31**

(51) Int Cl.7: **G06F 17/60**

(21) Application number: **00915430.3**

(86) International application number:
**PCT/JP00/02289**

(22) Date of filing: **07.04.2000**

(87) International publication number:
**WO 00/62216 (19.10.2000 Gazette 2000/42)**

(84) Designated Contracting States:
**DE FR GB**

(30) Priority: **12.04.1999 JP 10399399**

(71) Applicant: **Sony Corporation**
**Tokyo 141-0001 (JP)**

(72) Inventors:
• **ISHIBASHI, Yoshihito, Sony Corporation**
**Tokyo 141-0001 (JP)**

• **OHISHI, Tateo, Sony Corporation**
**Tokyo 141-0001 (JP)**
• **MUTO, Akihiro, Sony Corporation**
**Tokyo 141-0001 (JP)**

(74) Representative: **Pilch, Adam John Michael et al**
**D. YOUNG & CO.,**
**21 New Fetter Lane**
**London EC4A 1DA (GB)**

(54) **INFORMATION PROCESSING DEVICE AND METHOD, AND PROVIDING MEDIUM**

(57) The present invention makes it possible to provide services according to user information.

"User Conditions 10" of "Pricing Conditions 10" on PT A-1 indicates that the user is male. Thus, PT A-1 can be selected only by male users.

"User Conditions 20" of "Pricing Conditions 20" on PT A-2 indicates that the user is female. Thus, PT A-2 can be selected only by female users. When the prices on PT A-1 and the prices on PT A-2 are compared, the prices on PT A-2 are half as high as the prices on PT A-1. In short, female users can use content at half the price compared to male users.

A

| CONTENT ID | ID OF CONTENT A | |
|---|---|---|
| CONTENT PROVIDER ID | ID OF CONTENT PROVIDER 2-1 | |
| UCP ID | ID OF UCP A | |
| SERVICE PROVIDER ID | ID OF SERVICE PROVIDER 3-1 | |
| PT ID | ID OF PTA-1 | |
| PT VALIDITY PERIOD | VALIDITY PERIOD OF PTA-1 | |
| PRICING CONDITIONS 10 | USER CONDITIONS 10 | MALE |
| | EQUIPMENT CONDITIONS 10 | NO CONDITIONS |
| PRICE 11 | 2000YEN | |
| PRICE 12 | 600YEN | |
| PRICE 13 | 100YEN | |
| PRICE 14 | 300YEN | |

PTA-1

B

| CONTENT ID | ID OF CONTENT A | |
|---|---|---|
| CONTENT PROVIDER ID | ID OF CONTENT PROVIDER 2-1 | |
| UCP ID | ID OF UCP A | |
| SERVICE PROVIDER ID | ID OF SERVICE PROVIDER 3-1 | |
| PT ID | ID OF PTA-2 | |
| PT VALIDITY PERIOD | VALIDITY PERIOD OF PTA-2 | |
| PRICING CONDITIONS 20 | USER CONDITIONS 20 | FEMALE |
| | EQUIPMENT CONDITIONS 20 | NO CONDITIONS |
| PRICE 21 | 1000YEN | |
| PRICE 22 | 300YEN | |
| PRICE 23 | 50YEN | |
| PRICE 24 | 150YEN | |

PTA-2

FIG. 20

EP 1 120 726 A1

## Description

Technical Field

The present invention relates to an information processing apparatus, information processing method, and providing medium. More particularly, it relates to an information processing apparatus, information processing method, and providing medium that utilize encrypted information.

Background Art

There are systems that encrypt information (content) such as music and send it to the information processing apparatus of the users who have made a required agreement, so that the users can decrypt and use the content on their information processing apparatus.

However, in the conventional system, contents are provided according to personal information such as sex or age of the user, usage of content or type of information processing apparatus that the user owns, which prevented from providing a variety of services.

Disclosure of the Invention

The present invention has been made in view of the above circumstances, and makes it possible to provide a variety of services.

To solve these problems, the present invention provides an information processing apparatus which comprises holding means for holding encrypted first information; storage means for storing second information containing the usage conditions of the first information and usage details for the usage conditions by associating the second information with the first information; and sending means for sending the first information held by the holding means and the second information stored by the storage means.

Also, the present invention provides an information processing method which comprises a holding step of holding encrypted first information; a storage step of storing second information containing the usage conditions of the first information and usage details for the usage conditions by associating the second information with the first information; and a sending step of sending the first information held by the holding step and the second information stored by the storage step.

Furthermore, the present invention provides a providing medium that provides a computer-readable program for making an information processing apparatus execute a process, which comprises a holding step of holding encrypted first information; a storage step of storing second information containing the usage conditions of the first information and usage details for the usage conditions by associating the second information with the first information; and a sending step of sending the first information held by the holding step and the second information stored by the storage step.

Furthermore, the present invention provides an information apparatus, an information processing method and a providing medium, wherein encrypted first information is held; second information containing the usage conditions of the first information and usage details for the usage conditions is stored by being associated with the first information; and the held first information and the stored second information are sent to a given provider.

Furthermore, the present invention provides an information processing apparatus which comprises reception means for receiving encrypted first information and second information containing the usage conditions of the first information and usage details for the usage conditions, sent from a given provider; preparation means for preparing third information containing the pricing conditions for the first information and the price that corresponds to the pricing conditions according to the second information received by the reception means; and sending means for sending encrypted the first information and the second information received by the reception means as well as the third information prepared by the preparation means to appropriate equipment.

Furthermore, the present invention provides an information processing method which comprises a reception step of receiving encrypted first information and second information containing the usage conditions of the first information and usage details for the usage conditions, sent from a given provider; a preparation step of preparing third information containing the pricing conditions for the first information and the price that corresponds to the pricing conditions according to the second information received by the reception step; and a sending step of sending encrypted the first information and the second information received by the reception step as well as the third information prepared by the preparation step to appropriate equipment.

Furthermore, the present invention provides a providing medium that provides a computer-readable program for making an information processing apparatus execute a process, which comprises a reception step of receiving encrypted first information and second information containing the usage conditions of the first information and usage details for the usage conditions, sent from a given provider; a preparation step of preparing third information containing the pricing conditions for the first information and the price that corresponds to the pricing conditions according to the second information received by the reception step; and a sending step of sending encrypted the first information and the second information received by the reception step as well as the third information prepared by the preparation step to appropriate equipment.

Furthermore, the present invention provides an information . processing apparatus, information processing method and a providing medium, wherein encrypted first information and second information containing the usage conditions of the first information and usage details for the usage conditions, sent from a given provider are received; third information containing the pricing conditions for the first information and the price that corresponds to the pricing conditions is prepared according to the received second information; and the first information and the second information encrypted and received as well as the prepared third information are sent to appropriate equipment.

Furthermore, the present invention provides an information processing apparatus which comprises storage means for storing appropriate reference information; reception means for receiving encrypted first information, second information containing the usage conditions of the first information and usage details for the usage conditions, and third information containing the pricing conditions for the first information and the price that corresponds to the pricing conditions, sent from a given provider; usage condition selection means for selecting the usage conditions of the second information received by the reception means, corresponding to the reference information stored in the storage means; pricing condition selection means for selecting the pricing conditions of the third information received by the reception means, corresponding to the reference information stored in the storage means; usage means for decrypting and using encrypted the first information according to the usage details corresponding to the usage conditions selected by the usage condition selection means; and execution means for charging for the usage by the usage means according to the price that corresponds to the pricing conditions selected by the pricing condition selection means.

Furthermore, the present invention provides an information processing method which comprises a storage step of storing appropriate reference information; a reception step of receiving encrypted first information, second information containing the usage conditions of the first information and usage details for the usage conditions, and third information containing the pricing conditions for the first information and the price that corresponds to the pricing conditions, sent from a given provider; a usage condition selection step of selecting the usage conditions of the second information received by the reception step, corresponding to the reference information stored in the storage step; a pricing condition selection step of selecting the pricing conditions of the third information received by the reception step, corresponding to the reference information stored in the storage step; a usage step of decrypting and using encrypted the first information according to the usage details for the usage conditions selected by the usage condition selection step; and an execution step of charging for the usage by the usage step according to the price that corresponds to the pricing conditions selected by the pricing condition selection means.

Furthermore, the present invention provides a providing medium that provides a computer-readable program for making an information processing apparatus execute a process ,which comprises a storage step of storing appropriate reference information; a reception step of receiving encrypted first information, second information containing the usage conditions of the first information and usage details for the usage conditions, and third information containing the pricing conditions for the first information and the price that corresponds to the pricing conditions, sent from a given provider; a usage condition selection step of selecting the usage conditions of the second information received by the reception step, corresponding to the reference information stored in the storage step; a pricing condition selection step of selecting the pricing conditions of the third information received by the reception step, corresponding to the reference information stored in the storage step; a usage step of decrypting and using encrypted the first information according to the usage details for the usage conditions selected by the usage condition selection step; and an execution step of charging for the usage by the usage step according to the price that corresponds to the pricing conditions selected by the pricing condition selection means.

Furthermore, the present invention provides an information processing apparatus, an information processing method and a providing medium, wherein appropriate reference information is stored; encrypted first information, second information containing the usage conditions of the first information and usage details for the usage conditions, and third information containing the pricing conditions for the first information and the price that corresponds to the pricing conditions, sent from a given provider are received; the received usage conditions of the second information is selected; the received pricing conditions of the third information, corresponding to the stored reference information is selected; the encrypted first information is decrypted and used according to the usage details corresponding to the selected usage conditions; the usage is charged according to the price that corresponds to the selected pricing conditions.

Brief Description of the Drawings

Figure 1 is a system diagram illustrating a EMD system.
Figure 2 is a system diagram illustrating the major information flow in the EMD system.
Figure 3 is a block diagram showing the functional configuration of an EMD service center 1.
Figure 4 is a schematic diagram illustrating the transmission of delivery keys Kd at the EMD service center 1.
Figure 5 is another schematic diagram illustrating the transmission of delivery keys Kd at the EMD service center 1.

Figure 6 is another schematic diagram illustrating the transmission of delivery keys Kd at the EMD service center 1.

Figure 7 is another schematic diagram illustrating the transmission of delivery keys Kd at the EMD service center 1.

Figure 8 is another chart illustrating the transmission of delivery keys Kd at the EMD service center 1.

Figure 9 is a chart illustrating an example of system registration information.

Figure 10 is a chart illustrating use point information.

Figure 11 is a block diagram showing an example functional configuration of a content provider 2.

Figure 12 is a chart showing an example UCP.

Figure 13 is a schematic diagram illustrating control transfer of content.

Figure 14 is a schematic diagram illustrating first-generation duplication.

Figure 15 is a chart showing example code values of a service code and a condition code.

Figure 16 is a chart showing an example code values set as the usage conditions in UCP.

Figure 17 is a schematic diagram showing a content provider secure container.

Figure 18 is a schematic diagram showing an example authentication certificate of the content provider 2.

Figure 19 is a block diagram showing the functional configuration of a service provider 3.

Figure 20 is a chart showing example PTs.

Figure 21 is a chart showing an example code values set as the pricing conditions in PT.

Figure 22 is a chart showing another example PTs.

Figure 23 is a chart showing an example code values set as the other pricing conditions in PT.

Figure 24 is a schematic diagram showing a service provider secure container.

Figure 25 is a schematic diagram showing an example authentication certificate of the service provider 3.

Figure 26 is a block diagram showing an example functional configuration of a receiver 51 in a user home network 5.

Figure 27 is a schematic diagram showing an example authentication certificate of SAM 62 of the receiver 51.

Figure 28 is a chart showing an example of UCS.

Figure 29 is a schematic diagram illustrating the internal structure of the usage information storage 63A in the external storage 63 of the receiver 51.

Figure 30 is a chart showing an example of accounting information.

Figure 31 is a chart showing the information stored in the memory module 73 of the receiver 51.

Figure 32 is a chart illustrating reference information 51.

Figure 33 is a chart showing an example of use point information of reference information 51.

Figure 34 is a chart showing an example registration list.

Figure 35 is a block diagram showing an example functional configuration of a receiver 201 in the user home network 5.

Figure 36 is a chart showing example information stored in the memory module 223 of the receiver 201.

Figure 37 is a chart showing an example of reference information 201.

Figure 38 is a chart showing an example of use point information of reference information 51.

Figure 39 is a flow chart illustrating process for utilization of content.

Figure 40 is a flow chart illustrating the process of sending delivery keys Kd from the EMD service center 1 to the content provider 2.

Figure 41 is a flow chart illustrating a flow of mutual authentication between the content provider 2 and EMD service center 1.

Figure 42 is a flow chart illustrating another flow of mutual authentication between the content provider 2 and EMD service center 1.

Figure 43 is a flow chart illustrating another flow of mutual authentication between the content provider 2 and EMD service center 1.

Figure 44 is a flow chart illustrating the process of sending a content provider secure container from the content provider 2 to the service provider 3.

Figure 45 is a flow chart illustrating the process of sending a service provider secure container from the service provider 3 to the receiver 51.

Figure 46 is a flow chart illustrating the process in which the receiver 51 receives the service provider secure container.

Figure 47 is a flow chart illustrating the process in which the receiver 51 reproduces content.

Figure 48 is a flow chart illustrating an account settlement process.

Best Mode for Carrying Out the Invention

An embodiments of the present invention will be described below.

(1) Information distribution system

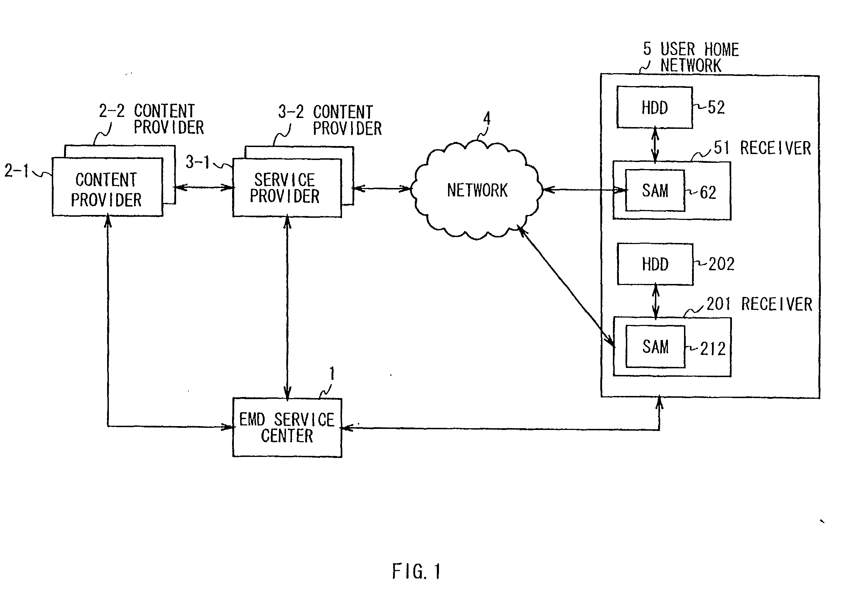

Figure 1 illustrates an EMD (electronic music distribution) system by the application of the present invention. The EMD system consists of the EMD service center 1 that manages individual pieces of equipment, content provider 2 that provides content, service provider 3 that provides predetermined services corresponding to content, and user network 5 composed of the equipment (receiver 51 and receiver 201 in this example) on which content is used.

The content distributed (provided) to equipment registered in an EMD system (for example, receiver 51 or receiver 201) is digital data whose information itself has a value. In this example, one piece of content corresponds to music data equivalent to one piece of music. The user purchases a content (in fact, purchases the right to use the content), reproduces the provided content or duplicates and uses it. Besides music data, however, content can be video data, game programs, computer programs, literary data, etc.

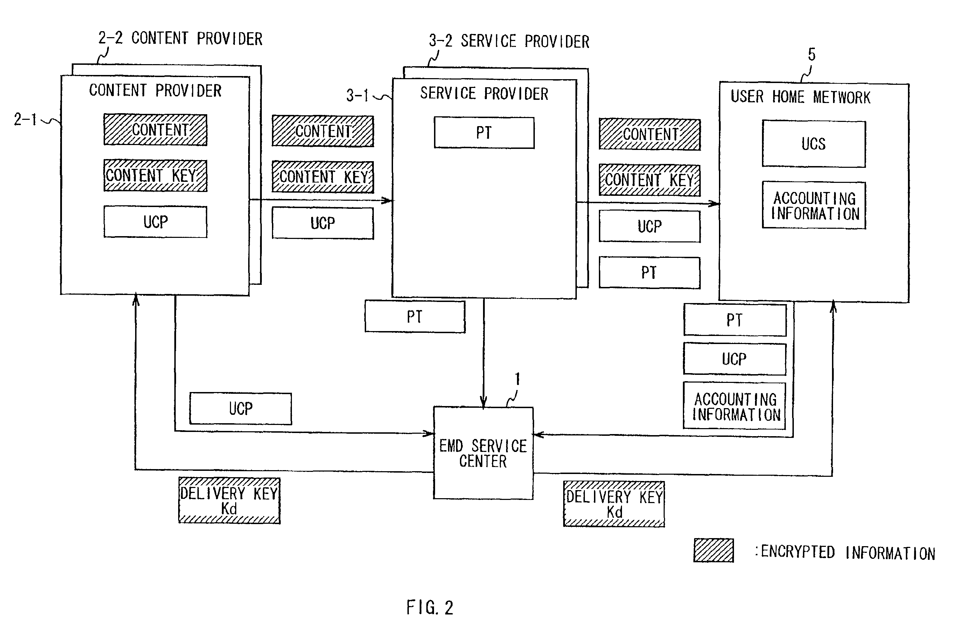

The EMD service center 1 sends the delivery keys Kd needed to use content to the user home network 5 and a plurality of content providers 2 (In this example, two content providers 2-1 and 2-2 are provided (referred to as simply content provider 2 unless needed to distinguish the content providers 2-1 and 2-2. The same applies to other apparatuses.), as shown in Figure 2, which shows the major information flow in the EMD system. Also, the EMD service center 1 receives accounting information and the like from the user home network 5 and adjust charges, or receives UCP from the content provider 2 and PT from the content provider 3.

The content providers 2-1 and 2-2 possess the content (encrypted with a content key Kco) to be provided, content key Kco (encrypted with a delivery key Kd) needed to decrypt the content, and usage control policy (abbreviated as UCP hereafter) that describes the usage details of content, and supply them in the form called a content provider secure container (described later) to the service provider 3. In this example, there are two service providers 3-1 and 3-2.

The service providers 3-1 and 3-2 prepare one or more price tags (abbreviated as PT hereafter) according to the UCP supplied by the content provider 2 and hold them. The service provider 3 sends the prepared PT(s) together with the content (encrypted with a content key Kco), content key Kco (encrypted with a delivery key Kd), and UCP supplied by the content provider 2, in the form called a service provider secure container to the user home network 5 through a network 4 consisting of a private cable network, the Internet, or communications satellites.

The user home network 5 prepares usage control status (abbreviated as UCS hereafter) according to the supplied UCP and PT(s) and performs the process of using the content based on the prepared UCS. Also, the user home network 5 prepares accounting information, timed with the preparation of UCS, and sends it together with corresponding UCP and PT(s) to the EMD service center 1, timed with, for example, the provision of the delivery keys Kd. In addition, the user home network 5 can be set not to send UCP and PT(s) to the EMD service center 1.

In this example, as shown in Figure 1, the user home network 5 is comprised of the receiver 51 which is connected to HDD 52 and has SAM (Secure Application Module) 62 and the receiver 201 which is connected to HDD 202 and has SAM 212. Details of the receivers 51 and 201 are described later.

(2) EMD service center

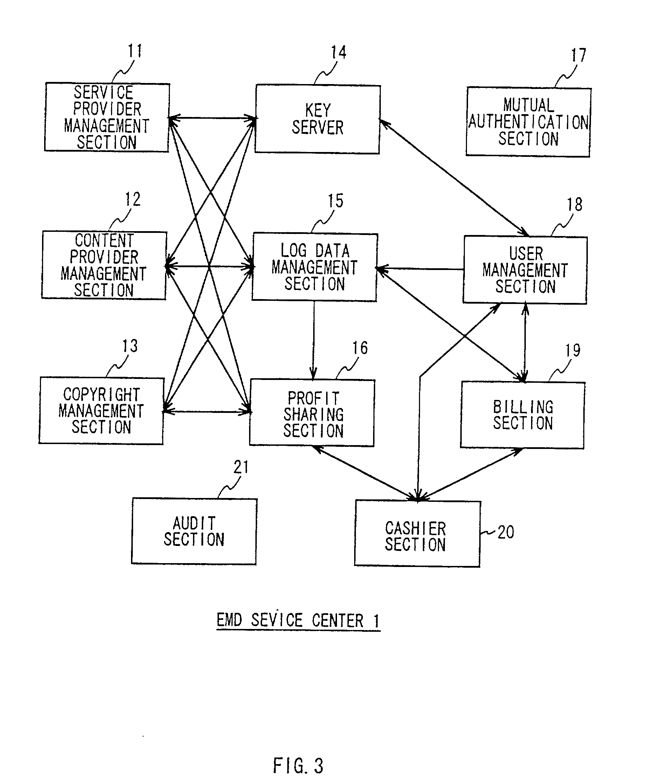

Figure 3 is a block diagram showing the functional configuration of the EMD service center 1. The service provider management section 11 supplies profit-sharing information to the service provider 3. The content provider management section 12 sends delivery keys Kd and supplies profit-sharing information to the content provider 2.

The copyright management section 13 sends information about the usage of content by the user home network 5 to the appropriate copyright management body, for example, JASPAC (Japanese Society for Rights of Authors, Composers and Publishers).

The key server 14 stores delivery keys Kd and supplies it to the content provider 2 through the content provider management section 12 or to the user home network 5 through the user management section 18.

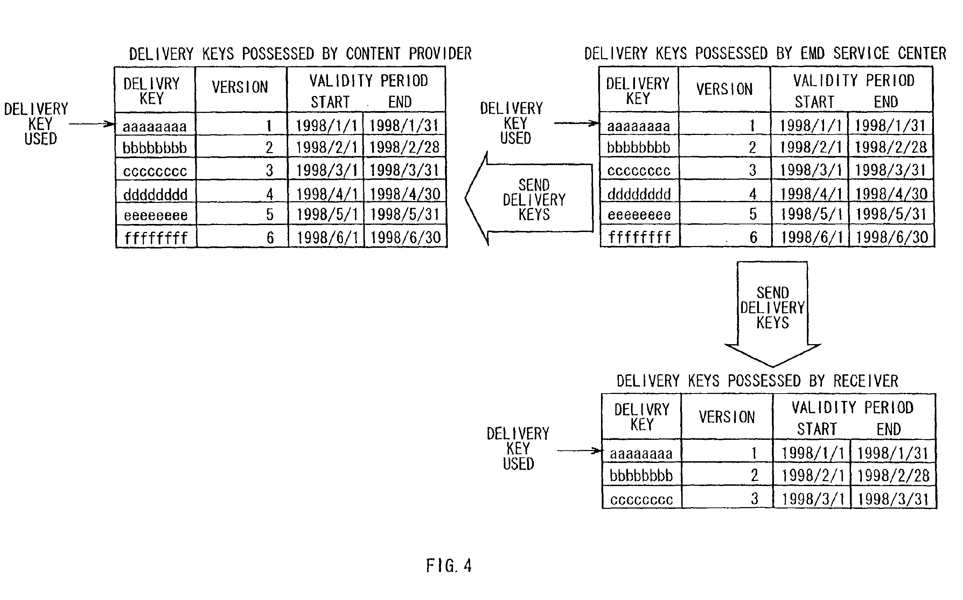

The delivery keys Kd supplied to the user home network 5 equipment formally registered in the EMD system and content provider 2 from the EMD service center 1 will be described with reference to Figures 4 to 7.

Figure 4 shows the delivery keys Kd possessed by the EMD service center 1, the delivery keys Kd possessed by the content provider 2, and the delivery keys Kd possessed by the receiver 51 in January 1998 when the content provider 2 starts to provide content and the receiver 51 composing the user home network 5 starts to use the content.

In the example of Figure 4, a delivery key Kd is valid from the first day to the last day of a calendar month (both inclusive). For example, the delivery key Kd version 1 with a value of "aaaaaaaa" consisting of a fixed random number of bits is available from January 1, 1998 to January 31, 1998 both inclusive (i.e., the content key Kco that encrypt the content distributed to the user home network 5 via the service provider 3 from January 1, 1998 to January 31, 1998 is encrypted with the delivery key Kd version 1). The delivery key Kd version 2 with a value of "bbbbbbbb" consisting of a fixed random number of bits is available from February 1, 1998 to February 28, 1998 both inclusive (i.e., the content key Kco that encrypt the content distributed to the user home network 5 via the service provider 3 during the given period is encrypted by the delivery key Kd version 2). Similarly, the delivery key Kd version 3 is available during March 1998, the delivery key Kd version 4 is available during April 1998, the delivery key Kd version 5 is available during May 1998, and the delivery key Kd version 6 is available during June 1998.

Before the content provider 2 starts to provide content, the EMD service center 1 sends six delivery keys Kd -- delivery keys Kd versions 1 to 6 -- available from January 1998 to June 1998 (both inclusive) to the content provider 2, which receives and stores the six delivery keys Kd. The reason why six months' delivery keys Kd are stored is that a certain period of time is required for the content provider 2 to make preparations such as encryption of the content and content keys before starting to provide the content.

Before the receiver 51 starts to use content, the EMD service center 1 sends three delivery keys Kd -- delivery keys Kd versions 1 to 3 --available from January 1998 to March 1998 (both inclusive) to the receiver 51, which receives and stores the three delivery keys Kd. Three months' delivery keys Kd are stored in order to avoid the situation in which content would not be available even during the term of the contract due to trouble in that the receiver 5 cannot be connected to the EMD service center 1 or other trouble and to reduce the load on the user home network 5 by decreasing the number of connections to the EMD service center 1.

During the period from January 1, 1998 to January 31, 1998, the delivery key Kd version 1 is used by the EMD service center 1, the content provider 2, and the receiver 51 that composes the user home network 5.

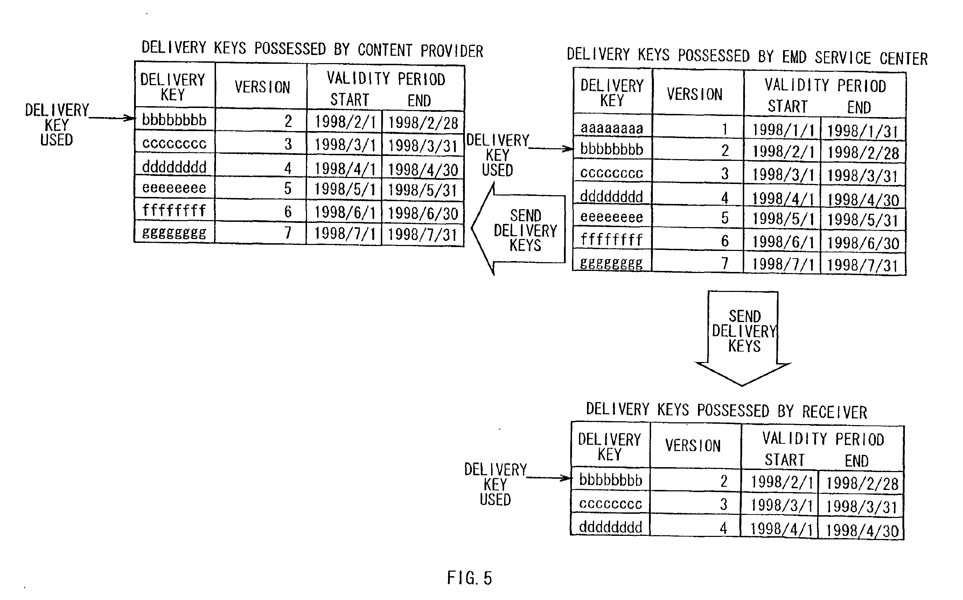

Now the transmission of delivery keys Kd from the EMD service center 1 to the content provider 2 and receiver 51 on February 1, 1998 will be described with reference to Figure 5. The EMD service center 1 sends six delivery keys Kd -- delivery keys Kd versions 2 to 7 -- available from February 1998 to July 1998 (both inclusive) to the content provider 2, which receives the six delivery keys Kd and store them overwriting the existing ones. The EMD service center 1 sends three delivery keys Kd -- delivery keys Kd versions 2 to 4 -- available from February 1998 to April 1998 (both inclusive) to the receiver 51, which receives the three delivery keys Kd and store them overwriting the existing ones. The EMD service center 1 stores the delivery key Kd version 1 as it is. This is done to make past delivery keys Kd available for use in case of unexpected trouble or in case an illegal act is committed or detected.

During the period from February 1, 1998 to February 28, 1998, the delivery key Kd version 2 is used by the EMD service center 1, the content provider 2, and the receiver 51 that composes the user home network 5.

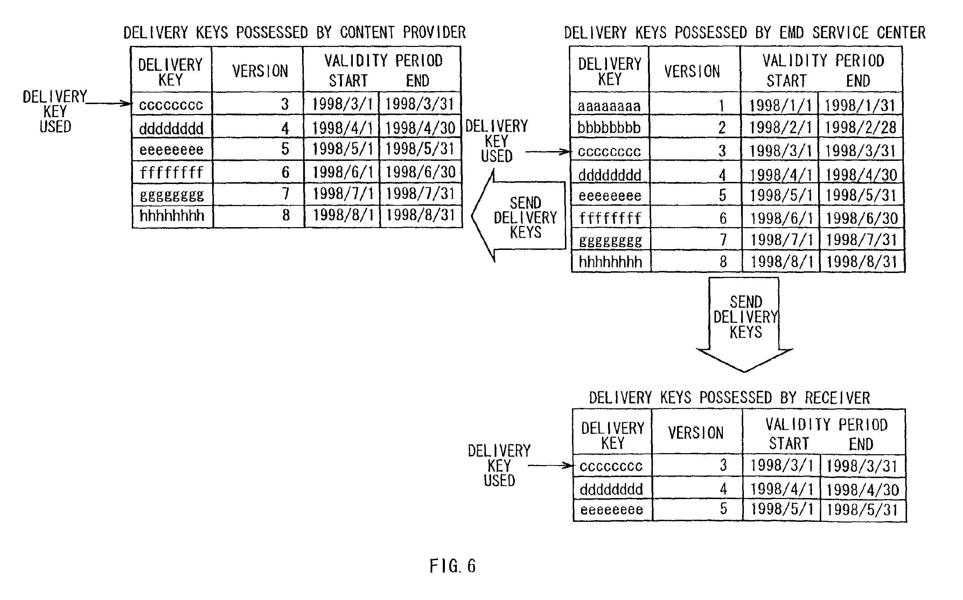

Now the transmission of delivery keys Kd from the EMD service center 1 to the content provider 2 and receiver 51 on March 1, 1998 will be described with reference to Figure 6. The EMD service center 1 sends six delivery keys Kd -- delivery keys Kd versions 3 to 8 -- available from March 1998 to August 1998 (both inclusive) to the content provider 2, which receives the six delivery keys Kd and store them overwriting the existing ones. The EMD service center 1 sends three delivery keys Kd -- delivery keys Kd version 3 to 5 -- available from March 1998 to May 1998 (both inclusive) to the receiver 51, which receives the three delivery keys Kd and store them overwriting the existing ones. The EMD service center 1 stores the delivery keys Kd versions 1 and 2 as they are.

During the period from March 1, 1998 to March 31, 1998, the delivery key Kd version 3 is used by the EMD service center 1, the content provider 2, and the receiver 51 that composes the user home network 5.

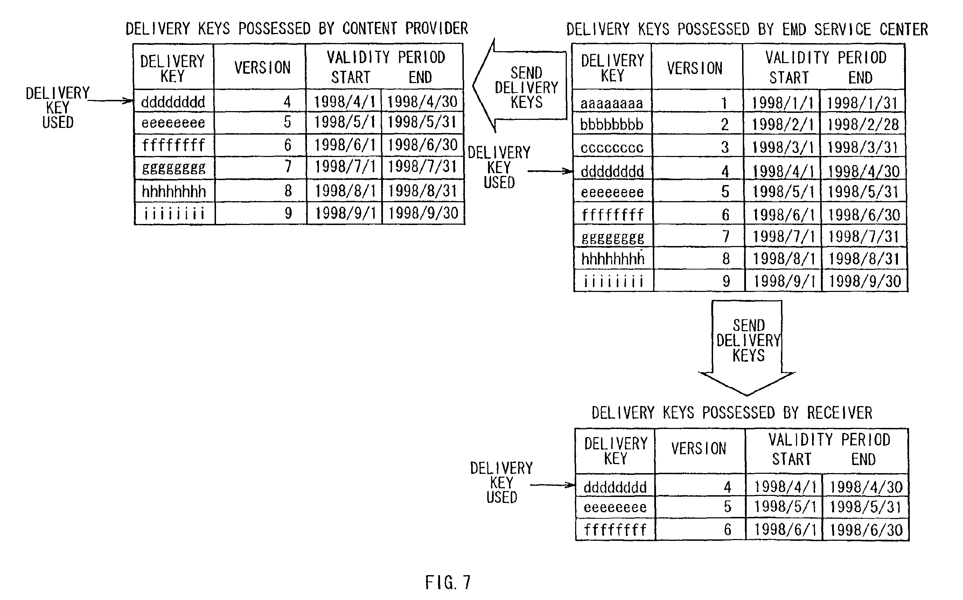

Now the transmission of delivery keys Kd from the EMD service center 1 to the content provider 2 and receiver 51 on April 1, 1998 will be described with reference to Figure 7. The EMD service center 1 sends six delivery keys Kd -- delivery keys Kd versions 4 to 9 -- available from April 1998 to September 1998 (both inclusive) to the content provider 2, which receives the six delivery keys Kd and store them overwriting the existing ones. The EMD service center 1 sends three delivery keys Kd -- delivery keys Kd version 3 to 5 -- available from April 1998 to June 1998 (both inclusive) to the receiver 51, which receives the three delivery keys Kd and store them overwriting the existing ones. The EMD service center 1 stores the delivery keys Kd versions 1, 2, and 3 as they are.

During the period from April 1, 1998 to April 30, 1998, the delivery key Kd version 4 is used by the EMD service center 1, the content provider 2, and the receiver 51 that composes the user home network 5.

In this way, if delivery keys Kd are distributed several months in advance, users can purchase content even if they do not access the EMD service center 1 at all for a month or two, and later they can access the EMD service center 1 and receive keys at a convenient time.

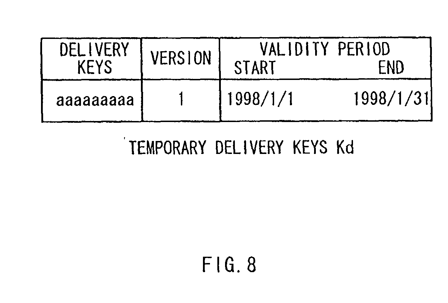

As above, three months' delivery keys Kd are distributed to the equipment formally registered in the EMD system and the content provider 2 in the user home network 5. However, to user home network equipment which is not formally registered in the EMD system and temporarily registered (described in detail later) , as shown in Figure 8, one month's delivery keys Kd instead of three months' delivery keys Kd are distributed. In this example, in order to register the user home network 5 equipment in the EMD system, registration procedure such as user-crediting process is required which takes approximately one month. Therefore, in order to make the content available during the period (one month) from applying registration to formal registration, delivery keys Kd which allows one-month use are distributed to the equipment which is not formally registered.

Returning to Figure 3, the log data management section 15 stores, the accounting information output by the user management section 18, PTs corresponding to the content, and UCP corresponding to the content.

The profit-sharing section 16 calculates, the respective profits of the EMD service center 1, content providers 2-1 and 2-2, and service providers 3-1 and 3-2 according to the information provided by the log data management section 15 and outputs the results to the service provider management section 11, content provider management section 12, cashier section 20, and copyright management section 13. The profit-sharing section 16 calculates use points for the content providers 2-1 and 2-2 and service providers 3-1 and 3-2 respectively (the larger the profits are, or the more the user uses, the lager the points become) according to the calculated profits and outputs the use points to the user management section 18. From now on, the use point in the content provider 2 is called content use point and the use point in the service provider 3 is called service use point.

The mutual authentication section 17 performs mutual authentication with the content provider 2, service provider 3, and user home network 5 equipment.

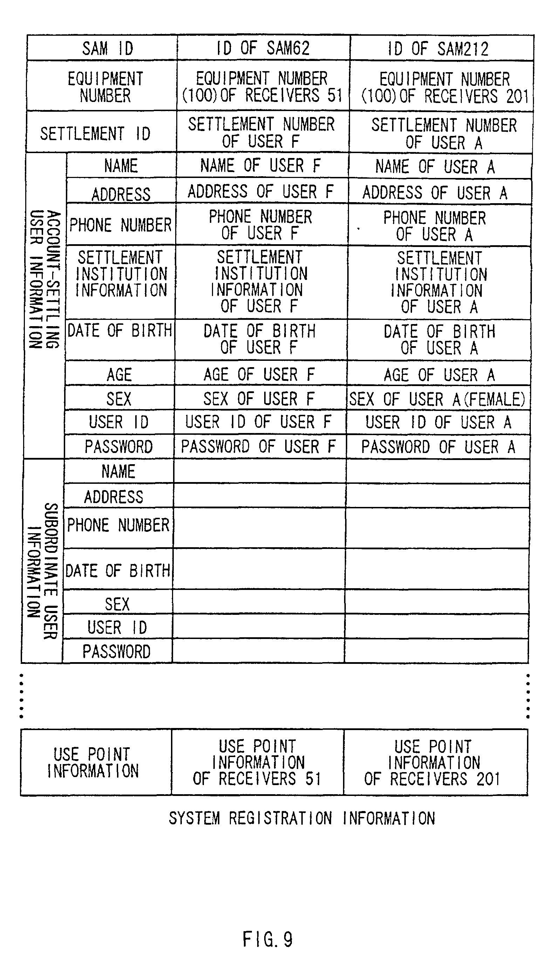

The user management section 18 manages the information (hereafter referred to as system registration information) about the equipment in the user home network 5 that can be registered in the EMD system. The system registration information contains information corresponding to the items "SAM ID," "Equipment Number," "Settlement ID," "Account-Settling User Information," multiple "Subordinate User Information," and "Use Point Information," as shown in Figure 9.

"SAM ID" contains the SAM (described later) ID of the manufactured equipment composing the user home network 5. The "SAM ID" row of the system registration information in Figure 9 contains the SAM 62 ID of the receiver 51 and SAM 212 ID of the receiver 201.

"Equipment Number" is the number assigned to the user home network 5 equipment that possesses SAM. If a piece of equipment in the user home network 5 has the capability (communications block) to communicate directly with the service provider 3 and EMD service center 1 through a network 4 and has, for example, the capability to output (present) the contents of UCP and PT to the user or the capability (a display unit and operator panel) to allow the user to select the usage details in UCP, an equipment number of 100 or higher is given to that piece of equipment (hereafter, the pieces of equipment that have such capabilities are referred to as master equipment). The pieces of equipment without such capabilities (hereafter, the pieces of such equipment are referred to as slave equipment) are assigned an equipment number of 99 or lower. In this example, the receivers 51 and 201 have the above-mentioned capabilities and are assigned an equipment number of 100 or higher (100). Therefore, equipment number 100 is assigned to each "Equipment Number" corresponding to SAM 62 ID of receiver 51 and SAM 212 ID of receiver 201 in the system registration information of Figure 9.

"Settlement ID" stores the predetermined settlement ID assigned when formally registered in EMD system. In this example, since the user F and user A are formally registered as account-settling users (described later) in the receivers 51 and 201 and assigned the settlement ID, that assigned settlement ID is stored in each "Settlement ID" corresponding to SAM 62 ID and SAM 212 ID in the system registration information of Figure 9.

"Account-Settling User Information" contains, the name, address, phone number, settlement institution information (e.g., the credit card number), date of birth, age, sex, ID, password, etc. of the user who is to settle the account (hereafter, such a user is referred to as account-settling user).

The name, address, phone number, settlement institution information, date of birth, age, and sex of the account-settling user are provided by the user when an application for registration is filed by the user (hereafter the items contained in "Account-Settling User Information" is referred to as user's general information if there is no need to handle them individually) . Of these items, the name, address, phone number, and settlement institution information must be accurate (e.g., the information registered in the settlement institution) in this example because they are used for the user-crediting process. On the other hand, the date of birth, age, and sex in the user's general information are not used for the user-crediting process and need not be accurate in this example. Besides, the user is not necessarily required to provide them. The account-settling user's ID and password contained in "Account-Settling User Information" is assigned and set when the user is registered in the EMD system.

In this example, since the user F is registered as an account-settling user in the receiver 51, "Account-Settling User Information" for the SAM 62 ID of the receiver 51 in the system registration information of Figure 9 contains the user's general information provided by user F as well as the ID and password of user F. Since the user A is registered as an account-settling user in the receiver 201, "Account-Settling User Information" for the SAM 212 ID contains the user's general information provided by user A as well as the ID and password of user A. In this example, the user F is male and the user A is female.

"Subordinate User Information" contains the name, address, phone number, date of birth, age, sex, ID, password, etc. of the user who does not settle his/her account for himself/herself (hereafter such users are referred to as subordinate users). In other words, it contains the information contained in "Account-Settling User Information" except the settlement institution information. The subordinate user's name, address, phone number, date of birth, age, and sex contained in "Subordinate User Information" need not be accurate because subordinate users are not subject to a crediting process. For example a nickname may be used for the name. Although the name is used to identify the user, the other information is not necessarily required. The subordinate user's ID and password contained in "Subordinate User Information" is assigned and set when the subordinate user is registered in the EMD system.

In this example, since no subordinate user is registered for both receivers 51 and 201, "Subordinate User Information" for the SAM 62 ID and the SAM 212 ID contains no information.

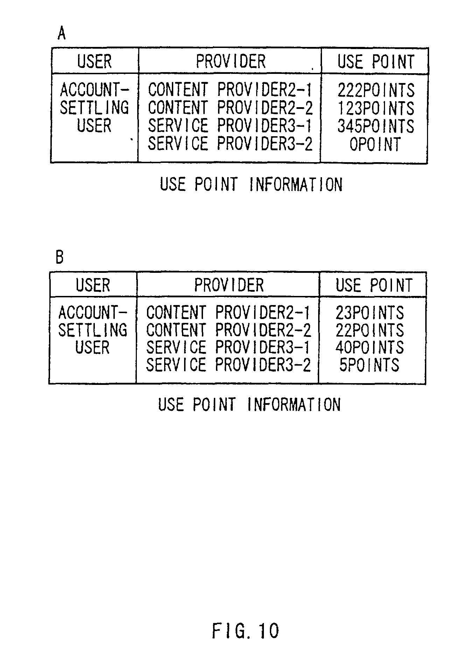

"Use Point Information" is the use point information output by the profit-sharing section 16." Figure 10A shows use point information of the receiver 51 contained in "Use Point Information" for SAM 62. According to this, the user F (account-settling user) of the receiver 51 is given the content use point 222 points for the content provider 2-1, 123 points for the content provider 2-2, 345 points for the service provider 3-1, and 0 point for the service provider 3-2.

Figure 10B shows use point information of the receiver 201 contained in "Use Point Information" for SAM 212. According to this, the user A (account-settling user) of the receiver 201 is given the content use point 23 points for the content provider 2-1, 22 points for the content provider 2-2, 40 points for the service provider 3-1, and 5 points for the service provider 3-2.

In this example, each of the sum point (345 points (= 123 + 222) for the user F, and 45 points (= 23 + 22) for the user A) of the content use point of the content providers 2-1 and 2-2 and the sum point (345 points (= 345 + 0) for the user F, and 45 points (= 5 + 40) for the user A) of the service use point of the service providers 3-1 and 3-2 is made to be equal.

In addition to managing this system registration information, the user management section 18 prepares registration lists for predetermined processes and sends them together with the delivery keys Kd to the user home network 5.

Returning again to Figure 3, the billing section 19 calculates the amount charged to the user based on, for example, the accounting information, UCP, and PTs supplied by the log data management section 15, and supplies the results to the cashier section 20, which then settles accounts in communication with external banks or the like (not shown), based on the amounts of usage fees to be paid or charged to the user, content provider 2, and service provider 3. Also, the cashier section 20 informs the user management section 18 about the results of the settlement.

The audit section 21 checks the validity of the accounting information supplied from the equipment in the user home network 5 as well as the validity of PTs and UCP (i.e., checks for any illegal act) . In this example, the EMD service center 1 receives UCP from the content provider 2, PTs from the service provider 3, and UCP and PTs from the user home network 5.

(3) Content provider

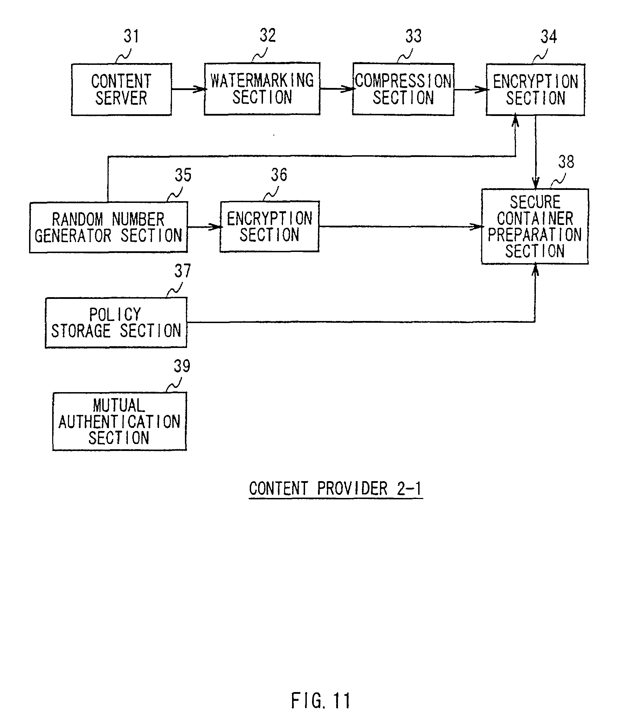

Figure 11 is a block diagram showing a functional configuration of the content provider 2-1. The content server 31 stores the content to be supplied to the user and supplies it the watermarking section 32, which then watermarks the content supplied by the content server 31 and supplies it to the compression section 33.

The compression section 33 compresses the content supplied by the watermarking section 32, by ATRAC2 (Adaptive Transform Acoustic Coding 2) (a trademark) or another method, and supplies it to the encryption section 34. The encryption section 34 encrypts the content compressed by the compression section 33, by common-key cryptography such as DES (Data Encryption Standard) by using the random number supplied by the random number generator section 35 as a key (hereafter this random number is referred to as a content key Kco), and outputs the results to the secure container preparation section 38.

The random number generator section 35 supplies the random number consisting of a fixed number of bits for use as the content key Kco to the encryption sections 34 and 36. The encryption section 36 encrypts the content key Kco by common-key cryptography such as DES by using the delivery key Kd supplied by the EMD service center 1, and outputs the results to the secure container preparation section 38.

DES is an encryption method that encrypts 64-bit blocks of plain text by using a 56-bit common key. The DES process consists of the part (data mixing section) that converts plain text to cipher text by mixing it with the key and the part (key processing section) that generates the key (expansion key) for use by the data mixing section from the common key. All the DES algorithms are open to the public. Therefore, only the basic processing in the data mixing section will be described here briefly.

First, 64 bits of plain text is divided into high-order 32 bits $H_0$ and low-order 32 bits $L_0$. Using, as input, the 48-bit expansion key $K_1$ supplied from the key processing section and the low-order 32 bits $L_0$, the output from an F function is calculated by mixing the low-order 32 bits $L_0$. The F function consists of two basic conversions:

"substitution" for substituting numeric values in a prescribed manner and "transposition" for transposing bit positions in a prescribed manner. Then the high-order 32 bits $H_0$ is XORed with the output from the F function and denoted as $L_1$. $L_0$ is denoted as $H_1$.

After 16 iterations of the above process based on the high-order 32 bits $H_0$ and low-order 32 bits $L_0$, the resulting high-order 32 bits $H_{16}$ and low-order 32 bits $L_{16}$ are output as cipher text. For decryption, the above procedures are reversed using the common key used for the encryption.

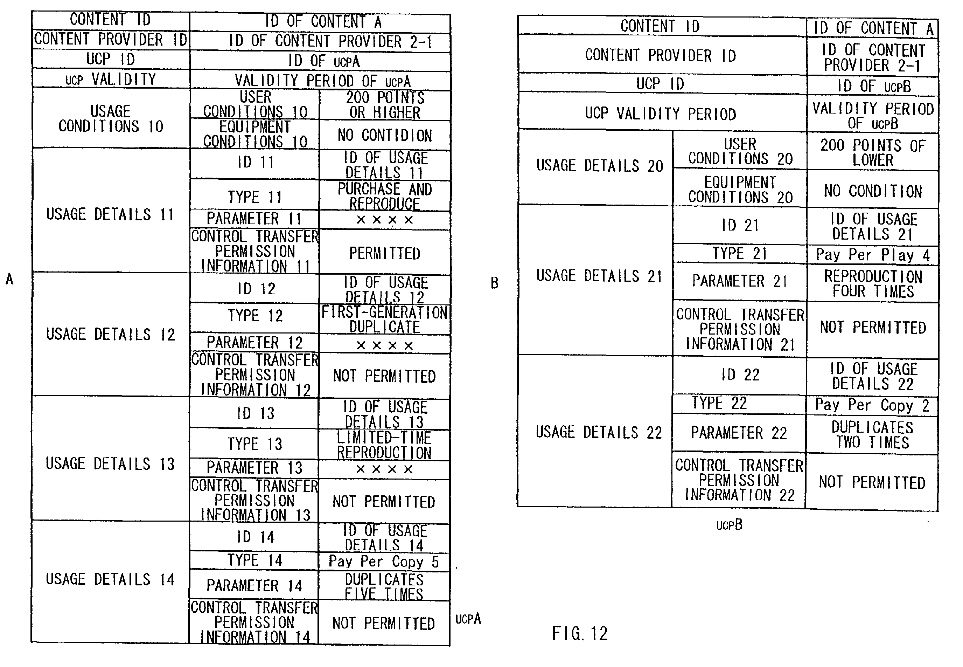

The policy storage section 37 stores the UCP set for content and outputs it to the secure container preparation section 38. Figure 12 shows UCP A and UCP B which has been set for content A kept in the content server 31 and which is stored in the policy storage section 37. A UCP contains predefined information regarding "Content ID," "Content Provider ID," "UCP ID," "UCP Validity Period," "Usage Conditions," and "Usage Details." "Content ID" contains the ID of the content to which the given UCP is applied. Each "Content ID" of UCP A (Figure 12A) and UCP B (Figure 12B) contains the ID of content A.

"Content Provider ID" contains the ID of the content provider that provides the content. "Content Provider ID" of UCP A contains the ID of the content provider 2-1. "UCP ID" contains the ID assigned to the given UCP: "UCP ID" of UCP A contains the ID of UCP A and "UCP ID" of UCP B contains the ID of UCP B. "UCP Validity Period" contains information about the validity period of the UCP: "UCP Validity Period" of UCP A contains the validity period of UCP A and "UCP Validity Period" of UCP B contains the validity period of UCP B.

"Usage Conditions" consists of items "User Conditions" and "Equipment Conditions." "User Conditions" contains the conditions for the user who can select the given UCP. "Equipment Conditions" contains the conditions for the equipment that can select the given UCP.

In the case of UCP A, "Usage Conditions 10" is specified. "User Conditions 10" of "Usage Conditions 10" contains information ('200 Points or Higher') indicating that the use points are 200 points or higher. "Equipment Conditions 10" of "Usage Conditions 10" contains information ('No Condition') indicating that there is no condition. Thus, UCP A can be selected only by the users who have 200 or higher content use points of the content provider 2-1.

In the case of UCP B, "Usage Conditions 20" is specified. "User Conditions 20" of "Usage Conditions 20" contains information ('200 Points or Lower') indicating that the use points are 200 points or lower. "Equipment Conditions 20" of "Usage Conditions 20" contains information ('No Condition') indicating that there is no condition. Thus, UCP A can be selected only by the users who have 200 or lower content use points of the content provider 2-1.

"Usage Details" contains items such as "ID, " "Type, " "Parameter, " and "Control Transfer Permission Information." "ID" contains the ID assigned to the information contained in "Usage Details." "Type" contains information that indicates the use type of the content such as reproduction or duplication. "Parameter" contains the predefined information corresponding to the use type contained in "Type."

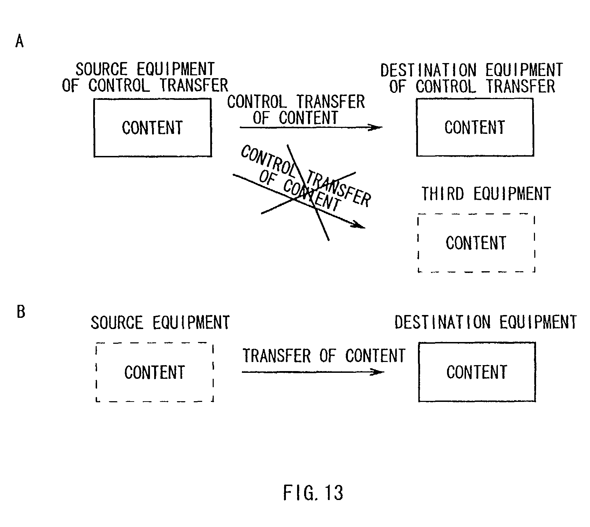

"Control Transfer Permission Information" contains information ('Permitted' or 'Not Permitted') which indicates whether control transfer of the content is possible (permitted or not). In the case of a content control transfer, the content is copied to the destination equipment while being kept on the source equipment, as shown in Figure 13A. In other words, the content is used both on the source and destination equipment. In this respect, control transfer differs from normal content transfer in which content is removed from the source equipment and moved to the destination equipment, only where the content is stored and used, as shown in Figure 13B.

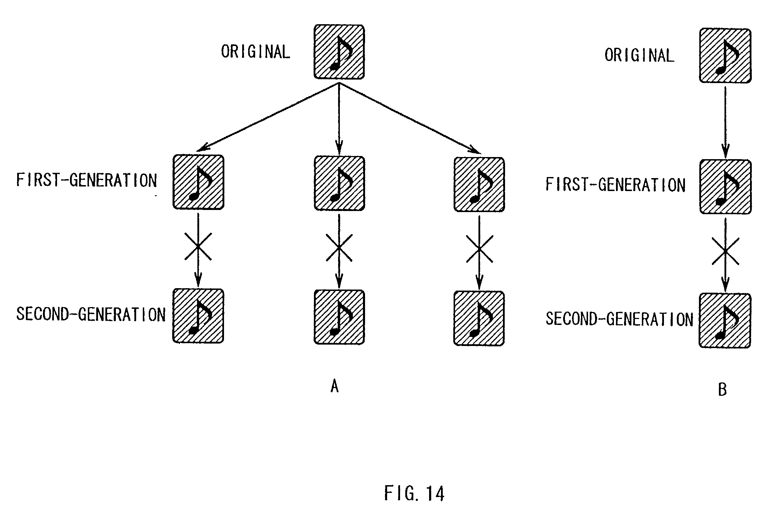

During a control transfer of content, the source equipment cannot transfer the control of the content to any third equipment (not permitted), as shown in Figure 13A. Thus, the content is kept only on the two pieces of equipment: the source equipment and destination equipment. In this respect, content control transfer differs from the first-generation duplication which can produce multiple duplicates (first-generation) from the original content, as shown in Figure 14A. Also, content control transfer differs from the one-time duplication shown in Figure 14B in that content control can be transferred to third equipment if the content is returned from the source equipment.

Returning to Figure 12A, UCP A has four "Usage Details" fields: "Usage Details 11" to "Usage Details 14." "ID 11" of "Usage Details 11." "Type 11" contains the information indicating the use type of 'Purchase and Reproduce' meaning that the content will be purchased and reproduced. "Parameter 11" contains the predefined information corresponding to 'Purchase and Reproduce.' "Control Transfer Permission Information 11" contains the information indicating that the control transfer of the content is permitted ('Permitted').

"ID 12" of "Usage Details 12" contains the ID assigned to "Usage Details 12." "Type 12" contains the information indicating the use type of 'First-Generation Duplicate' meaning that first-generation duplicates will be produced. Multiple first-generation duplicates can be produced from the original content as shown in Figure 14A. However, it is not possible to produce second-generation duplicates from first-generation duplicates (not permitted) . "Parameter 12" contains the predefined information corresponding to 'First-Generation Duplicate.' "Control Transfer Permission Information 12" contains the information indicating that the control transfer of the content is not permitted ('Not Permitted').

"ID 13" of "Usage Details 13" contains the ID assigned to "Usage Details 13." "Type 13" contains information 'Limited-Time Reproduction' indicating the use type of reproducing content A for a specified period (time). "Parameter 13" contains the start time and end time corresponding to 'Limited-Time Reproduction.' "Control Transfer Permission Information 13" is set to 'Permitted.'

"ID 14" of "Usage Details 14" contains the ID assigned to "Usage Details 14." "Type 14" contains information 'Pay Per Copy 5' indicating the use type (coupon for duplicates available for five times, so to speak) of duplicating five times. However, also in this case, it is not possible to produce duplicates from duplicates (not permitted), as shown in Figure 14B. "Parameter 14" contains information "Duplicates Five Times" indicating five times of possible duplicates according to 'Pay Per Copy 5.' "Control Transfer Permission Information 14" is set to 'Not Permitted.'

Two "Usage Details 21" and "Usage Details 22" are contained in UCP B of Figure 12B. "ID 21" of "Usage Details 21" contains a given ID assigned to "Usage Details 21". "Type 21" contains information 'Pay Per Play 4' indicating the use type of reproducing four times. "Parameter 21" contains information "Reproduce Four Times" indicating four times of possible reproduction.'

"Control Transfer Permission Information 12" is set to 'Not Permitted.'

"ID 22" of "Usage Details 22" contains the ID assigned to "Usage Details 22." "Type 22" contains 'Pay Per Copy 2', "Parameter 22" contains "Duplicates Two Times". "Control Transfer Permission Information 22" contains 'Not Permitted'.

Here, comparing the details of UCP A and UCP B, while the user having the use points of 200 points or higher can choose from four "Usage Details" fields: "Usage Details 11" to "Usage Details 14", the user having the use points of 200 points or lower can only choose from two "Usage Details" fields: "Usage Details 21" and "Usage Details 22".

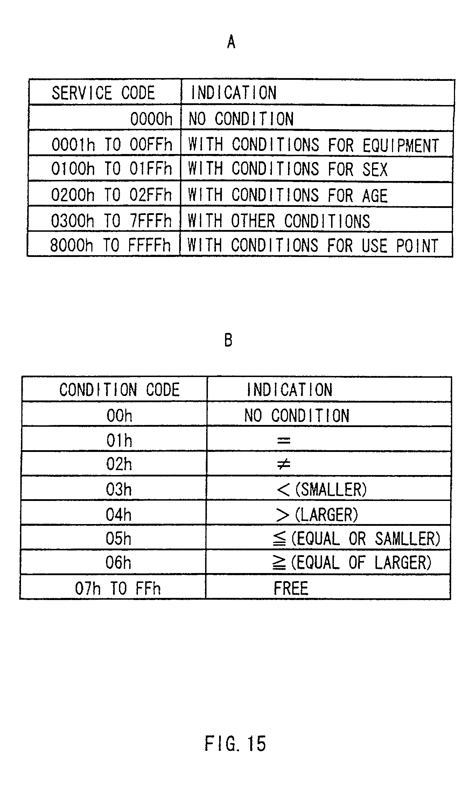

Incidentally, Figure 12 shows UCP A, UCP B to show an example. Actually, in addition to service codes shown in Figure 15A and condition codes shown in Figure 15B, "Usage Conditions 10" of UCP A and "Usage Conditions 20" of UCP B consist of value codes indicating values or predefined type according to the service codes.

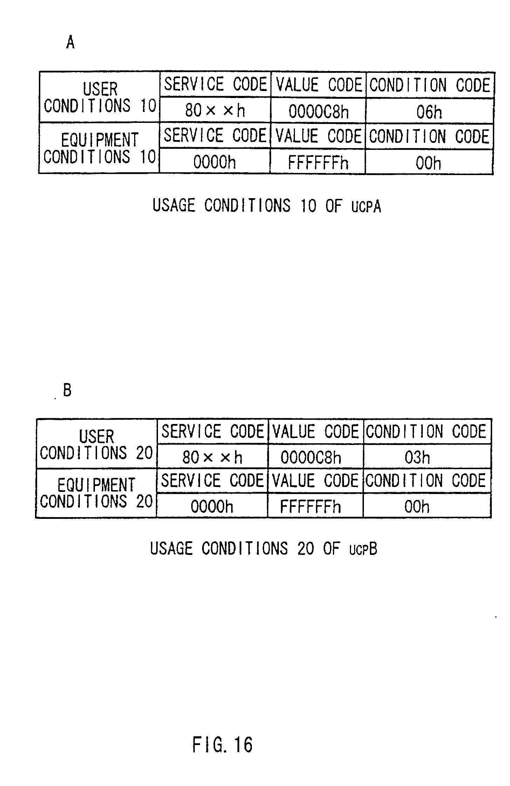

Figure 16A shows code values of each code set as "User Conditions 10" and "Equipment Conditions 10" of "Usage Conditions 10" in UCP A (Figure 12A). Since "User Conditions 10" of "Usage Conditions 10" indicates 200 points or higher, a service code 80xxh (Figure 15A) meaning "with conditions for use point", a value code 0000C8h indicating the value 200 at this time and condition code 06h (Figure 15A) meaning "> = (equal or smaller)" are set as "User Conditions".

Since "Equipment Conditions 10" in UCP A indicates "No Condition", a service code 0000h meaning "No condition", a value code FFFFFFh (Figure 15A) having no meaning and a condition code 00h (Figure 15B) meaning "No Condition" are set as "Equipment Condition".

Figure 16B shows code values of each code set as "User Conditions 20" and "Equipment Conditions 20" of "Usage Conditions 20" in UCP B. Since "User Conditions 20" indicates 200 points or lower, a service code 80xxh meaning "with conditions for use point", a value code 0000C8h (Figure 15A) indicating the value 200 and condition code 03h (Figure 15B) meaning "> = (equal or larger)" are set as "User Conditions".

"Equipment Conditions 20" in UCP B indicates "No condition" similarly to "Equipment Conditions 10" in UCP A, and the both have the same code values, an explanation for it will be omitted.

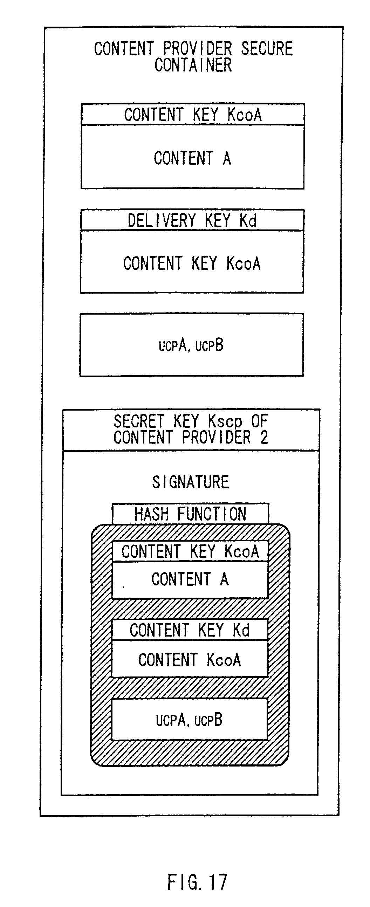

Returning to Figure 11, the secure container preparation section 38 prepares a content provider secure container consisting, for example, of a content A (encrypted with a content key KcoA), a content key KcoA (encrypted with a delivery key Kd), UCP A, UCP B, and the content provider's signature, as shown in Figure 17. The signature is obtained by encrypting a hash value with a secret key (the secret key Kscp of the content provider 2 in this case) in the public-key cryptosystem of the content provider. The hash value, in turn, has been obtained by applying a hash function to the data that needs to be sent (content A in this case (encrypted with the content key KcoA)), content key KcoA (encrypted with the delivery key Kd), and UCP A, UCP B.

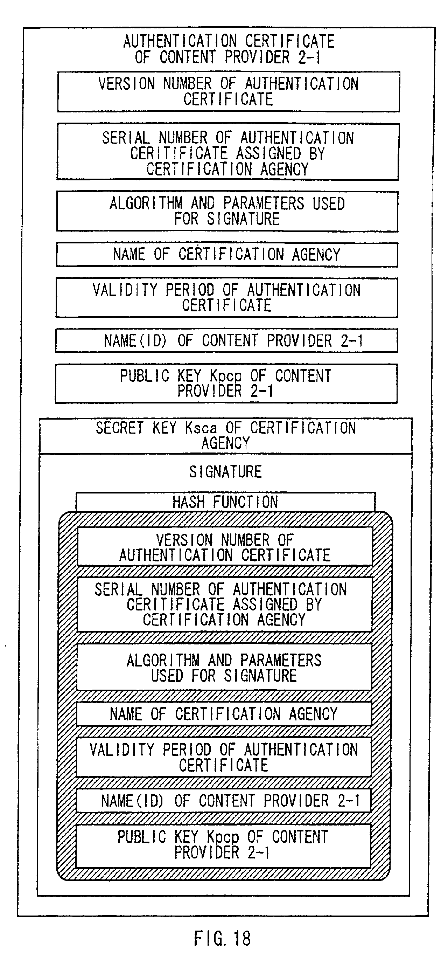

The secure container preparation section 38 sends the content provider secure container to the service provider 3 by attaching the authentication certificate of the content provider 2-1 shown in Figure 18. The authentication certificate consists of its version number, its serial number assigned to the content provider 2-1 by the certification agency, the algorithm and parameters used for the signature, the name of the certification agency, the validity period of the authentication certificate, and the name, public key Kpcp, and signature (encrypted with the secret key Ksca of the certification agency) of the content provider 2-1.

The signature is used to check for falsification. It is produced by computing, by means of a hash function, a hash value from the data to be sent and encrypting the hash value with the secret key of public-key cryptography.

Hash functions and signature authentication will be described below. A hash function accepts as input the data to be sent, compresses it to data of a specific bit length, and outputs it as a hash value. Hash functions are characterized in that it is difficult to predict the input from the hash value (output), that if one bit of input data changes, many bits of the hash value change, and that it is difficult to find out input data that have the same hash value.

The receiver that has received the signature and data decrypts the signature by the cryptographic public key to obtain a resulting hash value. Then the hash value of the received data is calculated and compared with the hash value obtained by decrypting the signature, to check whether the two hash values are identical. If they are determined to be identical, the received data has not been falsified and it has been sent by the sender that has the secret key corresponding to the public key. Examples of the hash functions used for signatures include, MD (Message Digest) 4, MD5, SHA (Secure Hash Algorithm), etc.

Now public-key cryptography will be described. In contrast to the common-key cryptography which uses the same key (common key) for encryption and decryption, public-key cryptography uses different keys for encryption and decryption. In public-key cryptography, one of the keys is made public, but the other key can be kept secret. The key that can be made public is called a public key while the key that is kept secret is called a secret key.

Now a typical public-key cryptosystem, RSA (Rivest-Shamir-Adleman), will be described briefly. First, two significantly large primes p and q are determined, and then their product n is determined. The least common multiple L of (p - 1) and (q - 1) are computed, and the value e that is equal to or larger than 3 and less than L and that is relatively prime to L is determined (i.

e., the value that will go into both e and L, which is only 1).

In modulo L arithmetic, the multiplicative inverse d of the element e is determined. In other words, the relationship ed = 1 mod L exists among, d, e, and L, where d can be calculated by Euclid an algorithm. Here, n and e are public keys and p, q, and d are secret keys.

Cipher text C can be calculated from plain text M by equation (1).

$$C = M^e \bmod n \qquad (1)$$

The cipher text C is decrypted into the plain text M by equation (2).

$$M = C^d \bmod n \qquad (2)$$

Demonstration is omitted. The reason why plain text can be converted into cipher text by RSA and cipher text can be decrypted is that RSA is based on Fermat's first theorem and that equation (3) holds.

$$M = C^d = (M^e)^d = M^{ed} = M \bmod n \qquad (3)$$

If one knows the secret keys p and q, he/she can compute the secret key d from the public key e. However, if the number of digits of the public key n is increased to the extent that the unique factorization of the public key n is difficult in terms of the amount of computation, the secret key d cannot be computed from the public key e and the cipher text cannot be decrypted based simply on knowledge of the public key n. As described above, the RSA cryptosystem can use different keys for encryption and decryption.

Now another public-key cryptosystem, Elliptic Curve Cryptography, will be described briefly. Let B denote a point on the elliptic curve $y^2 = x^3 + ax + b$. To define additions of points on the elliptic curve, let nB denote the result of n additions of B. Similarly, subtractions will be defined. It has been proven that it is difficult to compute n from B and Bn. Suppose, B and nB are public keys and n is a secret key. Using a random number r and the public keys, cipher text C1 and C2 are computed from plain text M by equations (4) and (5).

$$C1 = M + rnB \qquad (4)$$

$$C2 = rB \qquad (5)$$

Cipher text C1 and C2 are decrypted into plain text M by equation (6)

$$M = C1 - nC2 \qquad (6)$$

Decryption is possible only when the secret key n is available. As can be seen from the above discussion, Elliptic Curve Cryptography allows the use of different keys for encryption and decryption, as is the case with the RSA cryptosystem.

Returning to Figure 11, the mutual authentication section 39 of the content provider 2-1 performs mutual authentication with the EMD service center 1 before receiving delivery keys Kd from the EMD service center 1. It can also perform mutual authentication with the service provider 3 before sending the content provider secure container to the service provider 3. In this example, however, since the content provider secure container does not contain secret information, this mutual authentication is not necessarily required.

The content provider 2-2 has basically the same configuration as the content provider 2-1, therefore explanation with drawings will be omitted.

(4) Service provider

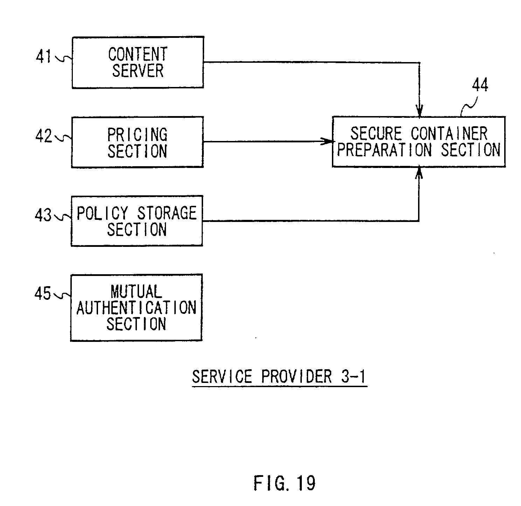

Now, the functional configuration of the service provider 3-1 will be described with reference to the block diagram in Figure 19. The content server 41 stores the content (encrypted with the content key Kco), content key Kco (encrypted with the delivery key Kd), UCP, and a signature of the content provider 2 contained in the content provider secure container supplied by the content provider 2 and supplies them to the secure container preparation section 44.

The pricing section 42 checks the authenticity of the content provider secure container based on the signature contained in the content provider secure container supplied by the content provider 2. In this case, the certificate of the content provider 2 is checked. If it is authentic, a public key of the content provider 2 will be given. And on the basis of this given public key, the authenticity of the content provider secure container is checked.

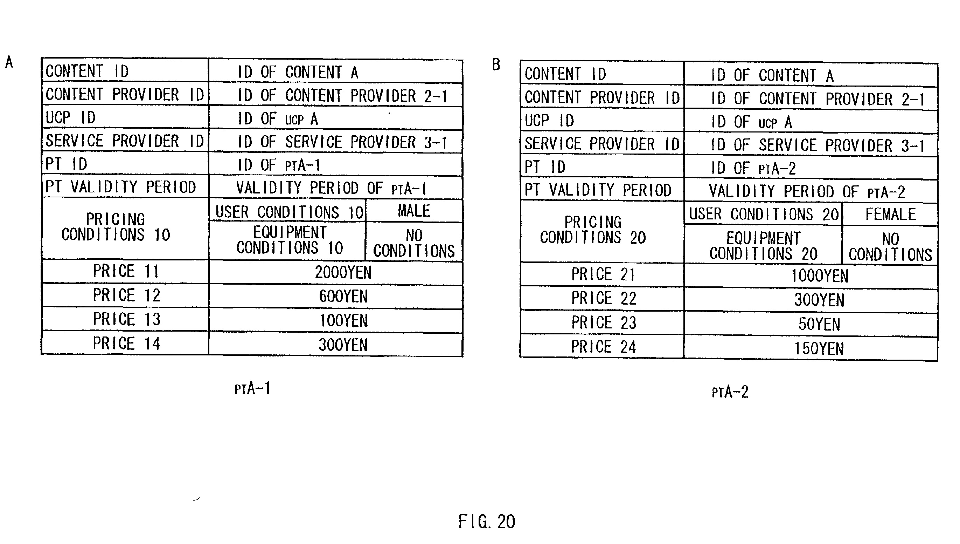

If the authenticity of the content provider secure container is confirmed, the pricing section 42 prepares PTs according to the UCP contained in the content provider secure container and supplies them to the secure container preparation section 44. Figure 20 shows two price tags, PT A-1 (Figure 20A) and PT A-2 (Figure 20B), prepared according to UCP A of the Figure 12A. A PT contains the information to be specified in "Content ID," "Content Provider ID," "UCP ID," "Service Provider ID," "PT ID," "PT Validity Period," "Pricing Conditions," and "Price."

"Content ID," "Content Provider ID," and "UCP ID" of PTs contain the information specified in the corresponding items of the UCP. That is, "Content ID" of PT A-1 and PT A-2 contains the ID of content A, their "Content Provider ID" contains the ID of the content provider 2-1, and their "UCP ID" contains the ID of UCP A.

"Service Provider ID" contains the ID of the service provider 3 that has provided the given PT. "Service Provider ID" of PT A-1 and PT A-2 contains the ID of the service provider 3. "PT ID" contains the ID assigned to the given PT: "PT ID" of PT A-1 contains the ID of PT A-1 and "PT ID" of PT A-2 contains the ID of PT A-2. "PT Validity Period" contains information about the validity period of the given PT: "PT Validity Period" of PT A-1 contains the validity period of PT A-1 and "PT Validity Period" of PT A-2 contains the validity period of PT A-2.

"Pricing Conditions" consists of "User Conditions" and "Equipment Conditions," as is the case with "Usage Conditions" in UCP. "User Conditions" contains information about the conditions for the user who can select the given PT. "Equipment Conditions" contains information about the conditions for the equipment that can select the given UCP.

In the case of PT A-1, "Pricing Conditions 10" is specified. "User Conditions 10" of "Pricing Conditions 10" contains information ('Male') indicating that the user is male. "Equipment Conditions" of "Pricing Conditions 10" is set to 'No Condition.' Thus, PT A-1 can be selected only by male users.

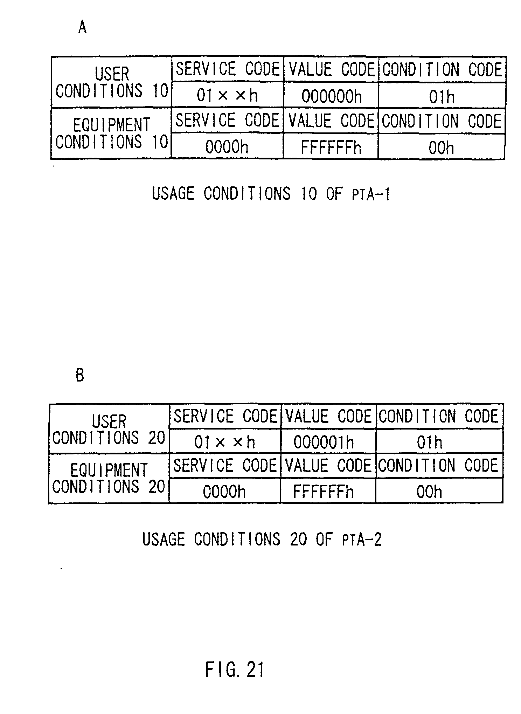

In "User Conditions 10" and "Equipment Conditions 10" of "Pricing Conditions 10", actually, code values of each type of code are set as shown in Figure 21A. "User Conditions 10" of "Pricing Conditions 10" contains a service code 01xxh (Figure 15A) meaning "with condition of sex", a value code 000000h indicating a male, and a condition code 01h (Figure 15B) meaning "=". "Equipment Conditions 10" contains a service code 0000h meaning "No condition", a value code FFFFFFh having no meaning in this case and a condition code 00h meaning "No Condition".

In the case of PT A-2, "Pricing Conditions 20" is specified. "User Conditions 20" of "Pricing Conditions 20" contains information ('Female') indicating that the user is female. "Equipment Conditions" of "Pricing Conditions 20" is set to 'No Condition.' Thus, PT A-2 can be selected only by female users.

In "User Conditions 20" and "Equipment Conditions 20" of "Pricing Conditions 20", actually, code values of each type of code are set as shown in Figure 21B. "User Conditions 20" of "Pricing Conditions 20" contain a service code 01xxh (Figure 15A) meaning "with conditions for sex", a value code 000000h indicating a female, and a condition code 01h (Figure 15B) meaning "=". "Equipment Conditions 20" contains a service code 0000h meaning "No condition", a value code FFFFFFh having no meaning in this case and a condition code 00h meaning "No Condition".

Returning to Figure 20, "Price" of PTs contains the usage charge when the content is used according to the use type (i.e., the price of the rights to use the content according to the specified use type) specified in "Type" of "Usage Details" of the corresponding UCP.

This means that '2000 Yen' specified in "Price 11" on PT A-1 and '1000 Yen' specified in "Price 21" on PT A-2 indicate the purchase price (charge) of the content A since "Type 11" of "Usage Details 11" in UCP A (Figure 12A) is specified to 'Purchase and Reproduce'.

'600 Yen' in "Price 12" of PT A-1 and '300 Yen' in "Price 22" of PT A-2 are the prices of the rights to use the content A according to the use type "First-generation Duplicate" as indicated by "Type 12" of "Usage Details 12" of UCP A. '100 Yen' in "Price 13" of PT A-1 and '50 Yen' in "Price 23" of PT A-2 are the prices of the rights to use the content A according to the use type 'Limited-Time Reproduction' as indicated by "Type 13" of "Usage Details 13" of UCP A. '300 Yen' in "Price 14" of PT A-1 and '150 Yen' in "Price 24" of PT A-2 are the charges when using content A according to the use style to duplicate five times as indicated by "Type 14" of "Usage Details 14" of UCP A.

In this example, when the prices on PT A-1 (applicable to male users) and the prices on PT A-2 (applicable to female users) are compared, it can be seen that the prices on PT A-1 are twice as high as the prices on PT A-2. For example, while "Price 11" on PT A-1 for "Usage Details 11" of UCP A is '2000 Yen,' "Price 21" on PT A-2 for "Usage Details 11" of UCP A is '1000 Yen.' Similarly, the prices specified in "Price 12" to "Price 14" on PT A-1 are twice as high as the prices specified in "Price 22" to "Price 24" on PT A-2. In short, female users can use content A at half the price as compared to male users.

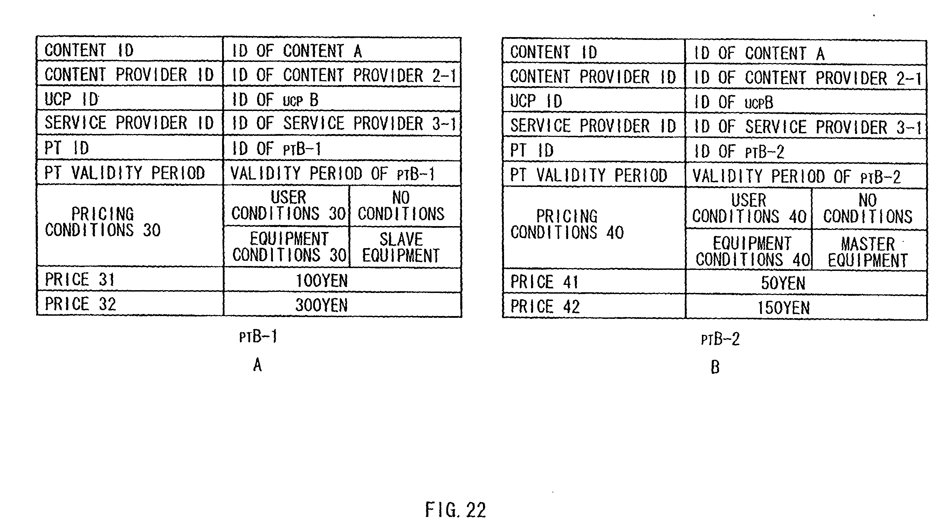

Figure 22 shows PT B-1 and PT B-2 prepared according to UCP B in Figure 12B. PT B-1 in Figure 22A includes the ID of content A, ID of content provider 2-1, ID of UCP B, validity period of UCP B, Id of service provider 3-1, ID of PT B-1, validity period of PT B-1, pricing condition 30, and two types of prices 31 and 32.

"User Conditions 30" of "Pricing Conditions 30" in PT B-1 is set to "No Condition" and "Equipment Conditions 30" contains information ('Slave Equipment') which conditions the equipment to be a slave equipment. Therefore, PT B-1 can be selected only when the content A is used by the slave equipment.

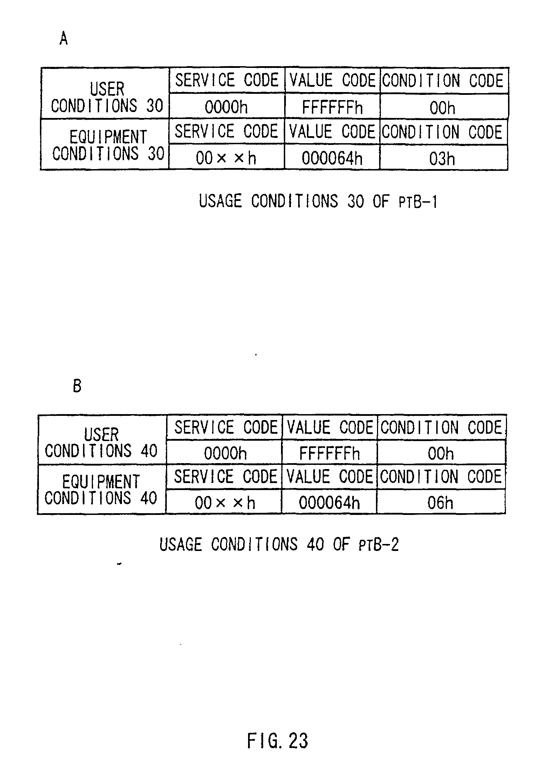

In "User Conditions 30" and "Equipment Conditions 30" of "Pricing Conditions 30", actually, code values of each type of code are set as shown in Figure 23A. "User Conditions 30" contains a service code 0000h (Figure 15A) meaning "No Condition", a value code FFFFFFh having no meaning in this case, and a condition code 00h (Figure 15B) meaning "No Condition". "Equipment Conditions 30" is specified in "Slave equipment", therefore the service code is set to 00xxh meaning "With Conditions for Equipment", the value code is set to 000064h indicating "value 10" and the condition code is set to 03h meaning "< (smaller)". In this example, such code values are set since the equipment number is set at below number 100 for the slave equipment.

'100 Yen' in "Price 31" on PT B-1 is the price when reproduction is performed four times as "Type 21" of "Usage Details 21" of UCP B (Figure 12B) indicates 'Pay Per Play 4'. Also, '300 Yen' in "Price 32" is the price when duplication is performed two times as "Type 22" of "Usage Details 22" of UCP A indicates 'Pay Per Play 2'.

PT B-2 prepared according to UCP B includes, as shown in Figure 22B, the ID of content A, ID of content provider 2-1, ID of UCP B, UCP B, ID of service provider 3-1, ID of PT B-2, validity period of PT B-2, pricing condition 40, and two types of prices 41 and 42.

"User Conditions 40" of "Pricing Conditions 40" in PT B-2 is set to "No Condition" and "Equipment Conditions 40" contains information ('Master Equipment') which conditions the equipment to be a master equipment. In short, PT B-2 can be selected only when the content A is used by the master equipment.

In "User Conditions 40" and "Equipment Conditions 40" of "Pricing Conditions 40", actually, code values of each type of code are set as shown in Figure 23B. "User Conditions 40" of "Pricing Conditions 40" contains a service code 0000h (Figure 15A) meaning "No Condition", a value code FFFFFFh having no meaning in this case, and a condition code (15B) 00h meaning "No Condition". In "Equipment Conditions 40", the service code is set to 00xxh meaning "With Condition for Equipment", the value code is set to 000064h indicating "value 100" and the condition code is set to 06h meaning "= > (equal or larger)".

The prices indicated in "Price 41" and "Price 42" on PT B-2 are charges when using the content A according to the use type indicated in each "Type 21" of "Usage Details 21" and "Type 22" of "Usage Details 22" in UCP B.

Here, comparing the prices on PT B-1 (applied to the slave equipment) and PT B-2 (applied to the master equipment), the price on PT B-1 is found to be set at two times as much as that on PT B-2. For example, while "Price 31" on PT B-1 indicates '100 Yen', "Price 41" on PT B-2 indicates '50 Yen'. Similarly, while "Price 32" indicates '300 Yen', "Price 42" indicates '150 Yen'

Returning to Figure 19, the policy storage section 43 stores the content's UCP supplied by the content provider 2 and supplies it to the secure container preparation section 44.

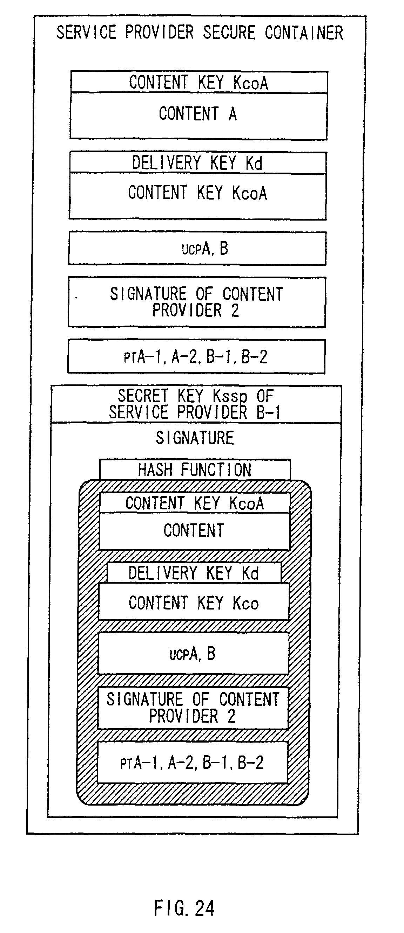

The secure container preparation section 44 prepares a service provider secure container consisting, for example, of the content A (encrypted with a content key KcoA), content key KcoA (encrypted with a delivery key Kd), UCP A, UCP B, signature of the content provider 2, PT A-1, PT A-2, PT B-1, PT B-2, and signature of the service provider, as shown in Figure 24.

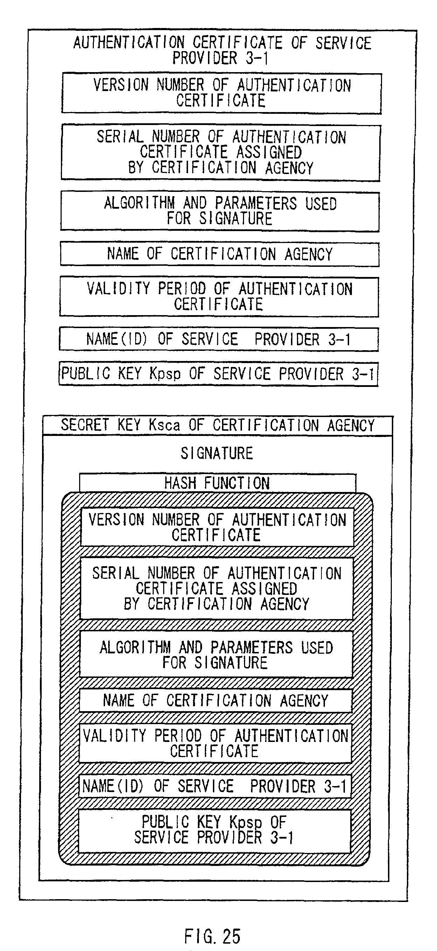

Also, the secure container preparation section 44 supplies the prepared service provider secure container to the user home network 5 by attaching an authentication certificate, such as the one shown in Figure 25, consisting of its version number, its serial number assigned to the service provider 3-1 by the certification agency, the algorithm and parameters used for the signature, the name of the certification agency, the validity period of the authentication certificate, the name and public key Kpsp of the service provider 3-1, and the signature of the certification agency.

Returning to Figure 19, the policy storage section 43 stores the content's UCP supplied by the content provider 2 and supplies it to the secure container preparation section 44.

The secure container preparation section 44 prepares a service provider secure container consisting, for example, of the content A (encrypted with a content key KcoA), content key KcoA (encrypted with a delivery key Kd), UCP A, signature of the content provider 2, PT A-1, PT A-2, and signature of the service provider, as shown in Figure 17.

Also, the secure container preparation section 44 supplies the prepared service provider secure container to the user home network 5 by attaching an authentication certificate, such as the one shown in Figure 18, consisting of its version number, its serial number assigned to the service provider 3 by the certification agency, the algorithm and parameters used for the signature, the name of the certification agency, the validity period of the authentication certificate, the name and public key Kpsp of the service provider 3, and the signature of the certification agency.

Returning to Figure 19 again, the mutual authentication section 45 performs mutual authentication with the content provider 2 before receiving the content provider secure container from the content provider 2. It also performs mutual authentication with the user home network 5 before sending the service provider secure container to the user home network 5. However, this mutual authentication is not performed if, for example, the network 4 is a communication satellite network. In this example, since the content provider secure container and service provider secure container do not contain secret information, the service provider 3 need not necessarily perform mutual authentication with the content provider 2 and user home network 5.

The service provider 3-2 has basically the same configuration as the service provider 3-1, therefore explanation with drawings will be omitted.

(5) User home network

(5-1) Receiver 51

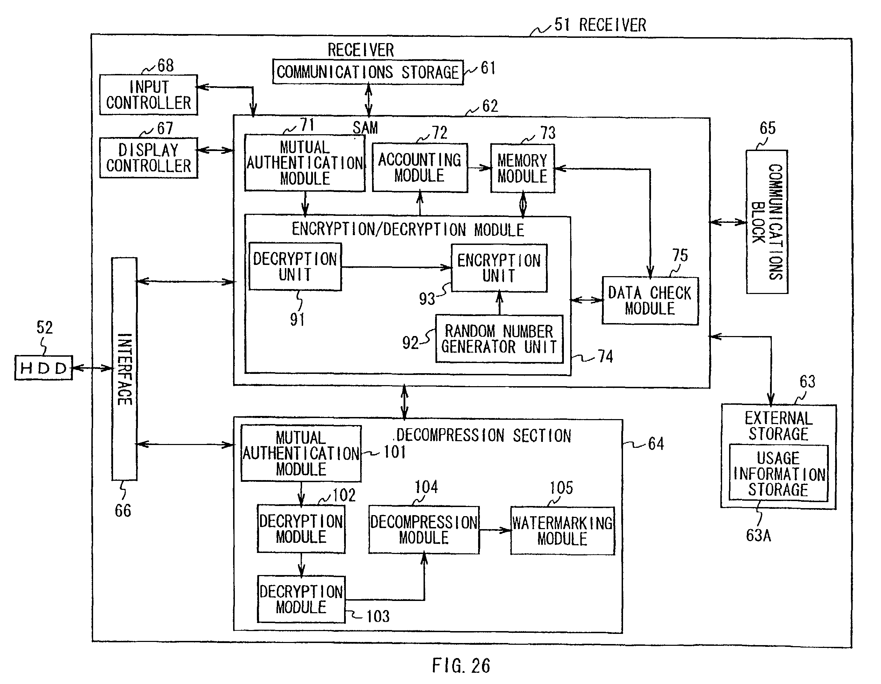

With reference to the block diagram in Figure 26, an example configuration of the receiver 51 in the user home network 5 will be explained. The receiver 51 consists of a communications block 61, SAM 62, external storage 63, decompression section 64, communications block 65, interface 66, display controller 67, and input controller 68. The communications block 61 of the receiver 51 communicates with the service provider 3 or the EMD service center 1 through the network 4, sending and receiving necessary information.

SAM 62 consists of a mutual authentication module 71, accounting module 72, memory module 73, encryption/decryption module 74, and data check module 75. It is made up of single-chip ICs designed exclusively for cryptographic use. It has a multi-layer construction in which the memory cells inside are sandwiched by dummy layers of aluminum and the like. Since it operates at a small range of voltage or frequency, it is difficult to read data illegally from outside (tamperproof).

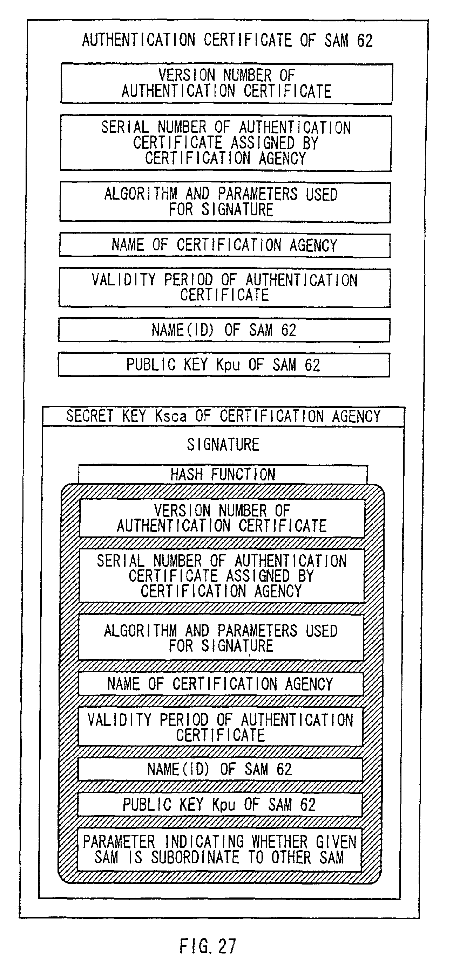

The mutual authentication module 71 of SAM 62 sends SAM 62 authentication certificate shown in Figure 27 stored in the memory module 73 to the partner of mutual authentication, performs mutual authentication, and supplies the temporary key Ktemp (session key) consequently shared by the partner of mutual authentication to the encryption/decryption module 74. The authentication certificate of SAM contains information that corresponds to the information contained in the authentication certificate (Figure 18) of the content provider 2-1 and authentication certificate (Figure 25) of the service provider 3-1. Therefore, its description is omitted.

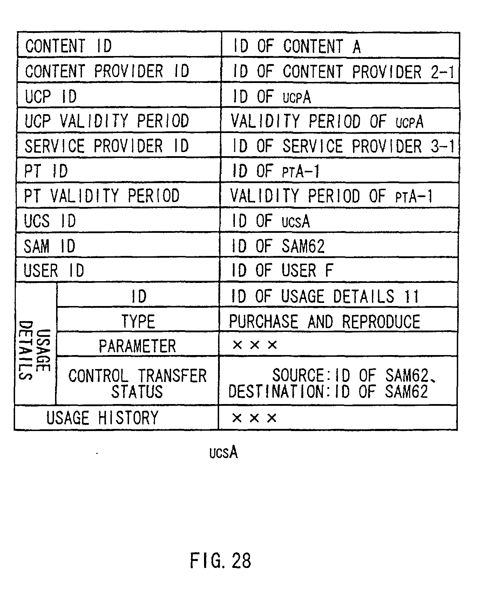

The accounting module 72 prepares usage control status (UCS) and accounting information based on the usage details of the selected UCP. Figure 28 shows an example of UCS when the rights for content have been purchased according to the use type 'Purchase and Reproduce.' It shows UCS A generated based on the usage details 13 in UCP A shown in Figure 20 and "Price 13" on PT A-1 shown in Figure 20A. As shown in Figure 28, UCS contains the information specified in "Content ID," "Content Provider ID," "UCP ID," "UCP Validity Period," "Service Provider ID," "PT ID," "PT Validity Period," "UCS ID," "SAM ID," "User ID," "Usage Details," and "Usage History."

"Content ID," "Content Provider ID," "UCP ID," "UCP Validity Period," "Service Provider ID," "PT ID," "PT Validity Period" of UCS contain the information specified in the corresponding items of the PT. Thus, in the case of UCS A in Figure 28, "Content ID" contains the ID of content A, "Content Provider ID" contains the ID of the content provider 2, "UCP ID" contains the ID of UCP A, "UCP Validity Period" contains the validity period of UCP A, "Service Provider ID" contains the ID of the service provider 3, "PT ID" contains the ID of PT A-1, and "PT Validity Period" contains the validity period of PT A-1.

"UCS ID" contains the ID assigned to the given UCS, and thus "UCS ID" of UCS A contains the ID of UCS A. "SAM ID" contains the ID of the equipment and "SAM ID" of UCS A contains the SAM 62 ID of the receiver 51. "User ID" contains the ID of the user who uses the content and "User ID" of UCS A contains the ID of user F.

"Usage Details" consists of items "ID," "Type," "Parameter," and "Control Transfer Status." Of these items, "ID," "Type," and "Parameter" contain the information specified in the corresponding items of "Usage Details" of the selected UCP. Thus, "ID" of UCSA contains the information (ID of Usage Details 13) specified in "ID 13" of "Usage Details 13" of UCP A, "Type" is set to 'Limited-Time Reproduction' specified in "Type 13" of "Usage Details 13," and "Parameter" contains the information (Start Time and End Time) specified in "Parameter 13" of "Usage Details 13."

"Control Transfer Status" of "Usage Details" contains the respective IDs of the source equipment (equipment that has purchased the content) and destination equipment if "Control Transfer Permission Information" of the selected UCP is set to 'Permitted' (i.e., control transfer is possible). If no control transfer is performed, both the ID of the source equipment and the ID of the destination equipment are used as the ID of the source equipment. If "Control Transfer Permission Information" of the UCP is set to 'Not Permitted,' "Control Transfer Status" should be set to 'Not Permitted.' In that case, control transfer of the content is not performed (not permitted). In "Control Transfer Status" of UCS A, the IDs of both source and destination equipment are set to the ID of SAM 62 because "Control Transfer Permission Information 13" of "Usage Details 13" of UCP A is set to 'Permitted' and because the control of content A is not transferred.

"Usage History" contains the history of use types for the same content. Only information that represents 'Purchase and Reproduce' is stored now in "Usage History" of UCS A. For example, if the receiver 51 has used content A before, information that represents the then use type is also stored.

In the case of the UCS described above, "UCP Validity Period" and "PT Validity Period" have been specified. However, these items may not be specified for the UCS. Also, although "Content Provider ID" has been specified for the above UCS, it may not be specified if the UCP ID is unique enough to identify the content provider. Similarly, "Service Provider ID" may not be specified if the PT ID is unique enough to identify the service provider.

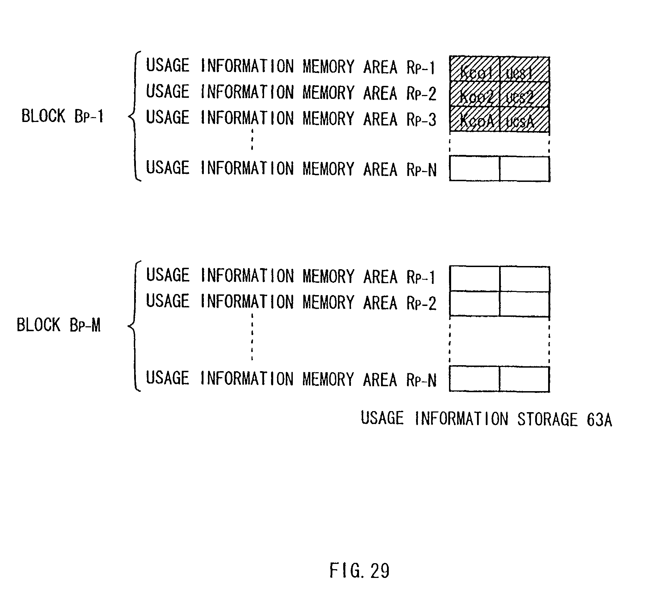

The UCS prepared is sent to the external storage 63 and stored in its usage information storage 63A, together with the content keys Kco (encrypted with a save key Ksave) supplied by the decryption unit 91 of the encryption/decryption module 74 of the receiver 51. As shown in Figure 29, the usage information storage 63A of the external storage 63 are divided into M number of blocks (1 MB each, for example) : BP-1 to BP-M. Each block BP, in turn, is divided into N number of usage information memory areas: RP-1 to RP-N. The content keys Kco (encrypted with a save key Ksave) and UCS supplied by SAM 62 are stored, in matched pairs, in the appropriate usage information memory areas RP of the usage information storage 63A.

In the example of Figure 29, the UCS A shown in Figure 28 and the content key KcoA (encrypted with a save key Ksave) for decrypting cintent A are stored, in matched pairs, in the usage information memory area RP-3 of the block BP-1. Other content keys Kcol and Kco2 (encrypted with a save key Ksave) and usage control status UCS 1 and 2 are stored in the usage information memory areas RP-1 and RP-2 of the block BP-1. The usage information memory areas RP-4 (not shown) to RP-N of the block BP-1 as well as blocks BP-2 (not shown) to BP-M do not store any content key Kco or usage control status UCS and contain the initial information which indicates that they are empty. Hereafter, the content keys Kco (encrypted with a save key Ksave) and UCS stored in the usage information memory areas RP will be collectively referred to as usage information if there is no need to treat them separately.

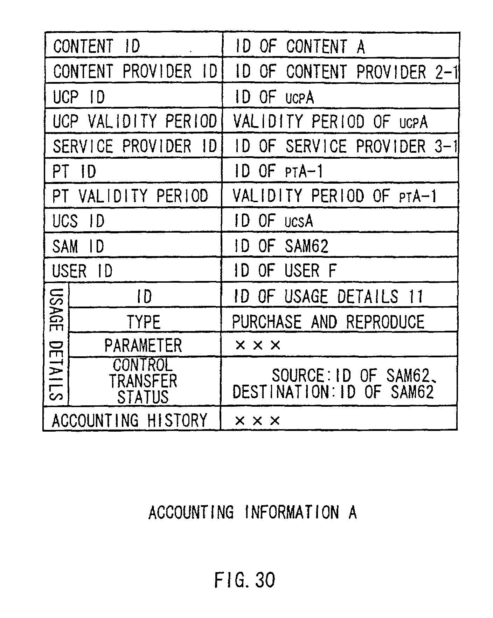

Figure 30 shows the accounting information A prepared together with UCS A shown in Figure 28. As shown in Figure 30, accounting information contains items such as "Content ID," "Content Provider ID," "UCP ID," "UCP Validity Period," "Service Provider ID," "PT ID," "PT Validity Period," "UCS ID," "SAM ID," "User ID, " "Usage Details," and "Accounting History."

"Content ID," "Content Provider ID," "UCP ID, " "UCP Validity Period," "Service Provider ID," "PT ID," "PT Validity Period," "UCS ID," "SAM ID," "User ID," and "Usage Details" of the accounting information contain the information specified in the corresponding items of the UCS. Thus, in the case of the accounting information A in Figure 30, "Content ID" contains the ID of the content A, "Content Provider ID" contains the ID of the content provider 2-1, "UCP ID" contains the ID of UCP A, "UCP Validity Period" contains the validity period of UCP A, "Service Provider ID" contains the ID of the service provider 3-1, "PT ID" contains the ID of PT A-1, "PT Validity Period" contains the validity period of PT A-1, "UCS ID" contains the ID of UCS A, "SAM ID" contains the ID of SAM 62, "User ID" contains the ID of user F, and "Usage Details" contains the information specified in "Usage Details 13" of UCS A.

"Accounting History" of accounting information contains information indicating the total of the accounts calculated in equipment. "Accounting History" of accounting information A contains the total of the accounts calculated in the receiver 51.

In the accounting information descried above, although "UCP Validity Period" and "PT Validity Period" have been specified, they may not be specified for the UCS. Also, although "Content Provider ID" has been specified in the accounting information described above, it may not be specified if the UCP ID is unique enough to identify the content provider. Similarly, "Service Provider ID" may not be specified if the PT ID is unique enough to identify the service provider.

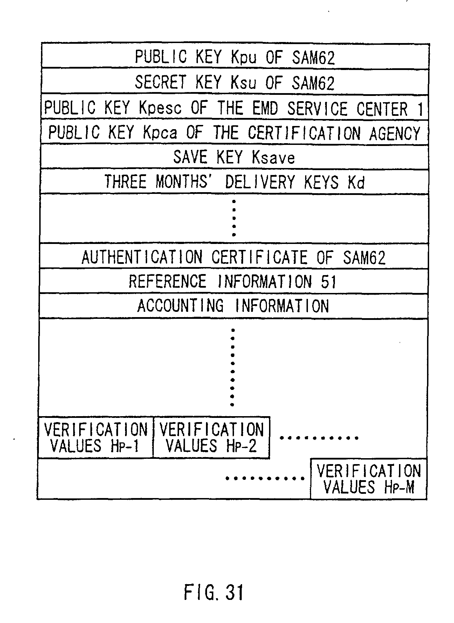

Returning to Figure 26, the memory module 73 stores keys such as the public key Kpu of SAM 62, the secret key Ksu of SAM 62, the public key Kpesc of the EMD service center 1, the public key Kpca of the certification agency, the save key Ksave, and three months' delivery keys Kd, the authentication certificate of SAM 62 (Figure 27), accounting information (for example, the accounting information A in Figure 30), reference information 51, and M number of verification values HP-1 to HP-M, as shown in Figure 31.

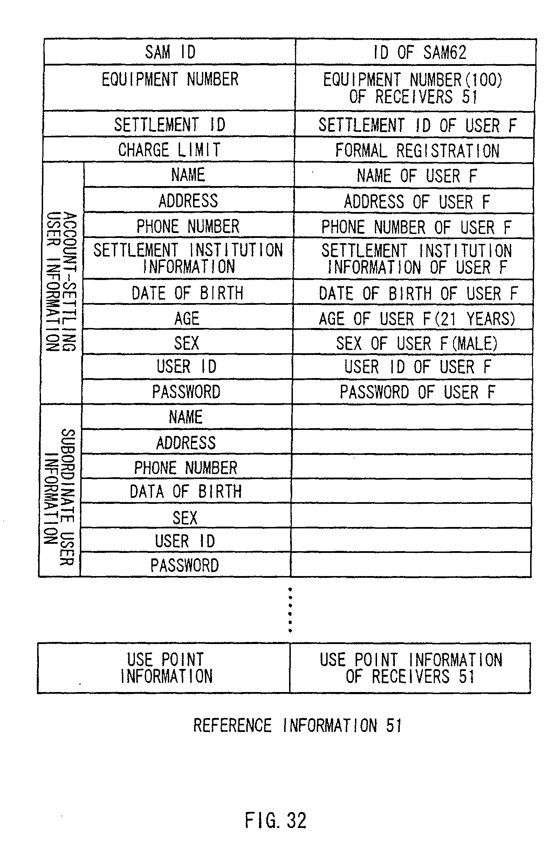

Figure 32 shows the reference information 51 stored in the memory module 73. The reference information contains predetermined information specified for each of the items of "SAM ID," "Equipment Number," "Settlement ID," "Charge Limit," "Account-Settling User Information," "Subordinate User Information," and "Use Point Information."

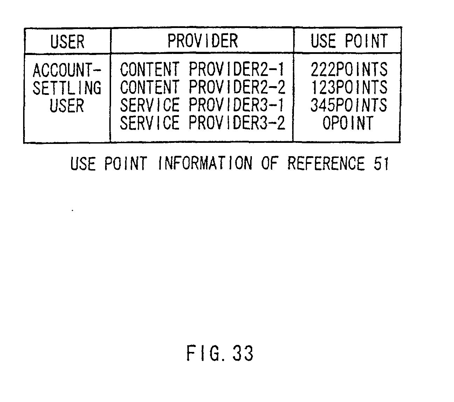

"SAM ID," "Equipment Number," "Settlement ID," "Account-Settling User Information," "Subordinate User Information," and "Use Point Information" of the reference information contains the information specified for the items corresponding to the ID of SAM 62 in the system registration information (Figure 9) managed by the user management section 18 of the EMD service center 1. Thus, the reference information 51 contains the ID of SAM 62, equipment number (100) of SAM 62, settlement ID of user F, account-settling user information of user F (general information (the name, address, phone number, settlement institution information, date of birth, age, and sex), ID, and password of user F), and the same information shown by the use point information (Figure 10A) shown in Figure 33.

"Charge Limit" contains the upper limit on amounts charged, which varies depending on whether the given equipment is registered formally or temporality. "Charge Limit" of the reference information 51 contains the upper limit on amounts charged for formally registered equipment ('Formal Registration') because the receiver 51 has been formally registered. The upper limit of amounts charged when formally registered is higher than the upper limit of amounts charged when temporarily registered.

Next, M number of the verification values HP-1 to HP-M stored in the memory module 73 shown in Figure 31 will be explained. The verification value HP-1 is the hash value obtained by the application of a hash function to all the data stored in block BP-1 of the usage information storage 63A (Figure 29) of the external storage 63. The verification values HP-2 to HP-M are hash values obtained by the application of the hash function to the data stored in the corresponding blocks BP-2 to BP-M of the external storage 63, as is the case with the verification value HP-1.

Returning to Figure 26, the encryption/decryption module 74 of SAM 62 consists of an decryption unit 91, random number generator unit 92, and encryption unit 93. The decryption unit 91 decrypts the encrypted content key Kco with the delivery key Kd and outputs the results to the encryption unit 93. The random number generator unit 92 generates a random number with predetermined digits during mutual authentication, generates a temporary key Ktemp as required, and outputs them to the encryption unit 93 as required (for example, during mutual authentication).

The encryption unit 93 encrypts the decrypted content key Kco again with the save key Ksave stored in the memory module 73. The encrypted content key Kco is supplied to the external storage 63. When sending the content key Kco to the decompression section 64, the encryption unit 93 encrypts it with the temporary key Ktemp generated by the random number generator unit 92.

The data check module 75 checks the data in a block BP of the usage information storage 63A of the external storage 63 for falsification by comparing the hash value of the data stored in the block BP with the corresponding verification value HP stored in the memory module 73. The data check module 75 also recalculates the verification value HP when purchase, use and control transfer of content take place and stores (updates) it in the memory module 73.

The decompression section 64 consists of a mutual authentication module 101, decryption module 102, decryption module 103, decompression module 104, and watermarking module 105. The mutual authentication module 101 performs mutual authentication with SAM 62 and outputs the temporary key Ktemp to the decryption module 102. The decryption module 102 uses the temporary key Ktemp to decrypt the content key Kco encrypted by the temporary key Ktemp, and outputs the results to the decryption module 103. The decryption module 103 decrypts the content recorded on the HDD 52, with the content key Kco, and outputs the results to the decompression module 104. The decompression module 104 further decompresses the decrypted content by a method such as ATRAC2 and outputs the results to the watermarking module 105. The watermarking module 105 watermarks information (such as SAM 62 ID) in the content for identification of the receiver 51 and outputs the results to speakers (not shown) to reproduce music.

The communications block 65 communicates with the receivers 201 of the user home network 5. The interface 66 converts the signals from SAM 62 and the decompression section 64 into a specified form and outputs the results to the HDD 52. It also converts the signals from the HDD 52 into a specified form and outputs the results to SAM 62 and the decompression section 64.

The display controller 67 controls the output to a display unit (not shown). The input controller 68 controls the input from an operator panel (not shown) consisting of various buttons.

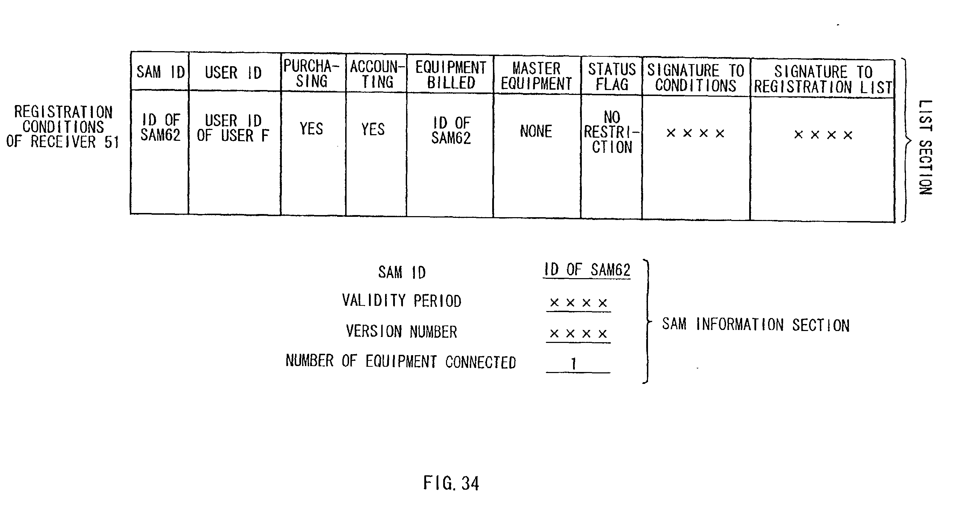

The HDD 52 stores registration lists like the one shown in Figure 34 in addition to the content and the like supplied by the service provider 3. The registration list consists of the list section that stores tabulates information and the SAM information section that stores specified information about the equipment that possesses the given registration list.

The SAM information section stores (in the "SAM ID" field) the SAM ID of the equipment that possesses the given registration list, in this example, the SAM 62 ID of the receiver 51. It also stores the validity period of the registration list (in the "Validity Period" field), version number of the registration list (in the "Version Number" field), and number of equipment connected (including this equipment) (in the "Number of Equipment Connected" field), which is three in total, in this example, including the receiver 51 itself and the two receivers 201 and 301 connected to it.

The list section consists of nine items "SAM ID, " "User ID," "Purchasing," "Accounting," "Equipment Billed," "Master Equipment," "Status Flag," "Signature to Conditions," and "Signature to Registration List" and, in this example, stores the registration conditions of the receivers 51, 201 and 301.

"SAM ID" stores the SAM ID of the equipment. In this example, the SAM 62 ID of the receiver 51 is stored. "User ID" stores the ID of the user of corresponding equipment. In this example, the ID of user F is stored.

"Purchasing" stores information ('Yes' or 'No') which indicates whether content can be purchased. In this example, since the receivers 51 can purchase content, 'Yes' is stored. "Accounting" stores information ('Yes' or 'No') which indicates whether accounting can be performed in communication with the EMD service center 1. In this example, the receivers 51 can perform accounting since the user F is registered as an account-settling user and thus the appropriate rows of the "Accounting" column store 'Yes.' "Equipment Billed" stores the SAM ID of the equipment with which accounts are settled. In this example, since the receivers 51 (SAM 62) can perform accounting for themselves, SAM 62 ID is stored.

"Master Equipment" stores the SAM ID of the connected equipment that can provide content if the given equipment receives content from other equipment connected rather than from the service provider 3. In this example, the receiver 51 receives content from the service provider 3, so information ('None') which indicates that there is no equipment providing content is stored.

"Status Flag" stores any restrictions to the operation of the appropriate equipment. If there is no such restriction, appropriate information ('No Restriction') is stored. If there are any restrictions or if there is any condition that will stop the operation, appropriate information ('Restricted' or 'Stop,' respectively) is stored. For example, if settlement of accounts has failed, or if user-crediting process for formal registration has not been completed (or on temporary registration) "Status Flag" of that equipment is set to 'Restricted.' In this example, the equipment with its "Status Flag" set to 'Restricted' can use the content already purchased, but cannot purchase new content. In short, certain restrictions are placed on the equipment. Besides, if illegal acts such as illegal duplication of content are detected, "Status Flag" is set to 'Stop' and the operation of the equipment is stopped. Consequently, the equipment can no longer receive any service from the EMD system.

In this example, no restriction is placed on the receivers 51 and their "Status Flag" is set to 'No Restriction.'

"Signature to Conditions" stores the signature of the EMD service center 1 to the information stored in "SAM ID," "User ID," "Purchasing, " "Accounting," "Equipment Billed," "Master Equipment," and "Status Flag." In this example, a signature to registration conditions of the receiver 51 is stored. "Signature to Registration List" stores the signature to the entire data specified in the registration list.

(5-2) Receiver 201

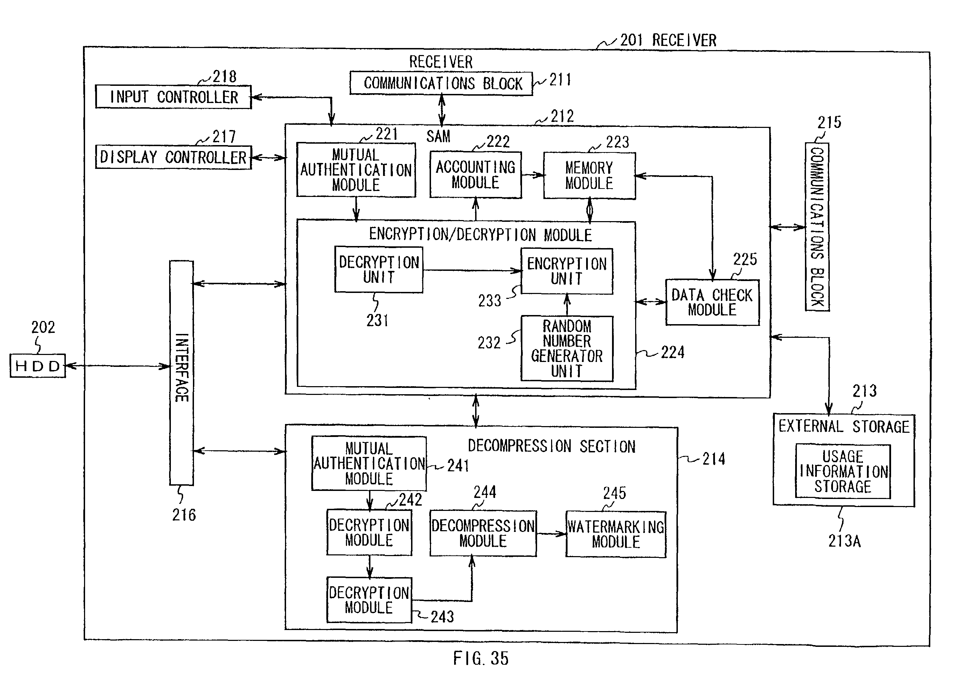

Figure 35 shows an example configuration of the receiver 201. The components from the communications block 211 to input controller 218 of the receiver 201 have functions similar to those of the communications block 61 to the input controller 68 of the receiver 51. Thus, their detailed description is omitted where possible.

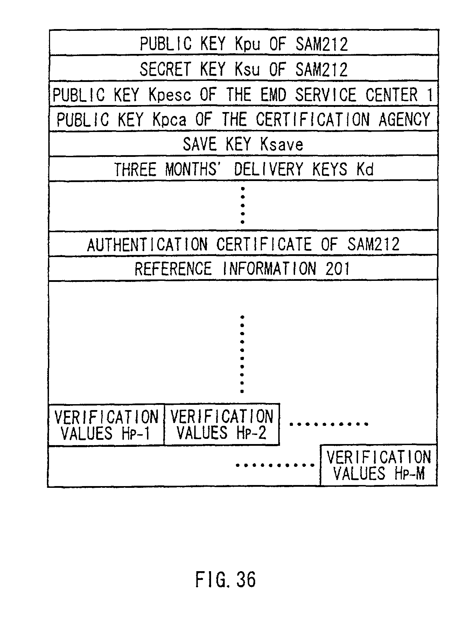

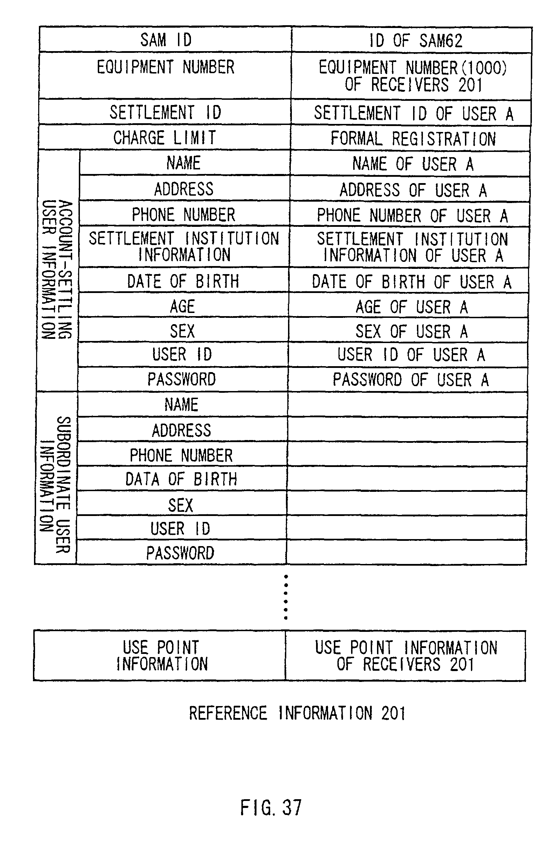

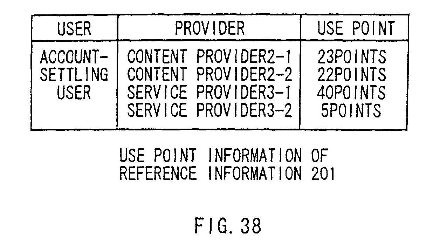

The memory module 223 of SAM 212 stores public key Kpu of SAM 212, secret key Ksu of SAM 212, public key Kpesc of EMD service center 1, public key Kpca of certification agency, save key Ksave, three months' delivery key Kd, authentication certificate of SAM 212 distributed from the certification agency in advance and reference information 201, as shown in Figure 36. The reference information 201 contains, as shown in Figure 37, the ID of SAM 212, equipment number (100) of receiver 201, settlement ID of user A, account-settling user information of user A (general information (the name, address, phone number, settlement institution information, date of birth, age, and sex), ID, and password of user A), and use point information shown in Figure 38 (the same information as the one shown in Figure 10B) .

HDD 202 has functions to those of HDD 52, and thus description thereof is omitted.

(6) Purchasing and utilization of content

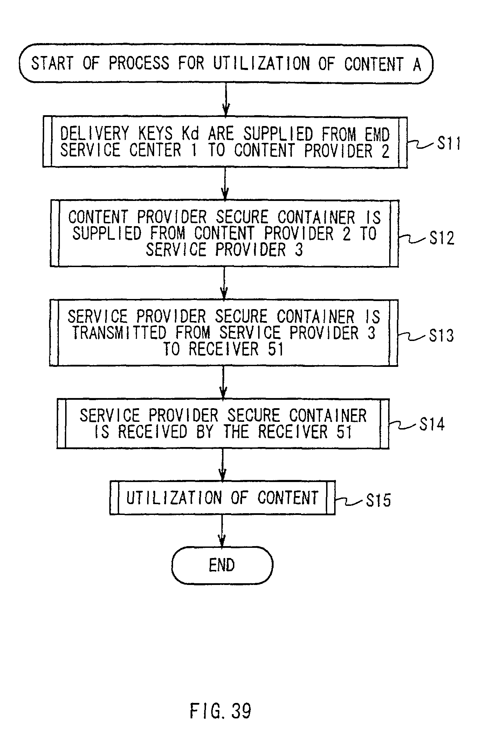

Now the processing in the EMD system will be described with reference to the flow chart in Figure 39. Here it is assumed that the content A in the content provider 2-1 is supplied to and used by the receiver 51 of the user home network 5 via the service provider 3-1.

(6-1) Transmission of delivery keys from EMD service center to content provider

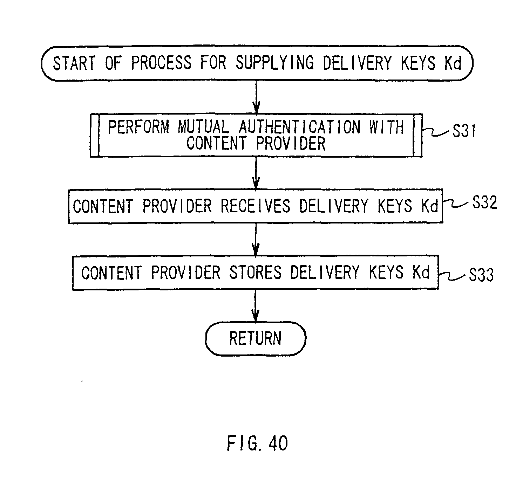

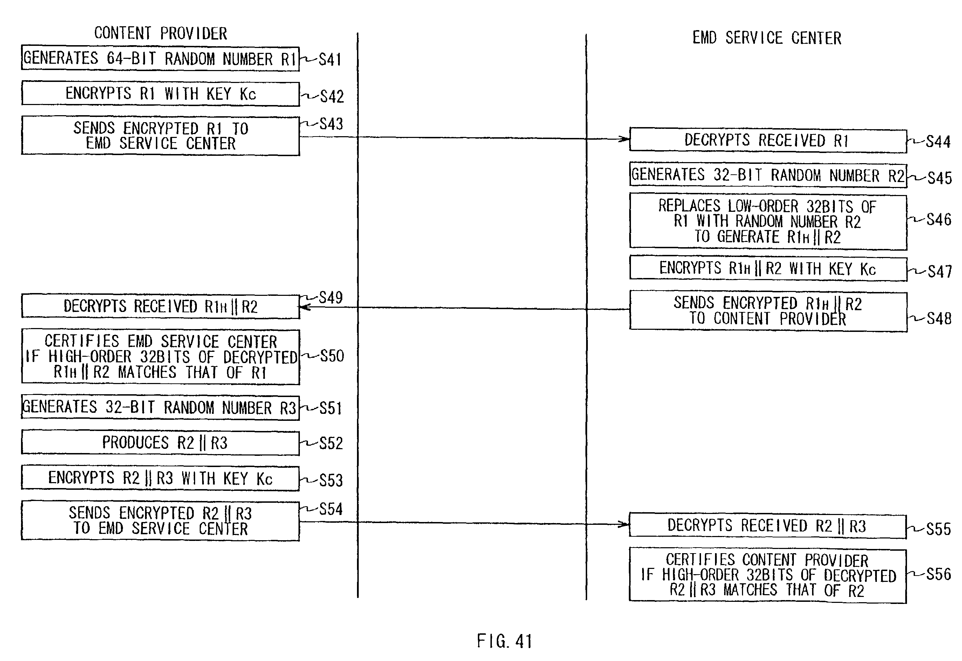

In Step S11, the delivery keys Kd are supplied to the content provider 2-1 by the EMD service center 1. Details of this process is shown in the flow chart of Figure 40. In Step S31, the mutual authentication section 17 of the EMD service center 1 performs mutual authentication with the mutual authentication section 39 of the content provider 2-1. When the authenticity of the content provider 2-1 is verified, the content provider management section 12 of the EMD service center 1 sends the delivery keys Kd supplied by the key server 14, to the content provider 2-1. Details of mutual authentication will be described later with reference to Figures 41 to 43.

In Step S32, the encryption section 36 of the content provider 2-1 receives the delivery keys Kd sent from the EMD service center 1, and stores them in Step S33.

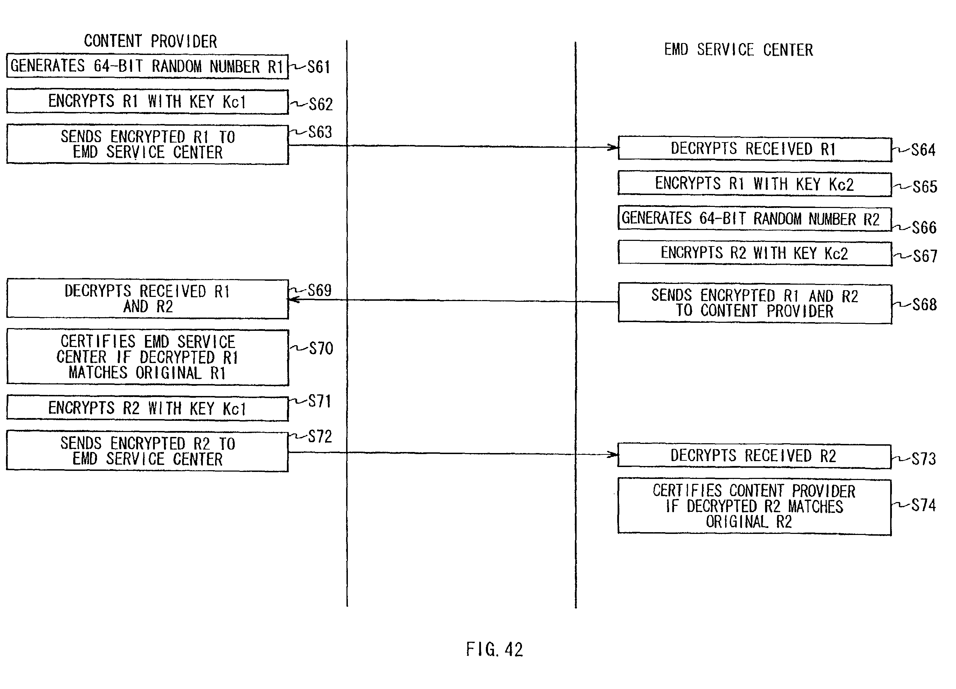

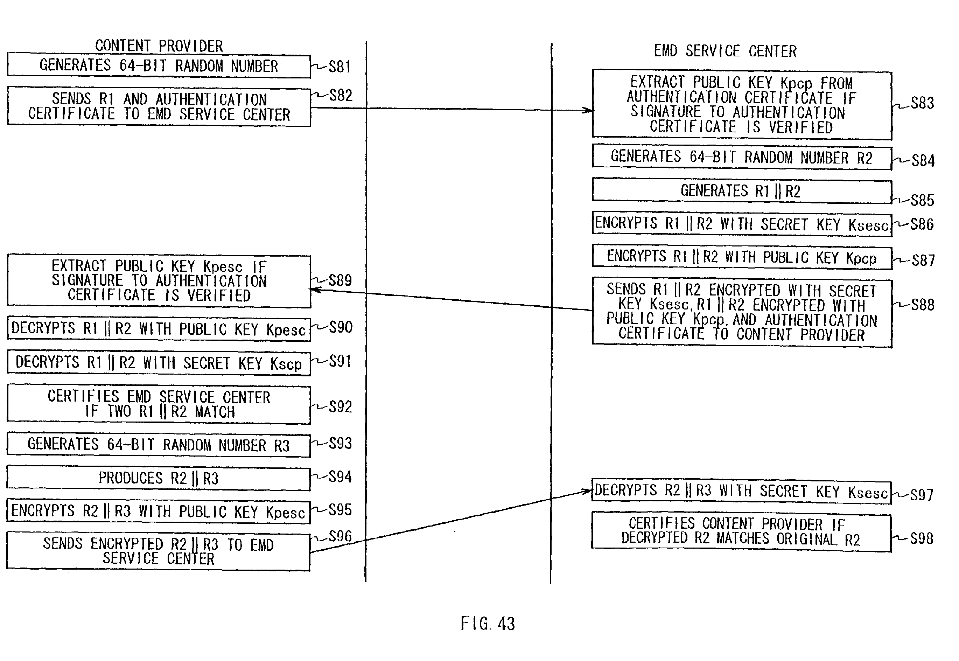

When the encryption section 36 of the content provider 2-1 stores the delivery keys Kd, the process of Step S11 finishes and Step S12 in Figure 39 begins. Before explaining the process of Step S12, the mutual authentication (process of checking for spoofing) in Step S31 of Figure 40 will be described, taking the case in which one common key is used (Figure 41), the case in which two common keys are used (Figure 42), and the case in which a public key is used (Figure 43).

Figure 41 is a flow chart which describes the use of one common key in common-key DES cryptography for the operation of mutual authentication between the mutual authentication section 39 of the content provider 2 and mutual authentication section 17 of the EMD service center 1. In Step S41, the mutual authentication section 39 of the content provider 2 generates a 64-bit random number R1 (it may also be generated by the random number generator section 35). In Step S42, the mutual authentication section 39 of the content provider 2 DES-encrypts the random number R1 with a prestored common key Kc (it is also possible to make the encryption section 36 perform the encryption) . In Step S43, the mutual authentication section 39 of the content provider 2 sends the encrypted random number R1 to the mutual authentication section 17 of the EMD service center 1.

In Step S44, the mutual authentication section 17 of the EMD service center 1 decrypts the received random number R1 with a prestored common key Kc. In Step S45, the mutual authentication section 17 of the EMD service center 1 generates a 32-bit random number R2. In Step S46, the mutual authentication section 17 of the EMD service center 1 replaces the low-order 32 bits of the decrypted 64-bit random number R1 with the random number R2 to generate a concatenation $R1_H \| R2$, where $Ri_H$ is the high order n bits of Ri and $A \| B$ is a concatenation of A and B (the low-order n bits of A and m-bit B are concatenated to produce n+m bits) . In Step S47, the mutual authentication section 17 of the EMD service center 1 DES-encrypts $R1_H \| R2$ with the common key Kc. In Step S48, the mutual authentication section 17 of the EMD service center 1 sends the encrypted $R1_H \| R2$ to the content provider 2.

In Step S49, the mutual authentication section 39 of the content provider 2 decrypts the received $R1_H \| R2$ with the common key Kc. In Step S50, the mutual authentication section 39 of the content provider 2 checks the high-order 32 bits of the decrypted $R1_H \| R2$ against the high-order 32 bits $R1_H$ of the random number R1 generated in Step S41, and if they match, it certifies that the EMD service center 1 is legitimate. If the generated $R1_H$ and received $R1_H$ do not match, the process is terminated. If they match, the mutual authentication section 39 of the content provider 2 generates a 32-bit random number R3 in Step S51. In Step S52, the mutual authentication section 39 of the content provider 2 produces a concatenation $R2 \| R3$ by placing the random number R2, which is the low-order 32 bits taken out of the received and decrypted $R1_H \| R2$, in the high-order position and placing the generated random number R3 in the low-order position. In Step S53, the mutual authentication section 39 of the content provider 2 DES-encrypts $R2 \| R3$ with the common key Kc. In Step S54, the mutual authentication section 39 of the content provider 2 sends the encrypted concatenation $R2 \| R3$ to the mutual authentication section 17 of the EMD service center 1.

In Step S55, the mutual authentication section 17 of the EMD service center 1 decrypts the received concatenation $R2 \| R3$ with the common key Kc. In Step S56, the mutual authentication section 17 of the EMD service center 1 checks the high-order 32 bits of the decrypted concatenation $R2 \| R3$ against the random number R2. If they match, it certifies that the content provider 2 is legitimate. If they do not, it terminates the process, determining that the content provider 2 is illegitimate.

Figure 42 is a flow chart which describes the use of two common keys Kc1 and Kc2 in common-key DES cryptography for the operation of mutual authentication between the mutual authentication section 39 of the content provider 2 and mutual authentication section 17 of the EMD service center 1. In Step S61, the mutual authentication section 39 of the content provider 2 generates a 64-bit random number R1. In Step S62, the mutual authentication section 39 of the content provider 2 DES-encrypts the random number R1 with a prestored common key Kc1. In Step S63, the mutual authentication section 39 of the content provider 2 sends the encrypted random number R1 to the EMD service center 1.

In Step S64, the mutual authentication section 17 of the EMD service center 1 decrypts the received random number R1 with a prestored common key Kc1. In Step S65, the mutual authentication section 17 of the EMD service center 1 encrypts the random number R1 with a prestored common key Kc2. In Step S66, the mutual authentication section 17 of the EMD service center 1 generates a 64-bit random number R2. In Step S67, the mutual authentication section 17 of the EMD service center 1 encrypts the random number R2 with the common key Kc2. In Step S68, the mutual authentication section 17 of the EMD service center 1 sends the encrypted random numbers R1 and R2 to the mutual authentication section 39 of the content provider 2.

In Step S69, the mutual authentication section 39 of the content provider 2 decrypts the received random numbers R1 and R2 with a prestored common key Kc2. In Step S70, the mutual authentication section 39 of the content provider 2 checks the decrypted random number R1 against the random number R1 generated in Step S61 (the random number R1 before encryption) . If they match, it certifies that the EMD service center 1 is legitimate. If they do not match, it terminates the process, determining that the EMD service center 1 is illegitimate. In Step S71, the mutual authentication section 39 of the content provider 2 encrypts the decrypted random number R2 with the common key Kc1. In Step S72, the mutual authentication section 39 of the content provider 2 sends the encrypted random number R2 to the EMD service center 1.

In Step S73, the mutual authentication section 17 of the EMD service center 1 decrypts the received random number R2 with the common key Kc1. In Step S74, the mutual authentication section 17 of the EMD service center 1 checks the decrypted random number R2 against the random number R2 generated in Step S66 (the random number R2 before encryption) . If they match, it certifies that the content provider 2 is legitimate. If they do not, it terminates the process, determining that the content provider 2 is illegitimate.

Figure 43 is a flow chart which describes the use of a 160-bits length elliptic curve in public-key cryptography for the operation of mutual authentication between the mutual authentication section 39 of the content provider 2 and mutual authentication section 17 of the EMD service center 1. In Step S81, the mutual authentication section 39 of the content provider 2 generates a 64-bit random number R1. In Step S82, the mutual authentication section 39 of the content provider 2 sends the random number R1 as well as an authentication certificate (acquired in advance from the certification agency) containing its own public key Kpcp to the mutual authentication section 17 of the EMD service center 1.

In Step S83, the mutual authentication section 17 of the EMD service center 1 decrypts the signature of the received authentication certificate (encrypted with a secret key Ksca of the certification agency) with the secret key Ksca of the certification agency acquired in advance and takes out the hash value of a public key Kpcp of the content provider 2 and a name of the content provider 2. It also takes out the public key Kpcp and name of the content provider 2 contained as plain text in the authentication certificate. If the authentication certificate is a legitimate one issued by the certification agency, it can be decrypted and the resulting hash value of the public key Kpcp and the name of the content provider 2 should match the hash value obtained by the application of a hash function to the public key Kpcp of the content provider 2 and the name of the content provider 2 contained as plain text in the authentication certificate. This proves that the public key Kpcp is the legitimate one that has not been falsified. If the signature cannot be decrypted, or even if it can be, if the hash values do not match, the public key or provider is illegitimate. In that case, the process is terminated.

If the authentication is successful, the mutual authentication section 17 of the EMD service center 1 generates a 64-bit random number R2 in Step S84. In Step S85, the mutual authentication section 17 of the EMD service center 1 generates a concatenation R1‖R2 of the random numbers R1 and R2. In Step S86, the mutual authentication section 17 of the EMD service center 1 encrypts the concatenation R1‖R2 with its own secret key Ksesc. In Step S87, the mutual authentication section 17 of the EMD service center 1 encrypts the concatenation R1‖R2 with the public key Kpcp of the content provider 2 obtained in Step S83. In Step S88, the mutual authentication section 17 of the EMD service center 1 sends the concatenation R1‖R2 encrypted with the secret key Ksesc, the concatenation R1‖R2 encrypted by the public key Kpcp, and authentication certificate (acquired in advance from the certification agency) containing its own public key Kpesc to the mutual authentication section 39 of the content provider 2.

In Step S89, the mutual authentication section 39 of the content provider 2 decrypts the signature of the received authentication certificate with the secret key Kpca of the certification agency acquired in advance, and if it is right, takes out the public key Kpesc from the certificate. This process is the same as in Step S83 and thus description thereof will be omitted. In Step S90, the mutual authentication section 39 of the content provider 2 decrypts the concatenation R1‖R2 encrypted with the secret key Ksesc, by using the public key Kpesc obtained in Step S89. In Step S91, the mutual authentication section 39 of the content provider 2 decrypts the concatenation R1‖R2 encrypted with its own public key Kpcp, by using its own secret key Kscp. In Step S92, the mutual authentication section 39 of the content provider 2 compares the concatenation R1‖R2 decrypted in Step S90 and the concatenation R1‖R2 decrypted in Step S91. If they match, it certifies that the EMD service center 1 is legitimate. If they do not match, it terminates the process, determining that the EMD service center 1 is illegitimate.

If the authentication is successful, the mutual authentication section 39 of the content provider 2 generates a 64-bit random number R3 in Step S93. In Step S94, the mutual authentication section 39 of the content provider 2 generates a concatenation R2‖R3 of the random numbers R2 obtained in Step S90 and the random number R3 generated in Step S93. In Step S95, the mutual authentication section 39 of the content provider 2 encrypts the concatenation R2‖R3 with the public key Kpesc obtained in Step S89. In Step S96, the mutual authentication section 39 of the content provider 2 sends the encrypted concatenation R2‖R3 to the mutual authentication section 17 of the EMD service center 1.

In Step S97, the mutual authentication section 17 of the EMD service center 1 decrypts the encrypted concatenation R2‖R3 with its own secret key Ksesc. In Step S98, the mutual authentication section 17 of the EMD service center 1 checks the decrypted random number R2 against the random number R2 generated in Step S84 (the random number R2 before encryption). If they match, it certifies that the content provider 2 is legitimate. If they do not, it terminates the process, determining that the content provider 2 is illegitimate.

As described above, the mutual authentication section 17 of the EMD service center 1 and the mutual authentication section 39 of the content provider 2 perform mutual authentication. The random numbers used for the mutual authentication are temporary keys Ktemp valid only for the processes subsequent to the given mutual authentication.

(6-2) Transmission of content from content provider to service provider

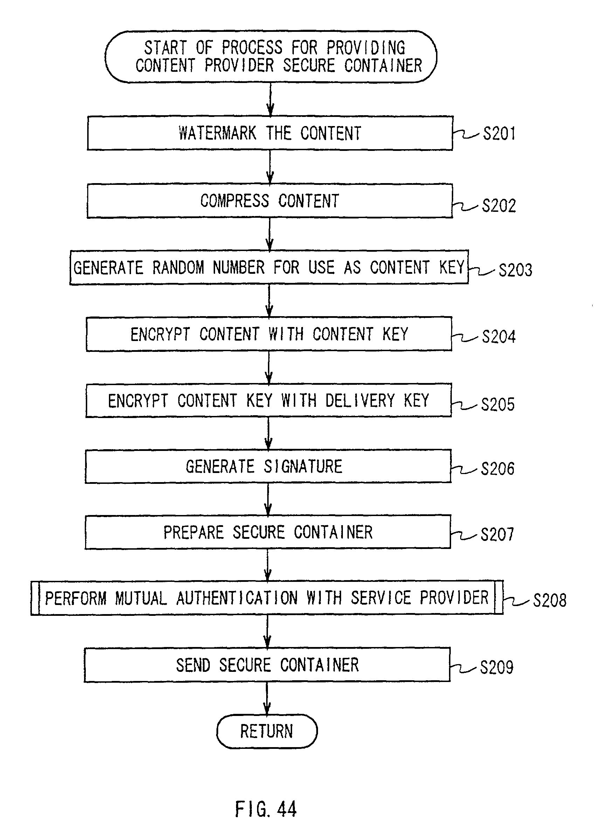

Now the process of Step S12 in Figure 39 will be described. In Step S12, the content provider secure container is supplied from the content provider 2-1 to the service provider 3-1. Details of the process is shown in the flow chart of Figure 44. In Step S201, the watermarking section 32 of the content provider 2-1 reads content A from the content server 31, inserts a predetermined watermark that represents the content provider 2-1, and supplies content A to the compression section 33.

In Step S202, the compression section 33 of the content provider 2-1 compresses the watermarked content A by a predetermined method such as ATRAC2 and supplies it to the encryption section 34. In Step S203, the random number generator section 35 generates a random number for use as a content key KcoA and supplies it to the encryption section 34.

In Step S204, the encryption section 34 of the content provider 2-1 encrypts the watermarked and compressed content A by a predetermined method such as DES by using the random number (content key KcoA) generated by the random number generator section 35. Then in Step S205, the encryption section 36 encrypts the content key KcoA by a predetermined method such as DES by using the delivery key Kd supplied by the EMD service center 1.

In Step S206, the secure container preparation section 38 of the content provider 2 computes a hash value by the application of a hash function to the content A (encrypted with the content key KcoA), content key KcoA (encrypted with the delivery key Kd), and UCP A and UCP B (Figure 12) for content A stored in the policy storage section 37, and encrypts the hash value with its own secret key Ksesc, to generates the signature shown in figure 17.

In Step S207, the secure container preparation section 38 of the content provider 2-1 prepares the content provider secure container, shown in figure 17, which contains content A (encrypted with the content key KcoA), the content key KcoA (encrypted with the delivery key Kd), UCP A and UCP B (Figure 12), and the signature generated in Step S206.

In Step S208, the mutual authentication section 39 of the content provider 2-1 performs mutual authentication with the mutual authentication section 45 of the service provider 3-1. The process of this mutual authentication is similar to that described with reference to Figures 41 to 43 and thus description thereof is omitted. In Step S209, the secure container preparation section 38 of the content provider 2-1 sends the content provider secure container prepared in Step S207 to the service provider 3-1 by attaching the authentication certificate (Figure 18) issued in advance by the certification agency.

When the content provider secure container is supplied to the service provider 3-1 as described above, the process of Step S12 finishes and Step S13 in Figure 39 begins.

(6-3) Transmission of content from service provider to receiver

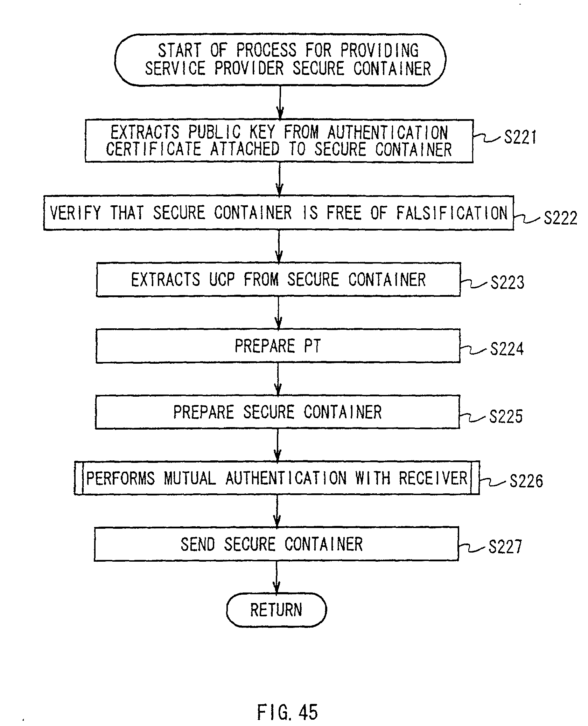

In Step S13, the service provider secure container is supplied from the service provider 3 to the user home network 5 (receiver 51). Details of the process is shown in the flow chart of Figure 45. In Step S221, the pricing section 42 of the service provider 3-1 checks the signature contained in the authentication certificate attached to the content provider secure container sent by the content provider 2-1. If the authentication certificate (Figure 18) has not been falsified, the pricing section 42 takes the public key Kpcp of the content provider 2-1 out of the authentication certificate. The verification of the authentication certificate is similar to the process of Step S83 in Figure 43 and thus description thereof is omitted.

In Step S222, the pricing section 42 of the service provider 3-1 decrypts the signature in the content provider secure container sent by the content provider 2-1, by using the public key Kpcp of the content provider 2-1. It checks the content provider secure container for falsification by determining whether the resulting hash value matches the hash value obtained by the application of a hash function to the content A (encrypted with the content key KcoA), content key KcoA (encrypted with the delivery key Kd), and UCPA. If the two hash values do not match (falsification is detected) the process is terminated. In this example, however, it is assumed that there is no falsification of the content provider secure container and Step S223 is performed next.

In Step S223, the pricing section 42 of the service provider 3-1 takes content A (encrypted with the content key KcoA), the content key KcoA (encrypted with the delivery key Kd), and the signature out of the content provider secure container and supplies them to the content server 41, which then stores them. Also, the pricing section 42 takes UCP A and UCP B out of the content provider secure container and supplies it to the secure container preparation section 44.

In Step S224, the pricing section 42 of the service provider 3-1 prepares PT A-1 and PT A-2 (Figure 20), PT B-1 and PT B-2 (Figure 22) based on the extracted UCP A and UCP B and supplies them to the secure container preparation section 44.

In Step S225, the secure container preparation section 44 of the service provider 3-1 prepares the service provider secure container shown in Figure 24 from content A (encrypted with the content key KcoA) read out from the content server 41, the content key KcoA (encrypted with the delivery key Kd), the signature of the content provider 2, UCP A and UCP B, PT A-1, PT A-2, PT B-1, PT B-2 and the signature thereof.

In Step S226, the mutual authentication section 45 of the service provider 3-1 performs mutual authentication with the mutual authentication module 71 of the receiver 51. The process of this mutual authentication is similar to that described with reference to Figures 41 to 43 and thus description thereof is omitted.

In Step S227, the secure container preparation section 44 of the service provider 3-1 sends the service provider secure container prepared in Step S225 to the receiver 51 of the user home network 5 by attaching the authentication certificate (Figure 25) of the service provider 3-1.

When the service provider secure container is supplied to the receiver 51 by the service provider 3-1 as described above, the process of Step S13 finishes and Step S14 in Figure 39 begins.

(6-4) Recording of content by receiver

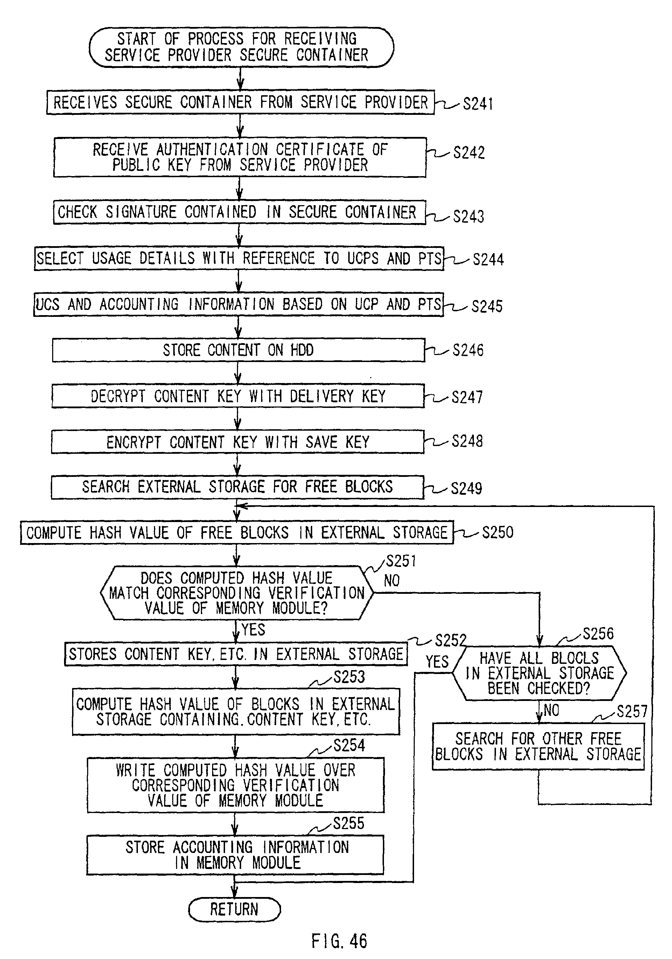

In Step S14, the service provider secure container sent by the service provider 3-1 is received by the receiver 51 of the user home network 5. Details of the process is shown in the flow chart of Figure 46. In Step S241, the mutual authentication module 71 of the receiver 51 performs mutual authentication with the mutual authentication section 45 of the service provider 3-1 via the communications block 61. If the mutual authentication is successful, the communications block 61 receives the service provider secure container (Figure 24) from the service provider 3-1 that participated in the mutual authentication. If the authentication fails, the process is terminated. In this example, however, it is assumed that the mutual authentication has been successful and Step S242 is performed next.

In Step S242, the communications block 61 of the receiver 51 receives an authentication certificate of the secret key from the service provider 3-1 that participated in the mutual authentication.

In Step S243, the encryption/decryption module 74 of the receiver 51 checks the signature contained in the service provider secure container for falsification received in Step S241. If falsification is detected, the process is terminated. In this example, however, it is assumed that there is no falsification and Step S224 is performed next.

In Step S244, UCPs and PTs are selected and usage details and price thereof are selected. More specifically, the UCPs that satisfy the usage conditions and the PTs that satisfy the pricing conditions are selected, based on the reference information 51 (Figure 32) stored in the memory module 73 of the receiver 51. In this example, "Use Point Information" of the reference information 51 indicates that content use point of the content provider 2-1 counts 222 points as shown in Figure 33. According to this reference information 51, out of UCP A and UCP B set in accordance with the content A, UCP A (Figure 12A) which shows "User Conditions 10" of "Usage Conditions 10" contains '200 Points or Higher' is selected. Besides, since "Account-Settling User Information" of the reference information 51 has set the user F as 'Male', "Pricing Conditions 10" of PT A-1 (Figure 20A) are satisfied. As a result, out of PT A-1 and PT A-2 prepared in accordance with UCP A, PT A-1 is selected.

Afterwards, details of UCP A and PT A-1 thus selected are displayed on the display unit which is not shown through the display controller 67. Then, the user F performs an operation to select predetermined "Usage Details" of UCP A on the operator panel which is not shown, with reference to the display (for example, by comparing use types which the user F desires to use and prices thereof) . In this way, ID of the selected usage details of UCP A and ID of PT A-1 are outputted through the input controller 68. Also, in this example, usage details 11 of UCP A (price 11 of PT A-1) has been selected.

In Step S245, the accounting module 72 of SAM 62 of the receiver 51 prepares UCS A (Figure 28) and accounting information A (Figure 30A), based on the entry of "Usage Details 11" of UCP A and PT A-1 selected in Step S244. In this case, the content A is purchased and reproduced at a charge of 2000 yen.

In Step S246, content A (encrypted with the content key KcoA), UCP A, PT A-1, PT A-2, and the signature of the content provider 2 are taken out of the service provider secure container (Figure 24), output to the HDD 52, and stored there. In Step S247, the decryption unit 91 of the encryption/decryption unit 74 decrypts the content key KcoA (encrypted with the delivery key Kd) contained in the service provider secure container, with the delivery key Kd stored in the memory module 73.

In Step S248, the encryption unit 93 of the encryption/decryption unit 74 encrypts the content key KcoA decrypted in Step S247, by means of the save key Ksave stored in the memory module 73.

In Step S249, the data check module 75 of the receiver 51 searches the usage information storage 63A of the external storage 63 for the block BP which has free space and in which the content key KcoA encrypted with the save key Ksave in Step S248 and UCS A prepared in Step S245 are stored in matching pairs. In this example, block BP-1 of the usage information storage 63A (Figure 29) is detected. Incidentally, in the usage information storage 63A of Figure 29, the usage information memory area RP-3 of the block BP-1 is shown to already store the content key KcoA and UCS A. In this example, however, they are not stored at this point and predetermined initial information indicating free space is stored.

In Step S250, the data check module 75 of the receiver 51 obtains a hash value by applying a hash function to the block BP-1 data (all the data stored in the usage information memory areas RP-1 to RP-N) detected in Step S249. Then in Step S251, the data check module 75 compares the hash value obtained in Step S250 with the verification value HP-1 (Figure 31) that is stored in the memory module 73 and that corresponds to block BP-1. If they match, the block BP-1 data is free of falsification and Step S252 is performed next.

In Step S252, SAM 62 of the receiver 51 stores the usage information (the content key KcoA encrypted with the save key Ksave in Step S248 and UCS A prepared in Step S245) in the usage information memory area RP-3 of the block BP-1 in the usage information storage 63A (of the external storage 63).

In Step S253, the data check module 75 of the receiver 51 computes a hash value by applying a hash function to all the data stored in block BP-1 in the usage information storage 63A, including the usage information stored in the usage information memory area RP-3 in Step S252. In Step S254, the data check module 75 overwrites the verification value HP-1 stored in the memory module 73 with the hash value. In Step S255, the accounting module 72 stores, in the memory module 73, the accounting information A prepared in Step S245, and the process finishes.

In Step S251, if the data check module 75 determines that the computed hash value and the verification value HP-1 do not match, the block BP-1 data has been falsified. Consequently, the data check module 75 goes to Step S256, where it determines whether all the blocks BP in the usage information storage 63A of the external storage 63 have been checked. If it determines that not all the blocks BP in the external storage 63 have been checked, it goes to Step S257 and searches for other unchecked blocks with free space, returns to Step S250, where the rest of the process is executed.

In Step S256, if the data check module 75 determines that all the blocks BP in the usage information storage 63A of the external storage 63 have been checked, there is no block BP (usage information memory area RP) that can store usage information. Consequently, the process finishes.

When the service provider secure container is thus received by the receiver 51, the process of Step S14 finishes and Step S15 in Figure 39 begins.

(6-5) Reproduction of content

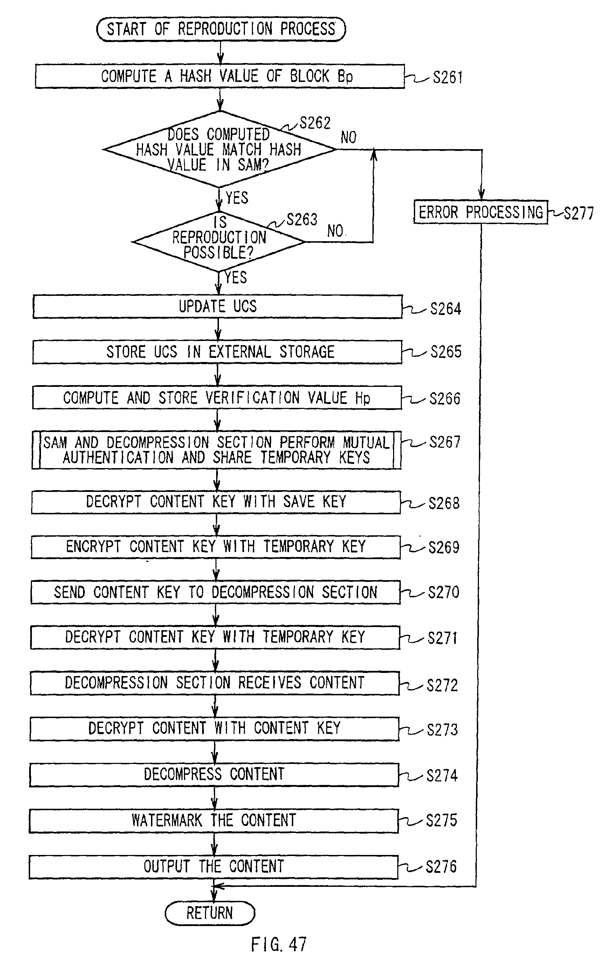

In Step S15, the contents A supplied is used by the receiver 51. In this example, according to the usage details 11 of selected UCP A, the usage type of content A is reproduction. Thus, reproduction of content A will be described next. Details of the reproduction is shown in the flow chart of Figure 47.

In Step S261, the data check module 75 of the receiver 51 computes a hash value by applying a hash function to the block BP-1 data in the usage information storage 63A of the external storage 63, including the content key KcoA (encrypted with the save key Ksave) and UCS A stored in the usage information memory area RP-3 in Step S252 of Figure 46.

In Step S262, the data check module 75 of the receiver 51 compares the hash value computed in Step S261 with the hash value (verification value HP-1) computed in Step S253 of Figure 46 and stored in the memory module 73 in Step S254. If they match, the block BP-1 data is free of falsification and Step S263 is performed next.

In Step S263, it is determined whether contents A is available, based on the information contained in "Parameter" of "Usage Details" for UCS A (Figure 28). For example, as "Type" of "Usage Details" for UCS is set to 'Limited-Time Reproduction,' "Parameter" of the UCS stores the start time and end time of usage. And it is determined whether the present time is within the limits. If the present time is within the limits, the content is judged to be available and if it is not within the limits, the content is judged to be unavailable. On the other hand, if "Type" of "Usage Details" for UCS is set to a use type that allows reproduction (duplication) up to a certain number of times, "Parameter" stores the information about the remaining number of times the content can be used. If the available number of times stored in "Parameter" is not zero (0), the corresponding content is judged to be available. On the other hand, if the available number of times is zero (0), the corresponding content is judged to be unavailable.

Since "Type" of "Usage Details" for UCS A is set to 'Purchase and Reproduce, ' in this example, the content A is purchased and reproduced without limit. Therefore, "Parameter" of "Usage Details" of UCS A contains information that content is available. And thus in this example, in Step S263, contents A is judged to be available. Consequently, Step S264 is performed next.

In Step S264, the accounting module 72 of the receiver 51 updates UCS A. Although UCS A does not contain any information that should be updated, the available number of times stored in "Parameter" is decremented by 1 if "Type" of "Usage Details" is set to a use type that allows reproduction up to a certain number of times.

Next, in Step S265, the SAM 62 of the receiver 51 stores the UCS A updated in Step S264 (not actually updated in this example) in the usage information memory area RP-3 of the block BP-1 in the usage information storage 63A of the external storage 63. In Step S266, the data check module 75 computes a hash value by applying a hash function to the block BP-1 data in the usage information storage 63A of the external storage 63, including the UCS A stored in Step S265 and overwrites the verification value HP-1 stored in the memory module 73 with the hash value.

In Step S267, the mutual authentication module 71 of SAM 62 and mutual authentication module 101 of the decompression section 64 perform mutual authentication and share temporary keys Ktemp. The process of this mutual authentication is similar to that described with reference to Figures 41 to 43 and thus description thereof is omitted. The random numbers R1, R2, and R3, or their combinations used for the mutual authentication are stored as temporary keys Ktemp.

In Step S268, the decryption unit 91 of the encryption/decryption module 74 decrypts the content key KcoA (encrypted with the save key Ksave) stored in block BP-1 (the usage information memory area RP-3) in the usage information storage 63A of the external storage 63 in Step S252 of Figure 46, by using the save key Ksave stored in the memory module 73.

Next, in Step S269, the encryption unit 93 of the encryption/decryption module 74 encrypts the decrypted content key KcoA, by using the temporary key Ktemp. In Step S270, SAM 62 sends the encrypted content key KcoA encrypted with the temporary key Ktemp to the decompression section 64.

In Step S271, the decryption module 102 of the decompression section 64 decrypts the content key KcoA by using the temporary key Ktemp. In Step S272, the decompression section 64 receives the content A (encrypted with the content key Kco) recorded on the HDD 52 through the interface 66. In Step S273, the decryption module 103 of the decompression section 64 decrypts content A (encrypted with the content key Kco) with the content key KcoA.

In Step S274, the decompression module 104 of the decompression section 64 decompresses the decrypted content A by a predetermined method such as ATRAC2. In Step S275, the watermarking module 105 of the decompression section 64 watermarks the decompressed content A for identification of the receiver 51. In Step S276, content A is output to speakers or the like (not shown) and the process finishes.

In Step S277, if it is determined in Step S262 that the hash value computed in Step S261 and the verification value HP-1 stored in the memory module 73 of the receiver 51 do not match, or if the content is judged to be unavailable in Step S263, SAM 62 runs predetermined error processing to display an error message on the display unit (not shown) through the display controller 67 and the process finishes.

In this way, when content A is reproduced (used) on the receiver 51, the process finishes, and so does the entire process in Figure 39.

The description has been directed to a case as an example where the content A is used (purchased) by the receiver 51. The receiver 201 can also use the content A as the receiver 51. However, "Use Point Information" of the reference information 20 of the receiver 201 shows that content use point of the content provider 2-1 counts 23 points as shown in Figure 38, the receiver 201 does not fulfill the condition of "User Conditions 10" of "Usage Conditions 10". Therefore, in this case, UCP A is not selected but UCP B is selected.

Next, as to selecting of PT, in this case, as UCP B has been selected, either PT B-1 or PT B-2 (Figure 22) that correspond to UCP B is selected. "Price 30" on PT B-1 conditions the equipment to be slave equipment, and "Price 40" on PT A-2 conditions the equipment to be master equipment. Therefore, the receiver 201 as the master equipment selects PT B-2. In this way, based on various conditions set for the equipment and its user, UCPs and usage details of UCPs and the range of selection of PTs are determined.

Moreover, the description has been directed to a case as an example where "Usage Conditions" of UCPs and "User Conditions" of "Price" of PTs are made as conditions for sex or age of a user. It is also possible that the place or the date of birth of a user are set for conditions. In this case, indication of those conditions is set to code values 0300h to 7FFFh of service code in Figure 15A.

(6-6) Account settlement

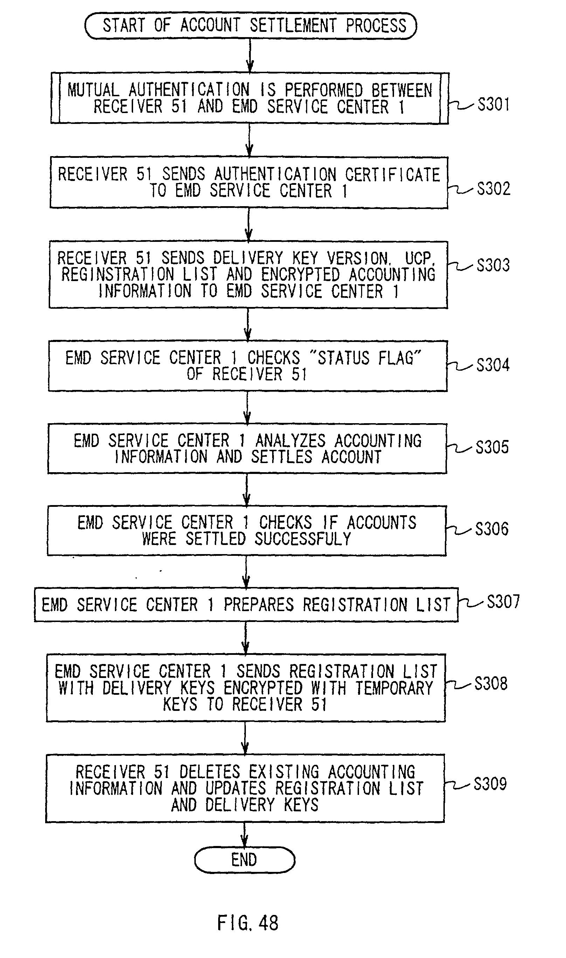

Now the processing procedures for settling accounts with the receiver 51 will be described with reference to the flow chart in Figure 48. This process is started when the amount posted exceeds a preset ceiling (the limit charge for formal or temporary registration), or if the version of delivery keys Kd becomes obsolete, making it impossible, for example, to decrypt the content key Kco (encrypted with the delivery key Kd) in Step S247 of Figure 46 (and thus impossible to receive the service provider secure container).

In Step S301, mutual authentication is performed between the receiver 51 and EMD service center 1. This mutual authentication is similar to that described with reference to Figures 41 to 43 and thus description thereof is omitted.

Next, in Step S302, SAM 62 of the receiver 51 sends an authentication certificate to the user management section 18 of the EMD service center 1. In Step S303, SAM 62 of the receiver 51 encrypts the UCP that corresponds to the account (accounting information) to be settled, by means of the temporary key Ktemp shared with the EMD service center 1 in Step S301, and sends it to the EMD service center 1 together with the version of delivery keys Kd, UCPs and PTs stored on HDD 52, and registration list.

In Step S304, after the information sent by the receiver 51 in Step S303 is received and decrypted, the user management section 18 of the EMD service center 1 checks the receiver 51 for any illegal act that would make "Status Flag" in the registration list to be set to 'Stop.'

In Step S305, the billing section 19 of the EMD service center 1 analyzes the accounting information received in Step S303 to calculate the amounts to be charged to the user (user F, for example). Then, in Step S306, the user management section 18 checks to see if the accounts were settled successfully in Step S305.

Next, in Step S307, the user management section 18 of the EMD service center 1 sets the registration conditions of the receiver 51 based on the results of checks run in Steps S304 and S306, and attaches a signature to it to prepare a registration list of the receiver 51.

For example, if an illegal act is detected in Step S304, the "Status Flag" is set to 'Stop,' which stops all the subsequent processes. In short, the receiver 51 can no longer receive any service from the EMD system. On the other hand, if it is confirmed that the settlement has failed in Step S306, "Status Flag" is set to 'Restricted,' in which case, the receiver 51 can no longer purchase any new content although it can reproduce already purchased content.

Next, the account settlement process goes to Step S308, where the user management section 18 of the EMD service center 1 encrypts the latest version of delivery keys Kd (the latest three months' delivery keys Kd), by using the temporary key Ktemp, and sends the results together with the registration list made in Step s307 to the receiver 51.

In Step S309, SAM 62 of the receiver 51 receives the delivery keys Kd and registration list sent by the EMD service center 1, through the communications block 61, decrypts them, and stores them in the memory module 73. The existing accounting information is deleted and the registration list and delivery keys Kd are updated in the memory module 73.

In the present specification, a system means entire equipment consisting of two or more equipment items.

As for providing medium for use in providing users with the computer programs for running the processes described above, in addition to recording media such as magnetic discs, CD-ROMs, or solid state-memories, communications media such as network or satellites can also be used.

The content providers according to the above embodiment of the present invention store second information containing the usage conditions and usage details by associating with the first information and send the second information to predetermined equipment by associating with the first information. Therefore it is possible to distribute the first information according to the usage conditions.

Furthermore, the service providers according to the embodiment of the present invention prepare third information containing the pricing conditions and the price of the first information, in accordance with the second information that contains the usage conditions and the usage details of the first information, and send the second information and the third information to predetermined equipment by associating with the first information. Therefore it is possible to distribute the first information according to the conditions.

Furthermore, the receivers according to the embodiment of the present invention use the content in accordance with the usage details that correspond to the usage conditions selected according to the reference information and perform accounting for the use of content in accordance with the usage details that correspond to the usage conditions selected according to the reference information. Therefore, it is possible to have a variety of services.

Industrial Applicability

The present invention can be applied to information processing systems that encrypt and distribute information such as music data, moving picture data, still image data, text data, or program data.

Explanation of Reference Numerals

1 ... EMD service center, 2 ... content provider, 3 ... service provider, 5 ... user home network, 11 ... service provider management section, 12 ... content provider management section, 13 ...copyright management section, 14 ... key server, 15 ... log data management section, 16 ... profit-sharing section, 17 ... mutual authentication section, 18 ... user management section, 19 ... billing section, 20 ... cashier section, 21 ... audit section, 31 ... content server, 32 ...watermarking section, 33 ... compression section, 34 ... encryption section, 35 ... random number generator section, 36 ... encryption section, 37 ... policy storage section, 38 ... secure container preparation section, 39 ... mutual authentication section, 41 ... content server, 42 ... pricing section, 43 ... policy storage section, 44 ... secure container preparation section, 45 ... mutual authentication section, 51 ... receiver, 52 ... HDD, 61 ...communication block, 62 ... SAM, 63 ... external storage, 64 ... decompression section, 65 ... communication block, 66 ... interface, 67 ... display controller, 68 ... input controller, 71 ... mutual authentication module, 72 ... accounting module, 73 ... memory module, 74 ... encryption/decryptionmodule, 75 ... data check module, 91 ... decryption unit, 92 ... random number generator unit, 93 ... encryption unit, 101 ... mutual authentication module, 102 ... decryption module, 103 ... decryption module, 104 ... decompression module, 105 ... watermarking module, 201 ... receiver, 202 ... HDD, 211 ... communication block, 212 ... SAM, 213 ... external storage, 214 ... decompression section, 215 ... communication block, 216 ... interface, 217 ... display controller, 218 ... input controller, 221 ... mutual authentication module, 222 ... accounting module, 223... memory module, 224 ... encryption/decryption module, 225 ... data check module, 231 ... decryption unit, 232 ... random number generator unit, 233 ... encryption unit, 241 ... mutual authentication module, 242 ... decryption module, 243 ... decryption module, 244 ... decompression module, 245 ... watermarking module.

**Claims**

1. An information processing apparatus, characterized by comprising:

   holding means for holding encrypted first information;
   storage means for storing second information containing the usage conditions of said first information and usage details for said usage conditions by associating said second information with said first information; and
   sending means for sending said first information held by said holding means and said second information stored by said storage means.

2. An information processing method, characterized by comprising:

   a holding step of holding encrypted first information;
   a storage step of storing second information containing the usage conditions of said first information and usage details for said usage conditions by associating said second information with said first information; and
   a sending step of sending said first information held by said holding step and said second information stored by said storage step.

3. A providing medium that provides a computer-readable program for making an information processing apparatus execute a process, characterized in that said process comprises:

   a holding step of holding encrypted first information;
   a storage step of storing second information containing the usage conditions of said first information and usage details for said usage conditions by associating said second information with said first information; and
   a sending step of sending said first information held by said holding step and said second information stored by said storage step.

4. An information processing apparatus, characterized by comprising:

   reception means for receiving encrypted first information and second information containing the usage conditions of said first information and usage details for said usage conditions, sent from a given provider;

preparation means for preparing third information containing the pricing conditions for said first information and the price that corresponds to said pricing conditions according to said second information received by said reception means; and

sending means for sending encrypted said first information and said second information received by said reception means as well as said third information prepared by said preparation means to appropriate equipment.

5. An information processing method, characterized by comprising:

a reception step of receiving encrypted first information and second information containing the usage conditions of said first information and usage details for said usage conditions, sent from a given provider;

a preparation step of preparing third information containing the pricing conditions for said first information and the price that corresponds to said pricing conditions according to said second information received by said reception step; and

a sending step of sending encrypted said first information and said second information received by said reception step as well as said third information prepared by said preparation step to appropriate equipment.

6. A providing medium that provides a computer-readable program for making an information processing apparatus execute a process, characterized in that said process comprises:

a reception step of receiving encrypted first information and second information containing the usage conditions of said first information and usage details for said usage conditions, sent from a given provider;

a preparation step of preparing third information containing the pricing conditions for said first information and the price that corresponds to said pricing conditions according to said second information received by said reception step; and

a sending step of sending encrypted said first information and said second information received by said reception step as well as said third information prepared by said preparation step to appropriate equipment.

7. An information processing apparatus, characterized by comprising:

storage means for storing appropriate reference information;

reception means for receiving encrypted first information, second information containing the usage conditions of said first information and usage details for said usage conditions, and third information containing the pricing conditions for said first information and the price that corresponds to said pricing conditions, sent from a given provider;

usage condition selection means for selecting said usage conditions of said second information received by said reception means, corresponding to said reference information stored in said storage means;

pricing condition selection means for selecting said pricing conditions of said third information received by said reception means, corresponding to said reference information stored in said storage means;

usage means for decrypting and using encrypted said first information according to said usage details corresponding to said usage conditions selected by said usage condition selection means; and

execution means for charging for the usage by the usage means according to said price that corresponds to said pricing conditions selected by said pricing condition selection means.

8. An information processing method, characterized by comprising:

a storage step of storing appropriate reference information;

a reception step of receiving encrypted first information, second information containing the usage conditions of said first information and usage details for said usage conditions, and third information containing the pricing conditions for said first information and the price that corresponds to said pricing conditions, sent from a given provider;

a usage condition selection step of selecting said usage conditions of said second information received by said reception step, corresponding to said reference information stored in said storage step;

a pricing condition selection step of selecting said pricing conditions of said third information received by said reception step, corresponding to said reference information stored in said storage step;

a usage step of decrypting and using encrypted said first information according to said usage details for said usage conditions selected by said usage condition selection step; and an execution step of charging for the usage by the usage step according to said price that corresponds to said pricing conditions selected by said pricing condition selection means.

9. A providing medium that provides a computer-readable program for making an information processing apparatus execute a process, characterized in that said process comprises:

a storage step of storing appropriate reference information;

a reception step of receiving encrypted first information, second information containing the usage conditions of said first information and usage details for said usage conditions, and third information containing the pricing conditions for said first information and the price that corresponds to said pricing conditions, sent from a given provider;

a usage condition selection step of selecting said usage conditions of said second information received by said reception step, corresponding to said reference information stored in said storage step;

a pricing condition selection step of selecting said pricing conditions of said third information received by said reception step, corresponding to said reference information stored in said storage step;

a usage step of decrypting and using encrypted said first information according to said usage details for said usage conditions selected by said usage condition selection step; and an execution step of charging for the usage by the usage step according to said price that corresponds to said pricing conditions selected by said pricing condition selection means.

FIG. 1

EP 1 120 726 A1

FIG. 2

FIG. 3

DELIVERY KEYS POSSESSED BY CONTENT PROVIDER

DELIVERY KEY USED →

| DELIVRY KEY | VERSION | VALIDITY PERIOD | |
|---|---|---|---|
| | | START | END |
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |

SEND DELIVERY KEYS

DELIVERY KEYS POSSESSED BY EMD SERVICE CENTER

DELIVERY KEY USED →

| DELIVERY KEY | VERSION | VALIDITY PERIOD | |
|---|---|---|---|
| | | START | END |
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |

SEND DELIVERY KEYS

DELIVERY KEYS POSSESSED BY RECEIVER

DELIVERY KEY USED →

| DELIVRY KEY | VERSION | VALIDITY PERIOD | |
|---|---|---|---|
| | | START | END |
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |

FIG. 4

EP 1 120 726 A1

DELIVERY KEYS POSSESSED BY CONTENT PROVIDER

| DELIVERY KEY | VERSION | VALIDITY PERIOD | |
|---|---|---|---|
| | | START | END |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |

DELIVERY KEY USED →

DELIVERY KEYS POSSESSED BY EMD SERVICE CENTER

| DELIVERY KEY | VERSION | VALIDITY PERIOD | |
|---|---|---|---|
| | | START | END |
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |

DELIVERY KEY USED →

SEND DELIVERY KEYS

SEND DELIVERY KEYS

DELIVERY KEYS POSSESSED BY RECEIVER

| DELIVERY KEY | VERSION | VALIDITY PERIOD | |
|---|---|---|---|
| | | START | END |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |

DELIVERY KEY USED →

FIG. 5

DELIVERY KEYS POSSESSED BY CONTENT PROVIDER

DELIVERY KEY USED →

| DELIVERY KEY | VERSION | VALIDITY PERIOD | |
| | | START | END |
| --- | --- | --- | --- |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |
| hhhhhhhh | 8 | 1998/8/1 | 1998/8/31 |

DELIVERY KEYS POSSESSED BY EMD SERVICE CENTER

DELIVERY KEY USED →

| DELIVERY KEY | VERSION | VALIDITY PERIOD | |
| | | START | END |
| --- | --- | --- | --- |
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |
| hhhhhhhh | 8 | 1998/8/1 | 1998/8/31 |

DELIVERY KEY USED →

SEND DELIVERY KEYS

SEND DELIVERY KEYS

DELIVERY KEYS POSSESSED BY RECEIVER

DELIVERY KEY USED →

| DELIVERY KEY | VERSION | VALIDITY PERIOD | |
| | | START | END |
| --- | --- | --- | --- |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |

FIG. 6

EP 1 120 726 A1

DELIVERY KEYS POSSESSED BY CONTENT PROVIDER

| DELIVERY KEY | VERSION | VALIDITY PERIOD START | END |
|---|---|---|---|
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |
| hhhhhhhh | 8 | 1998/8/1 | 1998/8/31 |
| iiiiiiii | 9 | 1998/9/1 | 1998/9/30 |

DELIVERY KEY USED

SEND DELIVERY KEYS

DELIVERY KEYS POSSESSED BY EMD SERVICE CENTER

| DELIVERY KEY | VERSION | VALIDITY PERIOD START | END |
|---|---|---|---|
| aaaaaaaa | 1 | 1998/1/1 | 1998/1/31 |
| bbbbbbbb | 2 | 1998/2/1 | 1998/2/28 |
| cccccccc | 3 | 1998/3/1 | 1998/3/31 |
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |
| gggggggg | 7 | 1998/7/1 | 1998/7/31 |
| hhhhhhhh | 8 | 1998/8/1 | 1998/8/31 |
| iiiiiiii | 9 | 1998/9/1 | 1998/9/30 |

DELIVERY KEY USED

SEND DELIVERY KEYS

DELIVERY KEYS POSSESSED BY RECEIVER

| DELIVERY KEY | VERSION | VALIDITY PERIOD START | END |
|---|---|---|---|
| dddddddd | 4 | 1998/4/1 | 1998/4/30 |
| eeeeeeee | 5 | 1998/5/1 | 1998/5/31 |
| ffffffff | 6 | 1998/6/1 | 1998/6/30 |

DELIVERY KEY USED

FIG. 7

EP 1 120 726 A1

| DELIVERY KEYS | VERSION | VALIDITY PERIOD | |
|---|---|---|---|
| | | START | END |
| aaaaaaaa | 1 | 1998/1/1 | 1998/1/31 |

TEMPORARY DELIVERY KEYS Kd

FIG. 8

| SAM ID | ID OF SAM62 | ID OF SAM212 |
|---|---|---|
| EQUIPMENT NUMBER | EQUIPMENT NUMBER (100) OF RECEIVERS 51 | EQUIPMENT NUMBER (100) OF RECEIVERS 201 |
| SETTLEMENT ID | SETTLEMENT NUMBER OF USER F | SETTLEMENT NUMBER OF USER A |
| ACCOUNT-SETTLING USER INFORMATION | NAME | NAME OF USER F | NAME OF USER A |
| | ADDRESS | ADDRESS OF USER F | ADDRESS OF USER A |
| | PHONE NUMBER | PHONE NUMBER OF USER F | PHONE NUMBER OF USER A |
| | SETTLEMENT INSTITUTION INFORMATION | SETTLEMENT INSTITUTION INFORMATION OF USER F | SETTLEMENT INSTITUTION INFORMATION OF USER A |
| | DATE OF BIRTH | DATE OF BIRTH OF USER F | DATE OF BIRTH OF USER A |
| | AGE | AGE OF USER F | AGE OF USER A |
| | SEX | SEX OF USER F | SEX OF USER A (FEMALE) |
| | USER ID | USER ID OF USER F | USER ID OF USER A |
| | PASSWORD | PASSWORD OF USER F | PASSWORD OF USER A |
| SUBORDINATE USER INFORMATION | NAME | | |
| | ADDRESS | | |
| | PHONE NUMBER | | |
| | DATE OF BIRTH | | |
| | SEX | | |
| | USER ID | | |
| | PASSWORD | | |

| USE POINT INFORMATION | USE POINT INFORMATION OF RECEIVERS 51 | USE POINT INFORMATION OF RECEIVERS 201 |
|---|---|---|

SYSTEM REGISTRATION INFORMATION

FIG. 9

35

A

| USER | PROVIDER | USE POINT |
|------|----------|-----------|
| ACCOUNT-<br>SETTLING<br>USER | CONTENT PROVIDER2-1<br>CONTENT PROVIDER2-2<br>SERVICE PROVIDER3-1<br>SERVICE PROVIDER3-2 | 222POINTS<br>123POINTS<br>345POINTS<br>0POINT |

USE POINT INFORMATION

B

| USER | PROVIDER | USE POINT |
|------|----------|-----------|
| ACCOUNT-<br>SETTLING<br>USER | CONTENT PROVIDER2-1<br>CONTENT PROVIDER2-2<br>SERVICE PROVIDER3-1<br>SERVICE PROVIDER3-2 | 23POINTS<br>22POINTS<br>40POINTS<br>5POINTS |

USE POINT INFORMATION

FIG. 10

CONTENT PROVIDER 2-1

FIG. 11

**A** (ucpA)

| CONTENT ID | ID OF CONTENT A | |
|---|---|---|
| CONTENT PROVIDER ID | ID OF CONTENT PROVIDER 2-1 | |
| UCP ID | ID OF ucpA | |
| ucp VALIDITY | VALIDITY PERIOD OF ucpA | |
| USAGE CONDITIONS 10 | USER CONDITIONS 10 | 200 POINTS OR HIGHER |
| | EQUIPMENT CONDITIONS 10 | NO CONTIDION |
| USAGE DETAILS 11 | ID 11 | ID OF USAGE DETAILS 11 |
| | TYPE 11 | PURCHASE AND REPRODUCE |
| | PARAMETER 11 | × × × × |
| | CONTROL TRANSFER PERMISSION INFORMATION 11 | PERMITTED |
| USAGE DETAILS 12 | ID 12 | ID OF USAGE DETAILS 12 |
| | TYPE 12 | FIRST-GENERATION DUPLICATE |
| | PARAMETER 12 | × × × × |
| | CONTROL TRANSFER PERMISSION INFORMATION 12 | NOT PERMITTED |
| USAGE DETAILS 13 | ID 13 | ID OF USAGE DETAILS 13 |
| | TYPE 13 | LIMITED-TIME REPRODUCTION |
| | PARAMETER 13 | × × × × |
| | CONTROL TRANSFER PERMISSION INFORMATION 13 | NOT PERMITTED |
| USAGE DETAILS 14 | ID 14 | ID OF USAGE DETAILS 14 |
| | TYPE 14 | Pay Per Copy 5 |
| | PARAMETER 14 | DUPLICATES FIVE TIMES |
| | CONTROL TRANSFER PERMISSION INFORMATION 14 | NOT PERMITTED |

**B** (ucpB)

| CONTENT ID | ID OF CONTENT A | |
|---|---|---|
| CONTENT PROVIDER ID | ID OF CONTENT PROVIDER 2-1 | |
| UCP ID | ID OF ucpB | |
| UCP VALIDITY PERIOD | VALIDITY PERIOD OF ucpB | |
| USAGE DETAILS 20 | USER CONDITIONS 20 | 200 POINTS OF LOWER |
| | EQUIPMENT CONDITIONS 20 | NO CONDITION |
| USAGE DETAILS 21 | ID 21 | ID OF USAGE DETAILS 21 |
| | TYPE 21 | Pay Per Play 4 |
| | PARAMETER 21 | REPRODUCTION FOUR TIMES |
| | CONTROL TRANSFER PERMISSION INFORMATION 21 | NOT PERMITTED |
| USAGE DETAILS 22 | ID 22 | ID OF USAGE DETAILS 22 |
| | TYPE 22 | Pay Per Copy 2 |
| | PARAMETER 22 | DUPLICATES TWO TIMES |
| | CONTROL TRANSFER PERMISSION INFORMATION 22 | NOT PERMITTED |

FIG. 12

FIG. 13

A

SOURCE EQUIPMENT OF CONTROL TRANSFER
CONTENT

CONTROL TRANSFER OF CONTENT

CONTROL TRANSFER OF CONTENT

DESTINATION EQUIPMENT OF CONTROL TRANSFER
CONTENT

THIRD EQUIPMENT
CONTENT

B

SOURCE EQUIPMENT
CONTENT

TRANSFER OF CONTENT

DESTINATION EQUIPMENT
CONTENT

ORIGINAL

FIRST-GENERATION

SECOND-GENERATION

A

ORIGINAL

FIRST-GENERATION

SECOND-GENERATION

B

FIG. 14

EP 1 120 726 A1

A

| SERVICE CODE | INDICATION |
|---|---|
| 0000h | NO CONDITION |
| 0001h TO 00FFh | WITH CONDITIONS FOR EQUIPMENT |
| 0100h TO 01FFh | WITH CONDITIONS FOR SEX |
| 0200h TO 02FFh | WITH CONDITIONS FOR AGE |
| 0300h TO 7FFFh | WITH OTHER CONDITIONS |
| 8000h TO FFFFh | WITH CONDITIONS FOR USE POINT |

B

| CONDITION CODE | INDICATION |
|---|---|
| 00h | NO CONDITION |
| 01h | $=$ |
| 02h | $\neq$ |
| 03h | $<$ (SMALLER) |
| 04h | $>$ (LARGER) |
| 05h | $\leqq$ (EQUAL OR SAMLLER) |
| 06h | $\geqq$ (EQUAL OF LARGER) |
| 07h TO FFh | FREE |

FIG. 15

A

| USER CONDITIONS 10 | SERVICE CODE | VALUE CODE | CONDITION CODE |
|---|---|---|---|
| | 80××h | 0000C8h | 06h |
| EQUIPMENT CONDITIONS 10 | SERVICE CODE | VALUE CODE | CONDITION CODE |
| | 0000h | FFFFFFh | 00h |

USAGE CONDITIONS 10 OF ucPA

B

| USER CONDITIONS 20 | SERVICE CODE | VALUE CODE | CONDITION CODE |
|---|---|---|---|
| | 80××h | 0000C8h | 03h |
| EQUIPMENT CONDITIONS 20 | SERVICE CODE | VALUE CODE | CONDITION CODE |
| | 0000h | FFFFFFh | 00h |

USAGE CONDITIONS 20 OF ucPB

FIG. 16

CONTENT PROVIDER SECURE
CONTAINER

CONTENT KEY KcoA

CONTENT A

DELIVERY KEY Kd

CONTENT KEY KcoA

ucpA, ucpB

SECRET KEY Kscp OF
CONTENT PROVIDER 2

SIGNATURE

HASH FUNCTION

CONTENT KEY KcoA

CONTENT A

CONTENT KEY Kd

CONTENT KcoA

UCPA, ucpB

FIG. 17

AUTHENTICATION CERTIFICATE
OF CONTENT PROVIDER 2-1

VERSION NUMBER OF AUTHENTICATION
CERTIFICATE

SERIAL NUMBER OF AUTHENTICATION
CERITIFICATE ASSIGNED BY
CERTIFICATION AGENCY

ALGORITHM AND PARAMETERS USED
FOR SIGNATURE

NAME OF CERTIFICATION AGENCY

VALIDITY PERIOD OF AUTHENTICATION
CERTIFICATE

NAME(ID) OF CONTENT PROVIDER 2-1

PUBLIC KEY Kpcp OF CONTENT
PROVIDER 2-1

SECRET KEY Ksca OF CERTIFICATION
AGENCY

SIGNATURE

HASH FUNCTION

VERSION NUMBER OF
AUTHENTICATION CERTIFICATE

SERIAL NUMBER OF AUTHENTICATION
CERITIFICATE ASSIGNED BY
CERTIFICATION AGENCY

ALGORITHM AND PARAMETERS
USED FOR SIGNATURE

NAME OF CERTIFICATION AGENCY

VALIDITY PERIOD OF AUTHENTICATION
CERTIFICATE

NAME(ID) OF CONTENT PROVIDER 2-1

PUBLIC KEY Kpcp OF CONTENT
PROVIDER 2-1

FIG. 18

41 — CONTENT SERVER

42 — PRICING SECTION

43 — POLICY STORAGE SECTION

45 — MUTUAL AUTHENTICATION SECTION

44 — SECURE CONTAINER PREPARATION SECTION

SERVICE PROVIDER 3-1

FIG. 19

A

| CONTENT ID | ID OF CONTENT A | |
|---|---|---|
| CONTENT PROVIDER ID | ID OF CONTENT PROVIDER 2-1 | |
| UCP ID | ID OF ucp A | |
| SERVICE PROVIDER ID | ID OF SERVICE PROVIDER 3-1 | |
| PT ID | ID OF ptA-1 | |
| PT VALIDITY PERIOD | VALIDITY PERIOD OF ptA-1 | |
| PRICING CONDITIONS 10 | USER CONDITIONS 10 | MALE |
| | EQUIPMENT CONDITIONS 10 | NO CONDITIONS |
| PRICE 11 | 2000YEN | |
| PRICE 12 | 600YEN | |
| PRICE 13 | 100YEN | |
| PRICE 14 | 300YEN | |

ptA-1

B

| CONTENT ID | ID OF CONTENT A | |
|---|---|---|
| CONTENT PROVIDER ID | ID OF CONTENT PROVIDER 2-1 | |
| UCP ID | ID OF ucp A | |
| SERVICE PROVIDER ID | ID OF SERVICE PROVIDER 3-1 | |
| PT ID | ID OF ptA-2 | |
| PT VALIDITY PERIOD | VALIDITY PERIOD OF ptA-2 | |
| PRICING CONDITIONS 20 | USER CONDITIONS 20 | FEMALE |
| | EQUIPMENT CONDITIONS 20 | NO CONDITIONS |
| PRICE 21 | 1000YEN | |
| PRICE 22 | 300YEN | |
| PRICE 23 | 50YEN | |
| PRICE 24 | 150YEN | |

ptA-2

FIG. 20

A

| USER CONDITIONS 10 | SERVICE CODE | VALUE CODE | CONDITION CODE |
|---|---|---|---|
| | 01 × ×h | 000000h | 01h |
| EQUIPMENT CONDITIONS 10 | SERVICE CODE | VALUE CODE | CONDITION CODE |
| | 0000h | FFFFFFh | 00h |

USAGE CONDITIONS 10 OF PTA-1

B

| USER CONDITIONS 20 | SERVICE CODE | VALUE CODE | CONDITION CODE |
|---|---|---|---|
| | 01 × ×h | 000001h | 01h |
| EQUIPMENT CONDITIONS 20 | SERVICE CODE | VALUE CODE | CONDITION CODE |
| | 0000h | FFFFFFh | 00h |

USAGE CONDITIONS 20 OF PTA-2

FIG. 21

**A** (ptB-1)

| CONTENT ID | ID OF CONTENT A | |
|---|---|---|
| CONTENT PROVIDER ID | ID OF CONTENT PROVIDER 2-1 | |
| UCP ID | ID OF ucp B | |
| SERVICE PROVIDER ID | ID OF SERVICE PROVIDER 3-1 | |
| PT ID | ID OF ptB-1 | |
| PT VALIDITY PERIOD | VALIDITY PERIOD OF ptB-1 | |
| PRICING CONDITIONS 30 | USER CONDITIONS 30 | NO CONDITIONS |
| | EQUIPMENT CONDITIONS 30 | SLAVE EQUIPMENT |
| PRICE 31 | 100YEN | |
| PRICE 32 | 300YEN | |

**B** (ptB-2)

| CONTENT ID | ID OF CONTENT A | |
|---|---|---|
| CONTENT PROVIDER ID | ID OF CONTENT PROVIDER 2-1 | |
| UCP ID | ID OF ucpB | |
| SERVICE PROVIDER ID | ID OF SERVICE PROVIDER 3-1 | |
| PT ID | ID OF ptB-2 | |
| PT VALIDITY PERIOD | VALIDITY PERIOD OF ptB-2 | |
| PRICING CONDITIONS 40 | USER CONDITIONS 40 | NO CONDITIONS |
| | EQUIPMENT CONDITIONS 40 | MASTER EQUIPMENT |
| PRICE 41 | 50YEN | |
| PRICE 42 | 150YEN | |

FIG. 22

48

A

| USER CONDITIONS 30 | SERVICE CODE | VALUE CODE | CONDITION CODE |
|---|---|---|---|
| | 0000h | FFFFFFh | 00h |
| EQUIPMENT CONDITIONS 30 | SERVICE CODE | VALUE CODE | CONDITION CODE |
| | 00××h | 000064h | 03h |

USAGE CONDITIONS 30 OF PTB-1

B

| USER CONDITIONS 40 | SERVICE CODE | VALUE CODE | CONDITION CODE |
|---|---|---|---|
| | 0000h | FFFFFFh | 00h |
| EQUIPMENT CONDITIONS 40 | SERVICE CODE | VALUE CODE | CONDITION CODE |
| | 00××h | 000064h | 06h |

USAGE CONDITIONS 40 OF PTB-2

FIG. 23

SERVICE PROVIDER SECURE CONTAINER

| CONTENT KEY KcoA |
| CONTENT A |

| DELIVERY KEY Kd |
| CONTENT KEY KcoA |

| ucpA, B |

| SIGNATURE OF CONTENT PROVIDER 2 |

| pTA-1, A-2, B-1, B-2 |

SECRET KEY Kssp OF SERVICE PROVIDER B-1
SIGNATURE

HASH FUNCTION

| CONTENT KEY KcoA |
| CONTENT |

| DELIVERY KEY Kd |
| CONTENT KEY Kco |

| ucpA, B |

| SIGNATURE OF CONTENT PROVIDER 2 |

| pTA-1, A-2, B-1, B-2 |

FIG. 24

AUTHENTICATION CERTIFICATE OF SERVICE PROVIDER 3-1

VERSION NUMBER OF AUTHENTICATION CERTIFICATE

SERIAL NUMBER OF AUTHENTICATION CERTIFICATE ASSIGNED BY CERTIFICATION AGENCY

ALGORITHM AND PARAMETERS USED FOR SIGNATURE

NAME OF CERTIFICATION AGENCY

VALIDITY PERIOD OF AUTHENTICATION CERTIFICATE

NAME(ID) OF SERVICE PROVIDER 3-1

PUBLIC KEY Kpsp OF SERVICE PROVIDER 3-1

SECRET KEY Ksca OF CERTIFICATION AGENCY

SIGNATURE

HASH FUNCTION

VERSION NUMBER OF AUTHENTICATION CERTIFICATE

SERIAL NUMBER OF AUTHENTICATION CERTIFICATE ASSIGNED BY CERTIFICATION AGENCY

ALGORITHM AND PARAMETERS USED FOR SIGNATURE

NAME OF CERTIFICATION AGENCY

VALIDITY PERIOD OF AUTHENTICATION CERTIFICATE

NAME(ID) OF SERVICE PROVIDER 3-1

PUBLIC KEY Kpsp OF SERVICE PROVIDER 3-1

FIG. 25

FIG. 26

EP 1 120 726 A1

AUTHENTICATION CERTIFICATE OF SAM 62

VERSION NUMBER OF
AUTHENTICATION CERTIFICATE

SERIAL NUMBER OF AUTHENTICATION
CERTIFICATE ASSIGNED BY
CERTIFICATION AGENCY

ALGORITHM AND PARAMETERS USED
FOR SIGNATURE

NAME OF CERTIFICATION AGENCY

VALIDITY PERIOD OF AUTHENTICATION
CERTIFICATE

NAME(ID) OF SAM 62

PUBLIC KEY Kpu OF SAM 62

SECRET KEY Ksca OF CERTIFICATION AGENCY

SIGNATURE

HASH FUNCTION

VERSION NUMBER OF
AUTHENTICATION CERTIFICATE

SERIAL NUMBER OF AUTHENTICATION
CERTIFICATE ASSIGNED BY
CERTIFICATION AGENCY

ALGORITHM AND PARAMETERS USED
FOR SIGNATURE

NAME OF CERTIFICATION AGENCY

VALIDITY PERIOD OF AUTHENTICATION
CERTIFICATE

NAME(ID) OF SAM 62

PUBLIC KEY Kpu OF SAM 62

PARAMETER INDICATING WHETHER GIVEN
SAM IS SUBORDINATE TO OTHER SAM

FIG. 27

| CONTENT ID | | ID OF CONTENT A |
|---|---|---|
| CONTENT PROVIDER ID | | ID OF CONTENT PROVIDER 2-1 |
| UCP ID | | ID OF ucpA |
| UCP VALIDITY PERIOD | | VALIDITY PERIOD OF ucpA |
| SERVICE PROVIDER ID | | ID OF SERVICE PROVIDER 3-1 |
| PT ID | | ID OF ptA-1 |
| PT VALIDITY PERIOD | | VALIDITY PERIOD OF ptA-1 |
| UCS ID | | ID OF ucsA |
| SAM ID | | ID OF SAM62 |
| USER ID | | ID OF USER F |
| USAGE DETAILS | ID | ID OF USAGE DETAILS 11 |
| | TYPE | PURCHASE AND REPRODUCE |
| | PARAMETER | × × × |
| | CONTROL TRANSFER STATUS | SOURCE: ID OF SAM62、 DESTINATION: ID OF SAM62 |
| USAGE HISTORY | | × × × |

ucsA

FIG. 28

BLOCK Bp-1 { 
USAGE INFORMATION MEMORY AREA Rp-1
USAGE INFORMATION MEMORY AREA Rp-2
USAGE INFORMATION MEMORY AREA Rp-3

USAGE INFORMATION MEMORY AREA Rp-N

BLOCK Bp-M {
USAGE INFORMATION MEMORY AREA Rp-1
USAGE INFORMATION MEMORY AREA Rp-2

USAGE INFORMATION MEMORY AREA Rp-N

USAGE INFORMATION STORAGE 63A

FIG. 29

| CONTENT ID | | ID OF CONTENT A |
|---|---|---|
| CONTENT PROVIDER ID | | ID OF CONTENT PROVIDER 2-1 |
| UCP ID | | ID OF ucpA |
| UCP VALIDITY PERIOD | | VALIDITY PERIOD OF ucpA |
| SERVICE PROVIDER ID | | ID OF SERVICE PROVIDER 3-1 |
| PT ID | | ID OF ptA-1 |
| PT VALIDITY PERIOD | | VALIDITY PERIOD OF ptA-1 |
| UCS ID | | ID OF ucsA |
| SAM ID | | ID OF SAM62 |
| USER ID | | ID OF USER F |
| USAGE DETAILS | ID | ID OF USAGE DETAILS 11 |
| | TYPE | PURCHASE AND REPRODUCE |
| | PARAMETER | × × × |
| | CONTROL TRANSFER STATUS | SOURCE: ID OF SAM62, DESTINATION: ID OF SAM62 |
| ACCOUNTING HISTORY | | × × × |

ACCOUNTING INFORMATION A

FIG. 30

| |
|---|
| PUBLIC KEY Kpu OF SAM62 |
| SECRET KEY Ksu OF SAM62 |
| PUBLIC KEY Kpesc OF THE EMD SERVICE CENTER 1 |
| PUBLIC KEY Kpca OF THE CERTIFICATION AGENCY |
| SAVE KEY Ksave |
| THREE MONTHS' DELIVERY KEYS Kd |
| ⋮ |
| AUTHENTICATION CERTIFICATE OF SAM62 |
| REFERENCE INFORMATION 51 |
| ACCOUNTING INFORMATION |
| ⋮ |

| VERIFICATION VALUES Hp-1 | VERIFICATION VALUES Hp-2 | · · · · · · · · · · |
|---|---|---|

· · · · · · · · · · VERIFICATION VALUES Hp-M

FIG. 31

| SAM ID | | | ID OF SAM62 |
|---|---|---|---|
| EQUIPMENT NUMBER | | | EQUIPMENT NUMBER (100) OF RECEIVERS 51 |
| SETTLEMENT ID | | | SETTLEMENT ID OF USER F |
| CHARGE LIMIT | | | FORMAL REGISTRATION |
| ACCOUNT-SETTLING USER INFORMATION | | NAME | NAME OF USER F |
| | | ADDRESS | ADDRESS OF USER F |
| | | PHONE NUMBER | PHONE NUMBER OF USER F |
| | | SETTLEMENT INSTITUTION INFORMATION | SETTLEMENT INSTITUTION INFORMATION OF USER F |
| | | DATE OF BIRTH | DATE OF BIRTH OF USER F |
| | | AGE | AGE OF USER F (21 YEARS) |
| | | SEX | SEX OF USER F (MALE) |
| | | USER ID | USER ID OF USER F |
| | | PASSWORD | PASSWORD OF USER F |
| SUBORDINATE USER INFORMATION | | NAME | |
| | | ADDRESS | |
| | | PHONE NUMBER | |
| | | DATA OF BIRTH | |
| | | SEX | |
| | | USER ID | |
| | | PASSWORD | |

⋮

| USE POINT INFORMATION | USE POINT INFORMATION OF RECEIVERS 51 |
|---|---|

REFERENCE INFORMATION 51

FIG. 32

58

EP 1 120 726 A1

| USER | PROVIDER | USE POINT |
|---|---|---|
| ACCOUNT-<br>SETTLING<br>USER | CONTENT PROVIDER2-1<br>CONTENT PROVIDER2-2<br>SERVICE PROVIDER3-1<br>SERVICE PROVIDER3-2 | 222POINTS<br>123POINTS<br>345POINTS<br>0POINT |

USE POINT INFORMATION OF REFERENCE 51

FIG. 33

59

LIST SECTION

REGISTRATION CONDITIONS OF RECEIVER 51

| SAM ID | USER ID | PURCHA-SING | ACCOUN-TING | EQUIPMENT BILLED | MASTER EQUIPMENT | STATUS FLAG | SIGNATURE TO CONDITIONS | SIGNATURE TO REGISTRATION LIST |
|---|---|---|---|---|---|---|---|---|
| ID OF SAM62 | USER ID OF USER F | YES | YES | ID OF SAM62 | NONE | NO RESTRI-CTION | x x x x | x x x x |

SAM INFORMATION SECTION

| | |
|---|---|
| SAM ID | ID OF SAM62 |
| VALIDITY PERIOD | x x x x |
| VERSION NUMBER | x x x x |
| NUMBER OF EQUIPMENT CONNECTED | 1 |

FIG. 34

60

FIG. 35

| |
|---|
| PUBLIC KEY Kpu OF SAM212 |
| SECRET KEY Ksu OF SAM212 |
| PUBLIC KEY Kpesc OF THE EMD SERVICE CENTER 1 |
| PUBLIC KEY Kpca OF THE CERTIFICATION AGENCY |
| SAVE KEY Ksave |
| THREE MONTHS' DELIVERY KEYS Kd |
| $\vdots$ |
| AUTHENTICATION CERTIFICATE OF SAM212 |
| REFERENCE INFORMATION 201 |
| $\vdots$ |

VERIFICATION VALUES Hp-1 | VERIFICATION VALUES Hp-2 | · · · · · · · · · ·

· · · · · · · · · · | VERIFICATION VALUES Hp-M

FIG. 36

| SAM ID | | ID OF SAM62 |
|---|---|---|
| EQUIPMENT NUMBER | | EQUIPMENT NUMBER (1000) OF RECEIVERS 201 |
| SETTLEMENT ID | | SETTLEMENT ID OF USER A |
| CHARGE LIMIT | | FORMAL REGISTRATION |
| ACCOUNT-SETTLING USER INFORMATION | NAME | NAME OF USER A |
| | ADDRESS | ADDRESS OF USER A |
| | PHONE NUMBER | PHONE NUMBER OF USER A |
| | SETTLEMENT INSTITUTION INFORMATION | SETTLEMENT INSTITUTION INFORMATION OF USER A |
| | DATE OF BIRTH | DATE OF BIRTH OF USER A |
| | AGE | AGE OF USER A |
| | SEX | SEX OF USER A |
| | USER ID | USER ID OF USER A |
| | PASSWORD | PASSWORD OF USER A |
| SUBORDINATE USER INFORMATION | NAME | |
| | ADDRESS | |
| | PHONE NUMBER | |
| | DATA OF BIRTH | |
| | SEX | |
| | USER ID | |
| | PASSWORD | |

⋮

| USE POINT INFORMATION | USE POINT INFORMATION OF RECEIVERS 201 |
|---|---|

REFERENCE INFORMATION 201

FIG. 37

| USER | PROVIDER | USE POINT |
|------|----------|-----------|
| ACCOUNT-SETTLING USER | CONTENT PROVIDER2-1<br>CONTENT PROVIDER2-2<br>SERVICE PROVIDER3-1<br>SERVICE PROVIDER3-2 | 23POINTS<br>22POINTS<br>40POINTS<br>5POINTS |

USE POINT INFORMATION OF
REFERENCE INFORMATION 201

FIG. 38

START OF PROCESS FOR UTILIZATION OF CONTENT A

DELIVERY KEYS Kd ARE SUPPLIED FROM EMD SERVICE CENTER 1 TO CONTENT PROVIDER 2 — S11

CONTENT PROVIDER SECURE CONTAINER IS SUPPLIED FROM CONTENT PROVIDER 2 TO SERVICE PROVIDER 3 — S12

SERVICE PROVIDER SECURE CONTAINER IS TRANSMITTED FROM SERVICE PROVIDER 3 TO RECEIVER 51 — S13

SERVICE PROVIDER SECURE CONTAINER IS RECEIVED BY THE RECEIVER 51 — S14

UTILIZATION OF CONTENT — S15

END

FIG. 39

START OF PROCESS FOR SUPPLYING DELIVERY KEYS Kd

PERFORM MUTUAL AUTHENTICATION WITH CONTENT PROVIDER — S31

CONTENT PROVIDER RECEIVES DELIVERY KEYS Kd — S32

CONTENT PROVIDER STORES DELIVERY KEYS Kd — S33

RETURN

FIG. 40

CONTENT PROVIDER

| | |
|---|---|
| GENERATES 64-BIT RANDOM NUMBER R1 | ~S41 |
| ENCRYPTS R1 WITH KEY Kc | ~S42 |
| SENDS ENCRYPTED R1 TO EMD SERVICE CENTER | ~S43 |

| | |
|---|---|
| DECRYPTS RECEIVED R1H‖R2 | ~S49 |
| CERTIFIES EMD SERVICE CENTER IF HIGH-ORDER 32BITS OF DECRYPTED R1H‖R2 MATCHES THAT OF R1 | ~S50 |
| GENERATES 32-BIT RANDOM NUMBER R3 | ~S51 |
| PRODUCES R2‖R3 | ~S52 |
| ENCRYPTS R2‖R3 WITH KEY Kc | ~S53 |
| SENDS ENCRYPTED R2‖R3 TO EMD SERVICE CENTER | ~S54 |

EMD SERVICE CENTER

| | |
|---|---|
| DECRYPTS RECEIVED R1 | ~S44 |
| GENERATES 32-BIT RANDOM NUMBER R2 | ~S45 |
| REPLACES LOW-ORDER 32BITS OF R1 WITH RANDOM NUMBER R2 TO GENERATE R1H‖R2 | ~S46 |
| ENCRYPTS R1H‖R2 WITH KEY Kc | ~S47 |
| SENDS ENCRYPTED R1H‖R2 TO CONTENT PROVIDER | ~S48 |

| | |
|---|---|
| DECRYPTS RECEIVED R2‖R3 | ~S55 |
| CERTIFIES CONTENT PROVIDER IF HIGH-ORDER 32BITS OF DECRYPTED R2‖R3 MATCHES THAT OF R2 | ~S56 |

FIG. 41

EP 1 120 726 A1

CONTENT PROVIDER

| GENERATES 64-BIT RANDOM NUMBER R1 | ~S61 |

| ENCRYPTS R1 WITH KEY Kc1 | ~S62 |

| SENDS ENCRYPTED R1 TO EMD SERVICE CENTER | ~S63 |

EMD SERVICE CENTER

| DECRYPTS RECEIVED R1 | ~S64 |

| ENCRYPTS R1 WITH KEY Kc2 | ~S65 |

| GENERATES 64-BIT RANDOM NUMBER R2 | ~S66 |

| ENCRYPTS R2 WITH KEY Kc2 | ~S67 |

| DECRYPTS RECEIVED R1 AND R2 | ~S69 |

| SENDS ENCRYPTED R1 AND R2 TO CONTENT PROVIDER | ~S68 |

| CERTIFIES EMD SERVICE CENTER IF DECRYPTED R1 MATCHES ORIGINAL R1 | ~S70 |

| ENCRYPTS R2 WITH KEY Kc1 | ~S71 |

| SENDS ENCRYPTED R2 TO EMD SERVICE CENTER | ~S72 |

| DECRYPTS RECEIVED R2 | ~S73 |

| CERTIFIES CONTENT PROVIDER IF DECRYPTED R2 MATCHES ORIGINAL R2 | ~S74 |

FIG. 42

CONTENT PROVIDER

| | |
|---|---|
| GENERATES 64-BIT RANDOM NUMBER | S81 |
| SENDS R1 AND AUTHENTICATION CERTIFICATE TO EMD SERVICE CENTER | S82 |
| EXTRACT PUBLIC KEY Kpesc IF SIGNATURE TO AUTHENTICATION CERTIFICATE IS VERIFIED | S89 |
| DECRYPTS R1 ‖ R2 WITH PUBLIC KEY Kpesc | S90 |
| DECRYPTS R1 ‖ R2 WITH SECRET KEY Kscp | S91 |
| CERTIFIES EMD SERVICE CENTER IF TWO R1 ‖ R2 MATCH | S92 |
| GENERATES 64-BIT RANDOM NUMBER R3 | S93 |
| PRODUCES R2 ‖ R3 | S94 |
| ENCRYPTS R2 ‖ R3 WITH PUBLIC KEY Kpesc | S95 |
| SENDS ENCRYPTED R2 ‖ R3 TO EMD SERVICE CENTER | S96 |

EMD SERVICE CENTER

| | |
|---|---|
| EXTRACT PUBLIC KEY Kpcp FROM AUTHENTICATION CERTIFICATE IF SIGNATURE TO AUTHENTICATION CERTIFICATE IS VERIFIED | S83 |
| GENERATES 64-BIT RANDOM NUMBER R2 | S84 |
| GENERATES R1 ‖ R2 | S85 |
| ENCRYPTS R1 ‖ R2 WITH SECRET KEY Ksesc | S86 |
| ENCRYPTS R1 ‖ R2 WITH PUBLIC KEY Kpcp | S87 |
| SENDS R1 ‖ R2 ENCRYPTED WITH SECRET KEY Ksesc, R1 ‖ R2 ENCRYPTED WITH PUBLIC KEY Kpcp, AND AUTHENTICATION CERTIFICATE TO CONTENT PROVIDER | S88 |
| DECRYPTS R2 ‖ R3 WITH SECRET KEY Ksesc | S97 |
| CERTIFIES CONTENT PROVIDER IF DECRYPTED R2 MATCHES ORIGINAL R2 | S98 |

FIG. 43

START OF PROCESS FOR PROVIDING
CONTENT PROVIDER SECURE CONTAINER

WATERMARK THE CONTENT — S201

COMPRESS CONTENT — S202

GENERATE RANDOM NUMBER FOR USE AS CONTENT KEY — S203

ENCRYPT CONTENT WITH CONTENT KEY — S204

ENCRYPT CONTENT KEY WITH DELIVERY KEY — S205

GENERATE SIGNATURE — S206

PREPARE SECURE CONTAINER — S207

PERFORM MUTUAL AUTHENTICATION WITH SERVICE PROVIDER — S208

SEND SECURE CONTAINER — S209

RETURN

FIG. 44

```
        ┌─────────────────────────────────┐
        │   START OF PROCESS FOR PROVIDING │
        │  SERVICE PROVIDER SECURE CONTAINER│
        └─────────────────────────────────┘
                        │
                        ▼
        ┌─────────────────────────────────────┐
        │ EXTRACTS PUBLIC KEY FROM AUTHENTICATION│  S221
        │ CERTIFICATE ATTACHED TO SECURE CONTAINER│
        └─────────────────────────────────────┘
                        │
                        ▼
        ┌─────────────────────────────────────────┐
        │ VERIFY THAT SECURE CONTAINER IS FREE OF FALSIFICATION│  S222
        └─────────────────────────────────────────┘
                        │
                        ▼
        ┌─────────────────────────────────┐
        │  EXTRACTS UCP FROM SECURE CONTAINER│  S223
        └─────────────────────────────────┘
                        │
                        ▼
        ┌─────────────────────────────────┐
        │            PREPARE PT            │  S224
        └─────────────────────────────────┘
                        │
                        ▼
        ┌─────────────────────────────────┐
        │      PREPARE SECURE CONTAINER    │  S225
        └─────────────────────────────────┘
                        │
                        ▼
        ┌─────────────────────────────────────┐
        │ PERFORMS MUTUAL AUTHENTICATION WITH RECEIVER│  S226
        └─────────────────────────────────────┘
                        │
                        ▼
        ┌─────────────────────────────────┐
        │        SEND SECURE CONTAINER     │  S227
        └─────────────────────────────────┘
                        │
                        ▼
                  ┌──────────┐
                  │  RETURN  │
                  └──────────┘
```

FIG. 45

START OF PROCESS FOR RECEIVING
SERVICE PROVIDER SECURE CONTAINER

RECEIVES SECURE CONTAINER FROM SERVICE PROVIDER — S241

RECEIVE AUTHENTICATION CERTIFICATE OF
PUBLIC KEY FROM SERVICE PROVIDER — S242

CHECK SIGNATURE CONTAINED IN SECURE CONTAINER — S243

SELECT USAGE DETAILS WITH REFERENCE TO UCPS AND PTS — S244

UCS AND ACCOUNTING INFORMATION BASED ON UCP AND PTS — S245

STORE CONTENT ON HDD — S246

DECRYPT CONTENT KEY WITH DELIVERY KEY — S247

ENCRYPT CONTENT KEY WITH SAVE KEY — S248

SEARCH EXTERNAL STORAGE FOR FREE BLOCKS — S249

COMPUTE HASH VALUE OF FREE BLOCKS IN EXTERNAL STORAGE — S250

S251
DOES COMPUTED HASH VALUE
MATCH CORRESPONDING VERIFICATION     NO
VALUE OF MEMORY MODULE?

↓YES

STORES CONTENT KEY, ETC. IN EXTERNAL STORAGE — S252

YES
S256
HAVE ALL BLOCLS
IN EXTERNAL STORAGE
BEEN CHECKED?

COMPUTE HASH VALUE OF BLOCKS IN EXTERNAL
STORAGE CONTAINING. CONTENT KEY, ETC. — S253

↓NO — S257

SEARCH FOR OTHER FREE
BLOCKS IN EXTERNAL STORAGE

WRITE COMPUTED HASH VALUE OVER
CORRESPONDING VERIFICATION
VALUE OF MEMORY MODULE — S254

STORE ACCOUNTING INFORMATION
IN MEMORY MODULE — S255

RETURN

FIG. 46

START OF REPRODUCTION PROCESS

COMPUTE A HASH VALUE OF BLOCK Bp — S261

DOES COMPUTED HASH VALUE MATCH HASH VALUE IN SAM? — S262

NO → ERROR PROCESSING — S277

YES

IS REPRODUCTION POSSIBLE? — S263

NO →

YES

UPDATE UCS — S264

STORE UCS IN EXTERNAL STORAGE — S265

COMPUTE AND STORE VERIFICATION VALUE Hp — S266

SAM AND DECOMPRESSION SECTION PERFORM MUTUAL AUTHENTICATION AND SHARE TEMPORARY KEYS — S267

DECRYPT CONTENT KEY WITH SAVE KEY — S268

ENCRYPT CONTENT KEY WITH TEMPORARY KEY — S269

SEND CONTENT KEY TO DECOMPRESSION SECTION — S270

DECRYPT CONTENT KEY WITH TEMPORARY KEY — S271

DECOMPRESSION SECTION RECEIVES CONTENT — S272

DECRYPT CONTENT WITH CONTENT KEY — S273

DECOMPRESS CONTENT — S274

WATERMARK THE CONTENT — S275

OUTPUT THE CONTENT — S276

RETURN

FIG. 47

START OF ACCOUNT SETTLEMENT PROCESS

MUTUAL AUTHENTICATION IS PERFORMED BETWEEN RECEIVER 51 AND EMD SERVICE CENTER 1 — S301

RECEIVER 51 SENDS AUTHENTICATION CERTIFICATE TO EMD SERVICE CENTER 1 — S302

RECEIVER 51 SENDS DELIVERY KEY VERSION, UCP, REGINSTRATION LIST AND ENCRYPTED ACCOUNTING INFORMATION TO EMD SERVICE CENTER 1 — S303

EMD SERVICE CENTER 1 CHECKS "STATUS FLAG" OF RECEIVER 51 — S304

EMD SERVICE CENTER 1 ANALYZES ACCOUNTING INFORMATION AND SETTLES ACCOUNT — S305

EMD SERVICE CENTER 1 CHECKS IF ACCOUNTS WERE SETTLED SUCCESSFULY — S306

EMD SERVICE CENTER 1 PREPARES REGISTRATION LIST — S307

EMD SERVICE CENTER 1 SENDS REGISTRATION LIST WITH DELIVERY KEYS ENCRYPTED WITH TEMPORARY KEYS TO RECEIVER 51 — S308

RECEIVER 51 DELETES EXISTING ACCOUNTING INFORMATION AND UPDATES REGISTRATION LIST AND DELIVERY KEYS — S309

END

FIG. 48

## INTERNATIONAL SEARCH REPORT

| | International application No. |
|---|---|
| | PCT/JP00/02289 |

**A. CLASSIFICATION OF SUBJECT MATTER**
Int.Cl⁷ G06F17/60

According to International Patent Classification (IPC) or to both national classification and IPC

**B. FIELDS SEARCHED**

Minimum documentation searched (classification system followed by classification symbols)
Int.Cl⁷ G06F17/60, G06F13/00, G09C1/00, H04L9/08, G06F15/00, H04L9/32

Documentation searched other than minimum documentation to the extent that such documents are included in the fields searched
Jitsuyo Shinan Koho        1926-1996    Jitsuyo Shinan Toroku Koho  1996-2000
Kokai Jitsuyo Shinan Koho  1971-2000    Toroku Jitsuyo Shinan Koho  1994-2000

Electronic data base consulted during the international search (name of data base and, where practicable, search terms used)
JICST Data Base (JOIS)

**C. DOCUMENTS CONSIDERED TO BE RELEVANT**

| Category* | Citation of document, with indication, where appropriate, of the relevant passages | Relevant to claim No. |
|---|---|---|
| X | WO, 96/27155, A2 (InerTrust Technologies Corp.), 6 September, 1996 (06.09.96) &JP, 10-512074, A | 1-9 |
| A | US, 6002771, A (Sun Microsystems, Incorporated), 22 May, 1996 (22.05.96) & JP, 10-055383, A | 1-9 |

☐ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 May, 2000 (24.05.00) | 13 June, 2000 (13.06.00) |

| Name and mailing address of the ISA/ | Authorized officer |
|---|---|
| Japanese Patent Office | |
| Facsimile No. | Telephone No. |

Form PCT/ISA/210 (second sheet) (July 1992)